# EUROPEAN PATENT APPLICATION

(11) **EP 4 425 416 A1**
(43) Date of publication of application: **04.09.2024**
(21) Application number: 22887196.8
(22) Date of filing: 28.10.2022
(51) Int. Cl.: G06Q 50/10, G06Q 30/0241, G06Q 30/0601

(54) **SYSTEM FOR DETERMINING MATTERS NEEDING TO BE DETERMINED WHEN PLAYER PERFORMS ACTION, METHOD, AND PROGRAM**

(30) Priority: 29.10.2021 JP 2021178271
(71) Applicant: Advasa Co., Ltd., Tokyo, 107-0051 (JP)
(72) Inventor: FUJII, Hideki, Tokyo 100-0014 (JP)
(74) Representative: Uexküll & Stolberg
(86) International application number: PCT/JP2022/040478
(87) International publication number: WO 2023/074871

(57) **Abstract**

The present invention provides a system for determining matters needing to be determined when a player performs an action. The system is configured so as to: acquire data and/or information pertaining to a player and pertaining to an action (S801); calculate a first score representative of a characteristic of the player on the basis of the acquired data and/or information pertaining to the player (S802); acquire data pertaining to a field where the action is performed (S803); calculate a second score representative of a characteristic of the field, on the basis of the acquired data pertaining to the field (S804); and determine the matters needing to be determined on the basis of the first score and the second score (S805).

## Description

### TECHNICAL FIELD

The present invention relates to a system, a method, and a program for determining a matter to be determined when a player performs an action. The present invention relates to, in one aspect, a system or the like that determines a matter to be determined when a player places an advertisement or is provided with an advertisement, and in another aspect, a system or the like that determines a matter to be determined when a player sells a product or a service or purchases a product or a service in electronic commerce.

### BACKGROUND ART

In recent years, the number of users of a virtual world, that is, a so-called metaverse has increased, and a technique in a metaverse has also been developed (for example, Patent Document 1).

### PRIOR ART DOCUMENT

### PATENT DOCUMENT

Patent Document 1: JP-A-2009-217387

### SUMMARY OF THE INVENTION

### PROBLEMS TO BE SOLVED BY THE INVENTION

An object of the present invention is to provide a system or the like that determines a matter to be determined when a player performs an action, which can realize an autonomous decentralized system in a metaverse or the like.

### SOLUTIONS TO THE PROBLEMS

The present invention can provide, for example, a system, a method, and a program for determining a matter to be determined when a player performs an action. The present invention provides, for example, the following items.
(Item 1) A system that determines a matter to be determined when a player performs an action, the system including:
   first acquisition means for acquiring data and/or information regarding a player related to an action;
   first calculation means for calculating a first score representing a feature of the player based on the acquired data and/or information regarding the player;
   second acquisition means for acquiring data regarding a field in which the action is performed;
   second calculation means for calculating a second score representing a feature of the field based on the acquired data regarding the field; and
   determination means for determining the matter to be determined based on the first score and the second score.
(Item 2) The system according to the item 1, in which the determination means determines the matter to be determined based on the first score, the second score, and a rule related to the action.
(Item 3) The system according to the item 2, further including change means for changing the rule, in which
   the change means
   receives votes of at least some of stakeholders related to the action with respect to change of the rule, and
   changes the rule based on a result of the votes.
(Item 4) The system according to any one of the items 1 to 3, in which the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.
(Item 5) The system according to any one of the items 1 to 4, in which the second calculation means calculates the second score based on whether the field is a reliable field.
(Item 6) The system according to the item 5, in which the second calculation means calculates the second score based on a degree to which the field is managed in a decentralized manner or a degree to which the field is managed in a centralized manner.
(Item 7) A method of determining a matter to be determined when a player performs an action, the method including:
   acquiring data and/or information regarding a player related to an action;
   calculating a first score representing a feature of the player based on the acquired data and/or information regarding the player;
   acquiring data regarding a field in which the action is performed;
   calculating a second score representing a feature of the field based on the acquired data regarding the field; and
   determining the matter to be determined based on the first score and the second score.
(Item 7A) The method according to the item 7, including characteristics according to one or more of the items.
(Item 8) A program for determining a matter to be determined when a player performs an action, the program being executed in a system including a processor unit and causing the processor unit to execute processes including:
   acquiring data and/or information regarding a player related to an action;
   calculating a first score representing a feature of the player based on the acquired data and/or information regarding the player;
   acquiring data regarding a field in which the action is performed;
   calculating a second score representing a feature of the field based on the acquired data regarding the field; and
   determining the matter to be determined based on the first score and the second score.
(Item 8A) The program according to the item 8, including characteristics according to one or more of the items.
(Item 8B) A computer-readable storage medium storing the program according to the item 8 or the item 8A.
(Item 9) A system that determines a matter to be determined when an advertiser places an advertisement, the system including:
   first acquisition means for acquiring data and/or information regarding an advertiser;
   first calculation means for calculating a first score representing a feature of the advertiser based on the acquired data and/or information regarding the advertiser;
   second acquisition means for acquiring data regarding a field in which an advertisement is placed;
   second calculation means for calculating a second score representing a feature of the field based on the acquired data regarding the field; and
   determination means for determining placement conditions of the advertisement based on the first score and the second score.
(Item 10) The system according to the item 9, in which the determination means determines the placement conditions of the advertisement based on the first score, the second score, and a rule related to the advertisement.
(Item 11) The system according to the item 10, further including change means for changing the rule, in which
   the change means
   receives votes of at least some of stakeholders related to the advertisement with respect to change of the rule, and
   changes the rule based on a result of the votes.
(Item 12) The system according to any one of the items 9 to 11, in which the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.
(Item 13) The system according to any one of the items 9 to 12, in which the second calculation means calculates the second score based on whether the field is a reliable field.
(Item 14) The system according to the item 13, in which the second calculation means calculates the second score based on a degree to which the field is managed in a decentralized manner or a degree to which the field is managed in a centralized manner.
(Item 15) The system according to any one of the items 9 to 14, in which the placement conditions include at least one of a placement location of the advertisement and a cost of the advertisement.
(Item 16) The system according to the item 15, in which the cost of the advertisement includes an amount of an incentive to be provided to an advertisement recipient provided with the advertisement.
(Item 17) The system according to any one of the items 9 to 16, in which the determination means determines the placement conditions of the advertisement according to an association between the first score and the second score.
(Item 18) A method of determining a matter to be determined when an advertiser places an advertisement, the method including:
   acquiring data and/or information regarding an advertiser;
   calculating a first score representing a feature of the advertiser based on the acquired data and/or information regarding the advertiser;
   acquiring data regarding a field in which an advertisement is placed;
   calculating a second score representing a feature of the field based on the acquired data regarding the field; and
   determining placement conditions of the advertisement based on the first score and the second score.
(Item 18A) The method according to the item 18, including characteristics according to one or more of the items.
(Item 19) A program for determining a matter to be determined when an advertiser places an advertisement, the program being executed in a system including a processor unit and causing the processor unit to execute processes including:
   acquiring data and/or information regarding an advertiser;
   calculating a first score representing a feature of the advertiser based on the acquired data and/or information regarding the advertiser;
   acquiring data regarding a field in which an advertisement is placed;
   calculating a second score representing a feature of the field based on the acquired data regarding the field; and
   determining placement conditions of the advertisement based on the first score and the second score.
(Item 19A) The program according to the item 19, including characteristics according to one or more of the items.
(Item 19B) A computer-readable storage medium storing the program according to the item 19 or the item 19A.
(Item 20) A system that determines a matter to be determined when an advertisement recipient is provided with an advertisement, the system including:
   first acquisition means for acquiring data and/or information regarding an advertisement recipient;
   first calculation means for calculating a first score representing a feature of the advertisement recipient based on the acquired data and/or information regarding the advertisement recipient;
   second acquisition means for acquiring data regarding a field in which an advertisement is placed;
   second calculation means for calculating a second score representing a feature of the field based on the acquired data regarding the field; and
   determination means for determining the advertisement to be provided to the advertisement recipient based on the first score and the second score.
(Item 21) The system according to the item 20, in which the determination means determines the advertisement to be provided to the advertisement recipient based on the first score, the second score, and a rule related to the advertisement.
(Item 22) The system according to the item 21, further including change means for changing the rule, in which
   the change means
   receives votes of at least some of stakeholders related to the advertisement with respect to change of the rule, and
   changes the rule based on a result of the votes.
(Item 23) The system according to any one of the items 20 to 22, in which the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.
(Item 24) The system according to any one of the items 20 to 23, in which the second calculation means calculates the second score based on whether the field is a reliable field.
(Item 25) The system according to the item 24, in which the second calculation means calculates the second score based on a degree to which the field is managed in a decentralized manner or a degree to which the field is managed in a centralized manner.
(Item 26) The system according to any one of the items 20 to 25, further including:
   first providing means for providing the determined advertisement to the advertisement recipient;
   detection means for detecting that the advertisement recipient has executed an action designated in the provided advertisement; and
   second providing means for providing an incentive to the advertisement recipient according to the detected action.
(Item 27) The system according to any one of the items 20 to 26, in which the determination means determines the advertisement to be provided to the advertisement recipient according to an association between the first score and the second score.
(Item 28) A method of determining a matter to be determined when an advertisement recipient is provided with an advertisement, the method including:
   acquiring data and/or information regarding an advertisement recipient;
   calculating a first score representing a feature of the advertisement recipient based on the acquired data and/or information regarding the advertisement recipient;
   acquiring data regarding a field in which an advertisement is placed;
   calculating a second score representing a feature of the field based on the acquired data regarding the field; and
   determining the advertisement to be provided to the advertisement recipient based on the first score and the second score.
(Item 28A) The method according to the item 28, including characteristics according to one or more of the items.
(Item 29) A program for determining a matter to be determined when an advertisement recipient is provided with an advertisement, the program being executed in a system including a processor unit and causing the processor unit to execute processes including:
   acquiring data and/or information regarding an advertisement recipient;
   calculating a first score representing a feature of the advertisement recipient based on the acquired data and/or information regarding the advertisement recipient;
   acquiring data regarding a field in which an advertisement is placed;
   calculating a second score representing a feature of the field based on the acquired data regarding the field; and
   determining the advertisement to be provided to the advertisement recipient based on the first score and the second score.
(Item 29A) The program according to the item 29, including characteristics according to one or more of the items.
(Item 29B) A computer-readable storage medium storing the program according to the item 29 or the item 29A.
(Item 30) A system that determines a matter to be determined when an advertiser provides an advertisement and an advertisement recipient is provided with the advertisement, the system including:
   first acquisition means for acquiring data and/or information regarding an advertiser for a plurality of advertisers;
   first calculation means for calculating, for the plurality of advertisers, a first score representing a feature of the advertiser based on the acquired data and/or information regarding the advertiser;
   second acquisition means for acquiring data regarding a field in which an advertisement is placed;
   second calculation means for calculating a second score representing a feature of the field based on the acquired data regarding the field;
   third acquisition means for acquiring data and/or information regarding an advertisement recipient for a plurality of advertisement recipients;
   third calculation means for calculating a third score representing a feature of the advertisement recipient based on the acquired data and/or information regarding the advertisement recipient; and
   determination means for determining a combination of at least one advertiser among the plurality of advertisers and at least one advertisement recipient among the plurality of advertisement recipients based on the first score, the second score, and the third score.
(Item 31) The system according to the item 30, further including providing means for providing an advertisement from the at least one advertiser in the combination to the at least one advertisement recipient in the combination.
(Item 32) The system according to the item 30 or the item 31, in which the determination means determines the combination according to an association between the first score, the second score, and the third score.
(Item 33) A method of determining a matter to be determined when an advertiser provides an advertisement and an advertisement recipient is provided with the advertisement, the method including:
   acquiring data and/or information regarding an advertiser for a plurality of advertisers;
   calculating, for the plurality of advertisers, a first score representing a feature of the advertiser based on the acquired data and/or information regarding the advertiser;
   acquiring data regarding a field in which an advertisement is placed;
   calculating a second score representing a feature of the field based on the acquired data regarding the field;
   acquiring data and/or information regarding an advertisement recipient for a plurality of advertisement recipients;
   calculating a third score representing a feature of the advertisement recipient based on the acquired data and/or information regarding the advertisement recipient; and
   determining a combination of at least one advertiser among the plurality of advertisers and at least one advertisement recipient among the plurality of advertisement recipients based on the first score, the second score, and the third score.
(Item 33A) The method according to the item 33, including characteristics according to one or more of the items.
(Item 34) A program for determining a matter to be determined when an advertiser places an advertisement and an advertisement recipient is provided with the advertisement, the program being executed in a system including a processor unit and causing the processor unit to execute processes including:
   acquiring data and/or information regarding an advertiser for a plurality of advertisers;
   calculating, for the plurality of advertisers, a first score representing a feature of the advertiser based on the acquired data and/or information regarding the advertiser;
   acquiring data regarding a field in which an advertisement is placed;
   calculating a second score representing a feature of the field based on the acquired data regarding the field;
   acquiring data and/or information regarding an advertisement recipient for a plurality of advertisement recipients;
   calculating a third score representing a feature of the advertisement recipient based on the acquired data and/or information regarding the advertisement recipient; and
   determining a combination of at least one advertiser among the plurality of advertisers and at least one advertisement recipient among the plurality of advertisement recipients based on the first score, the second score, and the third score.
(Item 34A) The program according to the item 34, including characteristics according to one or more of the items.
(Item 34B) A computer-readable storage medium storing the program according to the item 34 or the item 34A.
(Item 35) A system that determines a matter to be determined when a seller in electronic commerce sells a product or a service, the system including:
   first acquisition means for acquiring data and/or information regarding a seller;
   first calculation means for calculating a first score representing a feature of the seller based on the acquired data and/or information regarding the seller;
   second acquisition means for acquiring data regarding a field in which electronic commerce is performed;
   second calculation means for calculating a second score representing a feature of the field based on the acquired data regarding the field; and
   determination means for determining an amount of a deposit in the electronic commerce based on the first score and the second score.
(Item 36) The system according to the item 35, in which the determination means determines the amount of the deposit based on the first score, the second score, and a rule related to the electronic commerce.
(Item 37) The system according to the item 36, further including change means for changing the rule, in which
   the change means
   receives votes of at least some of stakeholders related to the electronic commerce with respect to change of the rule, and
   changes the rule based on a result of the votes.
(Item 38) The system according to any one of the items 35 to 37, in which the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.
(Item 39) The system according to any one of the items 35 to 38, in which the second calculation means calculates the second score based on whether the field is a reliable field.
(Item 40) The system according to any one of the items 35 to 39, in which the second calculation means calculates the second score based on a degree to which the field is managed in a decentralized manner or a degree to which the field is managed in a centralized manner.
(Item 41) The system according to the item 35 to 40, in which the determination means determines the amount of the deposit according to an association between the first score and the second score.
(Item 42) The system according to any one of the items 35 to 41, further including:
   fourth acquisition means for acquiring data regarding a product or a service that is a target of the electronic commerce; and
   fourth calculation means for calculating a fourth score representing a feature of the product or the service based on the acquired data regarding the product or the service, in which
   the determination means determines the amount of the deposit in the electronic commerce further based on the fourth score.
(Item 43) A method of determining a matter to be determined when a seller in electronic commerce sells a product or a service, the method including:
   acquiring data and/or information regarding a seller;
   calculating a first score representing a feature of the seller based on the acquired data and/or information regarding the seller;
   acquiring data regarding a field in which electronic commerce is performed;
   calculating a second score representing a feature of the field based on the acquired data regarding the field; and
   determining an amount of a deposit in the electronic commerce based on the first score and the second score.
(Item 43A) The method according to the item 43, including characteristics according to one or more of the items.
(Item 44) A program for determining a matter to be determined when a seller in electronic commerce sells a product or a service, the program being executed in a system including a processor unit and causing the processor unit to execute processes including:
   acquiring data and/or information regarding a seller;
   calculating a first score representing a feature of the seller based on the acquired data and/or information regarding the seller;
   acquiring data regarding a field in which electronic commerce is performed;
   calculating a second score representing a feature of the field based on the acquired data regarding the field; and
   determining an amount of a deposit in the electronic commerce based on the first score and the second score.
(Item 44A) The program according to the item 44, including characteristics according to one or more of the items.
(Item 44B) A computer-readable storage medium storing the program according to the item 44 or the item 44A.
(Item 45) A system that determines a matter to be determined when a purchaser in electronic commerce purchases a product or a service, the system including:
   first acquisition means for acquiring data and/or information regarding a purchaser;
   first calculation means for calculating a first score representing a feature of the purchaser based on the acquired data and/or information regarding the purchaser;
   second acquisition means for acquiring data regarding a field in which electronic commerce is performed;
   second calculation means for calculating a second score representing a feature of the field based on the acquired data regarding the field; and
   determination means for determining an amount of a deposit in the electronic commerce based on the first score and the second score.
(Item 46) The system according to the item 45, in which the determination means determines the amount of the deposit based on the first score, the second score, and a rule related to the electronic commerce.
(Item 47) The system according to the item 46, further including change means for changing the rule, in which
   the change means
   receives votes of at least some of stakeholders related to the electronic commerce with respect to change of the rule, and
   changes the rule based on a result of the votes.
(Item 48) The system according to any one of the items 45 to 47, in which the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.
(Item 49) The system according to any one of the items 45 to 48, in which the second calculation means calculates the second score based on whether the field is a reliable field.
(Item 50) The system according to any one of the items 45 to 49, in which the second calculation means calculates the second score based on a degree to which the field is managed in a decentralized manner or a degree to which the field is managed in a centralized manner.
(Item 51) The system according to the item 45 to 50, in which the determination means determines the amount of the deposit according to an association between the first score and the second score.
(Item 52) A method of determining a matter to be determined when a purchaser in electronic commerce purchases a product or a service, the method including:
   acquiring data and/or information regarding a purchaser;
   calculating a first score representing a feature of the purchaser based on the acquired data and/or information regarding the purchaser;
   acquiring data regarding a field in which electronic commerce is performed;
   calculating a second score representing a feature of the field based on the acquired data regarding the field; and
   determining an amount of a deposit in the electronic commerce based on the first score and the second score.
(Item 52A) The method according to the item 52, including characteristics according to one or more of the items.
(Item 53) A program for determining a matter to be determined when a purchaser in electronic commerce purchases a product or a service, the program being executed in a system including a processor unit and causing the processor unit to execute processes including:
   acquiring data and/or information regarding a purchaser;
   calculating a first score representing a feature of the purchaser based on the acquired data and/or information regarding the purchaser;
   acquiring data regarding a field in which electronic commerce is performed;
   calculating a second score representing a feature of the field based on the acquired data regarding the field; and
   determining an amount of a deposit in the electronic commerce based on the first score and the second score.
(Item 53A) The program according to the item 53, including characteristics according to one or more of the items.
(Item 53B) A computer-readable storage medium storing the program according to the item 53 or the item 53A.
(Item 54) A system that determines a matter to be determined when a seller in electronic commerce sells a product or a service and a purchaser purchases the product or the service, the system including:
   first acquisition means for acquiring data and/or information regarding a seller;
   first calculation means for calculating a first score representing a feature of the seller based on the acquired data and/or information regarding the seller;
   second acquisition means for acquiring data regarding a field in which electronic commerce is performed;
   second calculation means for calculating a second score representing a feature of the field based on the acquired data regarding the field;
   third acquisition means for acquiring data and/or information regarding a purchaser;
   third calculation means for calculating a third score representing a feature of the purchaser based on the acquired data and/or information regarding the purchaser;
   first determination means for determining a deposit in the electronic commerce to be paid by the seller based on the first score and the second score;
   second determination means for determining a deposit in the electronic commerce to be paid by the purchaser based on the second score and the third score; and
   selling means for enabling a product or a service to be sold from the seller to the purchaser in response to detecting that the seller has paid the deposit and that the purchaser has paid the deposit.
(Item 55) A method of determining a matter to be determined when a seller in electronic commerce sells a product or a service and a purchaser purchases the product or the service, the method including:
   acquiring data and/or information regarding a seller;
   calculating a first score representing a feature of the seller based on the acquired data and/or information regarding the seller;
   acquiring data regarding a field in which electronic commerce is performed;
   calculating a second score representing a feature of the field based on the acquired data regarding the field;
   acquiring data and/or information regarding a purchaser;
   calculating a third score representing a feature of the purchaser based on the acquired data and/or information regarding the purchaser;
   determining a deposit in the electronic commerce to be paid by the seller based on the first score and the second score;
   determining a deposit in the electronic commerce to be paid by the purchaser based on the second score and the third score; and
   enabling a product or a service to be sold from the seller to the purchaser in response to detecting that the seller has paid the deposit and that the purchaser has paid the deposit.
(Item 55A) The method according to the item 55, including characteristics according to one or more of the items.
(Item 56) A program for determining a matter to be determined when a seller in electronic commerce sells a product or a service and a purchaser purchases the product or the service, the program being executed in a system including a processor unit and causing the processor unit to execute processes including:
   acquiring data and/or information regarding a seller;
   calculating a first score representing a feature of the seller based on the acquired data and/or information regarding the seller;
   acquiring data regarding a field in which electronic commerce is performed;
   calculating a second score representing a feature of the field based on the acquired data regarding the field;
   acquiring data and/or information regarding a purchaser;
   calculating a third score representing a feature of the purchaser based on the acquired data and/or information regarding the purchaser;
   determining a deposit in the electronic commerce to be paid by the seller based on the first score and the second score;
   determining a deposit in the electronic commerce to be paid by the purchaser based on the second score and the third score; and
   enabling a product or a service to be sold from the seller to the purchaser in response to detecting that the seller has paid the deposit and that the purchaser has paid the deposit.
(Item 56A) The program according to the item 56, including characteristics according to one or more of the items.
(Item 56B) A computer-readable storage medium storing the program according to the item 56 or the item 56A.
(Item 57) A system that determines a matter to be determined when a player performs an action, the system including:
   first acquisition means for acquiring data and/or information regarding a player related to an action;
   first calculation means for calculating a first score representing a feature of the player based on the acquired data and/or information regarding the player, in which the first calculation means obtains the first score from a first machine learning model by inputting the acquired data and/or information regarding the player into the first machine learning model that has learned a relationship between data and/or information regarding a plurality of the players and scores representing features of the plurality of players;
   second acquisition means for acquiring data regarding a field in which the action is performed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding the plurality of fields and scores representing features of the plurality of fields; and
   determination means for determining the matter to be determined based on the first score and the second score, in which the determination means refers to a database unit, specifies content associated with the first score and the second score, and determines that the matter to be determined is the content.
(Item 58) A method of determining a matter to be determined when a player performs an action, the method being executed in a system including a processor unit, the method including:
   acquiring, by the processor unit, data and/or information regarding a player related to an action;
   calculating, by the processor unit, a first score representing a feature of the player based on the acquired data and/or information regarding the player, in which the calculating the first score includes obtaining the first score from a first machine learning model by inputting the acquired data and/or information regarding the player into the first machine learning model that has learned a relationship between data and/or information regarding a plurality of players and scores representing features of the plurality of players;
   acquiring, by the processor unit, data regarding a field in which the action is performed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of fields and scores representing features of a plurality of the fields; and
   determining, by the processor unit, the matter to be determined based on the first score and the second score, in which the determining includes referring to a database unit, specifying content associated with the first score and the second score, and determining that the matter to be determined is the content.
(Item 59) A program for determining a matter to be determined when a player performs an action, the program being executed in a system including a processor unit and causing the processor unit to execute processes including:
   acquiring data and/or information regarding a player related to an action;
   calculating a first score representing a feature of the player based on the acquired data and/or information regarding the player, in which the calculating the first score includes acquiring the first score from a first machine learning model by inputting the acquired data and/or information regarding the player into the first machine learning model that has learned a relationship between data and/or information regarding a plurality of players and scores representing features of the plurality of players;
   acquiring data regarding a field in which the action is performed;
   calculating a second score representing a feature of the field based on the acquired data regarding the field, in which the calculating the second score includes acquiring the second score from a second machine learning model by inputting the acquired data regarding the field into the second machine learning model that has learned a relationship between data regarding a plurality of fields and scores representing features of a plurality of the fields; and
   determining the matter to be determined based on the first score and the second score, in which the determining includes referring to a database unit, specifying content associated with the first score and the second score, and determining that the matter to be determined is the content.
(Item 60) A system that determines a matter to be determined when an advertiser places an advertisement, the system including:
   first acquisition means for acquiring data and/or information regarding an advertiser;
   first calculation means for calculating a first score representing a feature of the advertiser based on the acquired data and/or information regarding the advertiser, in which the first calculation means obtains the first score from a first machine learning model by inputting the acquired data and/or information regarding the advertiser into the first machine learning model that has learned a relationship between data and/or information regarding a plurality of the advertisers and scores representing features of the plurality of advertisers;
   second acquisition means for acquiring data regarding a field in which an advertisement is placed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding a plurality of the fields and scores representing features of the plurality of fields; and
   determination means for determining a placement condition of the advertisement based on the first score and the second score, in which the determination means refers to a database unit, specifies content associated with the first score and the second score, and determines that the placement condition of the advertisement is the content.
(Item 61) A method of determining a matter to be determined when an advertiser places an advertisement, the method being executed in a system including a processor unit, the method including:
   acquiring, by the processor unit, data and/or information regarding an advertiser;
   calculating, by the processor unit, a first score representing a feature of the advertiser based on the acquired data and/or information regarding the advertiser, in which the calculating the first score includes obtaining the first score from a first machine learning model by inputting the acquired data and/or information regarding the advertiser into the first machine learning model that has learned a relationship between data and/or information regarding a plurality of the advertisers and scores representing features of the plurality of advertisers;
   acquiring, by the processor unit, data regarding a field in which an advertisement is placed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining, by the processor unit, a placement condition of the advertisement based on the first score and the second score, in which the determining includes referring to a database unit, specifying content associated with the first score and the second score, and determining that the placement condition of the advertisement is the content.
(Item 62) A program for determining a matter to be determined when an advertiser places an advertisement, the program being executed in a system including a processor unit and causing the processor unit to execute processes including:
   acquiring data and/or information regarding an advertiser;
   calculating a first score representing a feature of the advertiser based on the acquired data and/or information regarding the advertiser, in which the calculating the first score includes obtaining the first score from a first machine learning model by inputting the acquired data and/or information regarding the advertiser into the first machine learning model that has learned a relationship between data and/or information regarding a plurality of the advertisers and scores representing features of the plurality of advertisers;
   acquiring data regarding a field in which an advertisement is placed;
   calculating a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining a placement condition of the advertisement based on the first score and the second score, in which the determining includes referring to a database unit, specifying content associated with the first score and the second score, and determining that the placement condition of the advertisement is the content.
(Item 63) A system that determines a matter to be determined when an advertisement recipient is provided with an advertisement, the system including:
   first acquisition means for acquiring data and/or information regarding an advertisement recipient;
   first calculation means for calculating a first score representing a feature of the advertisement recipient based on the acquired data and/or information regarding the advertisement recipient, in which the first calculation means obtains the first score from a first machine learning model by inputting the acquired data and/or information regarding the advertisement recipient into the first machine learning model that has learned a relationship between data and/or information regarding a plurality of the advertisement recipients and scores representing features of the plurality of advertisement recipient;
   second acquisition means for acquiring data regarding a field in which an advertisement is placed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding a plurality of the fields and scores representing features of the plurality of fields; and
   determination means for determining an advertisement to be provided to the advertisement recipient based on the first score and the second score, in which the determination means refers to a database unit, specifies content associated with the first score and the second score, and determines that the advertisement to be provided to the advertisement recipient is the content.
(Item 64) A method of determining a matter to be determined when an advertisement recipient is provided with an advertisement, the method being executed in a system including a processor unit, the method including:
   acquiring, by the processor unit, data and/or information regarding an advertisement recipient;
   calculating, by the processor unit, a first score representing a feature of the advertisement recipient based on the acquired data and/or information regarding the advertisement recipient, in which the calculating the first score includes obtaining the first score from a first machine learning model by inputting the acquired data and/or information regarding the advertisement recipient into the first machine learning model that has learned a relationship between data and/or information regarding a plurality of advertisement recipient and scores representing features of the plurality of advertisement recipient;
   acquiring, by the processor unit, data regarding a field in which an advertisement is placed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining, by the processor unit, an advertisement to be provided to the advertisement recipient based on the first score and the second score, in which the determining includes referring to a database unit, specifying content associated with the first score and the second score, and determining that the advertisement to be provided to the advertisement recipient is the content.
(Item 65) A program for determining a matter to be determined when an advertisement recipient is provided with an advertisement, the program being executed in a system including a processor unit and causing the processor unit to execute processes including:
   acquiring data and/or information regarding an advertisement recipient;
   calculating a first score representing a feature of the advertisement recipient based on the acquired data and/or information regarding the advertisement recipient, in which the calculating the first score includes obtaining the first score from a first machine learning model by inputting the acquired data and/or information regarding the advertisement recipient into the first machine learning model that has learned a relationship between data and/or information regarding a plurality of advertisement recipient and scores representing features of the plurality of advertisement recipient;
   acquiring data regarding a field in which an advertisement is placed;
   calculating a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining an advertisement to be provided to the advertisement recipient based on the first score and the second score, in which the determining includes referring to a database unit, specifying content associated with the first score and the second score, and determining that the advertisement to be provided to the advertisement recipient is the content.
(Item 66) A system that determines a matter to be determined when an advertiser provides an advertisement and an advertisement recipient is provided with the advertisement, the system including:
   first acquisition means for acquiring data and/or information regarding an advertiser for a plurality of the advertisers;
   first calculation means for calculating, for the plurality of advertisers, a first score representing a feature of the advertiser based on the acquired data and/or information regarding the advertiser, in which the first calculation means obtains the first score from a first machine learning model by inputting the acquired data and/or information regarding the advertiser into the first machine learning model that has learned a relationship between data and/or information regarding the plurality of advertisers and scores representing features of the plurality of advertisers;
   second acquisition means for acquiring data regarding a field in which an advertisement is to be placed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding a plurality of the fields and scores representing features of the plurality of fields;
   third acquisition means for acquiring data and/or information regarding an advertisement recipient for a plurality of the advertisement recipients;
   third calculation means for calculating a third score representing a feature of the advertisement recipient based on the acquired data and/or information regarding the advertisement recipient, in which the third calculation means obtains the third score from a third machine learning model by inputting the acquired data and/or information regarding the advertisement recipient into the third machine learning model that has learned a relationship between data and/or information regarding the plurality of advertisement recipients and scores representing features of the plurality of advertisement recipients; and
   determination means for determining a combination of at least one advertiser among the plurality of advertisers and at least one advertisement recipient among the plurality of advertisement recipients based on the first score, the second score, and the third score, in which the determination means refers to a database unit, specifies a condition associated with the first score, the second score, and the third score, and determines at least one advertiser among the plurality of advertisers and at least one advertisement recipient among the plurality of advertisement recipients satisfying the condition.
(Item 67) A method of determining a matter to be determined when an advertiser places an advertisement and an advertisement recipient is provided with the advertisement, the method being executed in a system including a processor unit, the method including:
   acquiring, by the processor unit, data and/or information regarding an advertiser for a plurality of the advertisers;
   calculating, by the processor unit, for the plurality of advertisers, a first score representing a feature of the advertiser based on the acquired data and/or information regarding the advertiser, in which the calculating the first score includes obtaining the first score from a first machine learning model by inputting the acquired data and/or information regarding the advertiser into the first machine learning model that has learned a relationship between data and/or information regarding the plurality of advertisers and scores representing features of the plurality of advertisers;
   acquiring, by the processor unit, data regarding a field in which an advertisement is placed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields;
   acquiring, by the processor unit, data and/or information regarding an advertisement recipient for a plurality of the advertisement recipients;
   calculating, by the processor unit, a third score representing a feature of the advertisement recipient based on the acquired data and/or information regarding the advertisement recipient, in which the calculating the third score includes obtaining the third score from a third machine learning model by inputting the acquired data and/or information regarding the advertisement recipient into the third machine learning model that has learned a relationship between data and/or information regarding the plurality of advertisement recipients and scores representing features of the plurality of advertisement recipients; and
   determining, by the processor unit, a combination of at least one advertiser among the plurality of advertisers and at least one advertisement recipient among the plurality of advertisement recipients based on the first score, the second score, and the third score, in which the determining includes referring to a database unit, specifying a condition associated with the first score, the second score, and the third score, and determining at least one advertiser among the plurality of advertisers and at least one advertisement recipient among the plurality of advertisement recipients satisfying the condition.
(Item 67) A program for determining a matter to be determined when an advertiser places an advertisement and an advertisement recipient is provided with the advertisement, the program being executed in a system including a processor unit and causing the processor unit to execute processes including:
   acquiring data and/or information regarding an advertiser for a plurality of the advertisers;
   calculating, for the plurality of advertisers, a first score representing a feature of the advertiser based on the acquired data and/or information regarding the advertiser, in which the calculating the first score includes obtaining the first score from a first machine learning model by inputting the acquired data and/or information regarding the advertiser into the first machine learning model that has learned a relationship between data and/or information regarding the plurality of advertisers and scores representing features of the plurality of advertisers;
   acquiring data regarding a field in which an advertisement is placed;
   calculating a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields;
   acquiring data and/or information regarding an advertisement recipient for a plurality of the advertisement recipients;
   calculating a third score representing a feature of the advertisement recipient based on the acquired data and/or information regarding the advertisement recipient, in which the calculating the third score includes obtaining the third score from a third machine learning model by inputting the acquired data and/or information regarding the advertisement recipient into the third machine learning model that has learned a relationship between data and/or information regarding the plurality of advertisement recipients and scores representing features of the plurality of advertisement recipients; and
   determining a combination of at least one advertiser among the plurality of advertisers and at least one advertisement recipient among the plurality of advertisement recipients based on the first score, the second score, and the third score, in which the determining includes referring to a database unit, specifying a condition associated with the first score, the second score, and the third score, and determining at least one advertiser among the plurality of advertisers and at least one advertisement recipient among the plurality of advertisement recipients satisfying the condition.
(Item 68) A system that determines a matter to be determined when a seller in electronic commerce sells a product or a service, the system including:
   first acquisition means for acquiring data and/or information regarding a seller;
   first calculation means for calculating a first score representing a feature of the seller based on the acquired data and/or information regarding the seller, in which the first calculation means obtains the first score from a first machine learning model by inputting the acquired data and/or information regarding the seller into the first machine learning model that has learned a relationship between data and/or information regarding a plurality of the sellers and scores representing features of the plurality of sellers;
   second acquisition means for acquiring data regarding a field in which electronic commerce is performed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding a plurality of the fields and scores representing features of the plurality of fields; and
   determination means for determining an amount of a deposit in the electronic commerce based on the first score and the second score, in which the determination means refers to a database unit, specifies content associated with the first score and the second score, and determines that the amount of the deposit is the content.
(Item 69) A method of determining a matter to be determined when a seller in electronic commerce sells a product or a service, the method being executed in a system including a processor unit, the method including:
   acquiring, by the processor unit, data and/or information regarding a seller;
   calculating, by the processor unit, a first score representing a feature of the seller based on the acquired data and/or information regarding the seller, in which the calculating the first score includes obtaining the first score from a first machine learning model by inputting the acquired data and/or information regarding the seller into the first machine learning model that has learned a relationship between data and/or information regarding a plurality of the sellers and scores representing features of the plurality of sellers;
   acquiring, by the processor unit, data regarding a field in which electronic commerce is performed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining, by the processor unit, an amount of a deposit in the electronic commerce based on the first score and the second score, in which the determining includes referring to a database unit, specifying content associated with the first score and the second score, and determining that the amount of the deposit is the content.
(Item 70) A program for determining a matter to be determined when a seller in electronic commerce sells a product or service, the program being executed in a system including a processor unit, the program including:
   acquiring data and/or information regarding a seller;
   calculating a first score representing a feature of the seller based on the acquired data and/or information regarding the seller, in which the calculating the first score includes obtaining the first score from a first machine learning model by inputting the acquired data and/or information regarding the seller into the first machine learning model that has learned a relationship between data and/or information regarding a plurality of the sellers and scores representing features of the plurality of sellers;
   acquiring data regarding a field in which electronic commerce is performed;
   calculating a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining an amount of a deposit in the electronic commerce based on the first score and the second score, in which the determining includes referring to a database unit, specifying content associated with the first score and the second score, and determining that the amount of the deposit is the content.
(Item 71) A system that determines a matter to be determined when a purchaser in electronic commerce purchases a product or a service, the system including:
   first acquisition means for acquiring data and/or information regarding a purchaser;
   first calculation means for calculating a first score representing a feature of the purchaser based on the acquired data and/or information regarding the purchaser, in which the first calculation means obtains the first score from a first machine learning model by inputting the acquired data and/or information regarding the purchaser into the first machine learning model that has learned a relationship between data and/or information regarding a plurality of the purchasers and scores representing features of the plurality of purchasers;
   second acquisition means for acquiring data regarding a field in which electronic commerce is performed;
   second calculation means for calculating a second score representing a feature of the field based on the acquired data regarding the field, in which the second calculation means obtains the second score from a second machine learning model by inputting the acquired data regarding the field into the second machine learning model that has learned a relationship between data regarding a plurality of the fields and scores representing features of the plurality of fields; and
   determination means for determining an amount of a deposit in the electronic commerce based on the first score and the second score, in which the determination means refers to a database unit, specifies content associated with the first score and the second score, and determines that the amount of the deposit is the content.
(Item 72) A method of determining a matter to be determined when a purchaser in electronic commerce purchases a product or a service, the method being executed in a system including a processor unit, the method including:
   acquiring, by the processor unit, data and/or information regarding a purchaser;
   calculating, by the processor unit, a first score representing a feature of the purchaser based on the acquired data and/or information regarding the purchaser, in which the calculating the first score includes obtaining the first score from a first machine learning model by inputting the acquired data and/or information regarding the purchaser into the first machine learning model that has learned a relationship between data and/or information regarding a plurality of the purchasers and scores representing features of the plurality of purchasers;
   acquiring, by the processor unit, data regarding a field in which electronic commerce is performed;
   calculating, by the processor unit, a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining, by the processor unit, an amount of a deposit in the electronic commerce based on the first score and the second score, in which the determining includes referring to a database unit, specifying content associated with the first score and the second score, and determining that the amount of the deposit is the content.
(Item 73) A program for determining a matter to be determined when a purchaser in electronic commerce purchases a product or a service, the program being executed in a system including a processor unit and causing the processor unit to execute processes including:
   acquiring data and/or information regarding a purchaser;
   calculating a first score representing a feature of the purchaser based on the acquired data and/or information regarding the purchaser, in which the calculating the first score includes obtaining the first score from a first machine learning model by inputting the acquired data and/or information regarding the purchaser into the first machine learning model that has learned a relationship between data and/or information regarding a plurality of the purchasers and scores representing features of the plurality of purchasers;
   acquiring data regarding a field in which electronic commerce is performed;
   calculating a second score representing a feature of the field based on the acquired data regarding the field, in which the calculating the second score includes obtaining the second score from a second machine learning model by inputting the acquired data regarding the field into the second machine learning model that has learned a relationship between data regarding a plurality of the fields and scores representing features of the plurality of fields; and
   determining an amount of a deposit in the electronic commerce based on the first score and the second score, in which the determining includes referring to a database unit, specifying content associated with the first score and the second score, and determining that the amount of the deposit is the content.
(Item 74) A system that determines a matter to be determined when a seller in electronic commerce sells a product or a service and a purchaser purchases the product or the service, the system including:
   first acquisition means for acquiring data and/or information regarding a seller;
   first calculation means for calculating a first score representing a feature of the seller based on the acquired data and/or information regarding the seller, in which the first calculation means obtains the first score from a first machine learning model by inputting the acquired data and/or information regarding the seller into the first machine learning model that has learned a relationship between data and/or information regarding a plurality of the sellers and scores representing features of the plurality of sellers;
   second acquisition means for acquiring data regarding a field in which electronic commerce is performed;
   second calculation means for calculating a second score representing a feature of the field based on the acquired data regarding the field, in which the second calculation means obtains the second score from the second machine learning model by inputting the acquired data regarding the field to a second machine learning model that has learned a relationship between the data regarding the plurality of fields and the score representing the feature of the plurality of fields;
   third acquisition means for acquiring data and/or information regarding a purchaser;
   third calculation means for calculating a third score representing a feature of the purchaser based on the acquired data and/or information regarding the purchaser, in which the third calculation means obtains the third score from a third machine learning model by inputting the acquired data and/or information regarding the purchaser into the third machine learning model that has learned a relationship between data and/or information regarding a plurality of the purchasers and scores representing features of the plurality of purchasers;
   first determination means for determining a deposit in the electronic commerce to be paid by the seller based on the first score and the second score, in which the first determination means refers to a database unit, specifies content associated with the first score and the second score, and determines that an amount of the deposit in the electronic commerce to be paid by the seller is the content;
   second determination means for determining a deposit in the electronic commerce to be paid by the purchaser based on the second score and the third score, in which the second determination means refers to the database unit, specifies content associated with the second score and the third score, and determines that an amount of the deposit in the electronic commerce to be paid by the purchaser is the content; and
   selling means for enabling a product or a service to be sold from the seller to the purchaser in response to detecting that the seller has paid the deposit and that the purchaser has paid the deposit.
(Item 75) A method of determining a matter to be determined when a seller in electronic commerce sells a product or a service and a purchaser purchases the product or the service, the method being executed in a system including a processor unit, the method including:
   acquiring, by the processor unit, data and/or information regarding a seller;
   calculating, by the processor unit, a first score representing a feature of the seller based on the acquired data and/or information regarding the seller, in which the calculating the first score includes obtaining the first score from a first machine learning model by inputting the acquired data and/or information regarding the seller into the first machine learning model that has learned a relationship between data and/or information regarding a plurality of the sellers and scores representing features of the plurality of sellers;
   acquiring, by the processor unit, data regarding a field in which electronic commerce is performed;
   calculating, by the processor unit, a second score representing a feature of the field based on the acquired data regarding the field, in which the calculating the second score includes obtaining the second score from the second machine learning model by inputting the acquired data regarding the field to a second machine learning model that has learned a relationship between the data regarding the plurality of fields and the score representing the feature of the plurality of fields;
   acquiring, by the processor unit, data and/or information regarding a purchaser;
   calculating, by the processor unit, a third score representing a feature of the purchaser based on the acquired data and/or information regarding the purchaser, in which the calculating the third score includes obtaining the third score from a third machine learning model by inputting the acquired data and/or information regarding the purchaser into the third machine learning model that has learned a relationship between data and/or information regarding a plurality of the purchasers and scores representing features of the plurality of purchasers;
   determining, by the processor unit, a deposit in the electronic commerce to be paid by the seller based on the first score and the second score, in which the determining the deposit includes in the electronic commerce to be paid by the seller includes referring to a database unit, specifying content associated with the first score and the second score, and determining that an amount of the deposit in the electronic commerce to be paid by the seller is the content;
   determining, by the processor unit, a deposit in the electronic commerce to be paid by the purchaser based on the second score and the third score, in which the determining the deposit in the electronic commerce to be paid by the purchaser includes referring to the database unit, specifying content associated with the second score and the third score, and determining that an amount of the deposit in the electronic commerce to be paid by the purchaser is the content; and
   enabling, by the processor unit, a product or a service to be sold from the seller to the purchaser in response to detecting that the seller has paid the deposit and that the purchaser has paid the deposit.
(Item 76) A program for determining a matter to be determined when a seller in electronic commerce sells a product or a service and a purchaser purchases the product or the service, the program being executed in a system including a processor unit and causing the processor unit to execute processes including:
   acquiring data and/or information regarding a seller;
   calculating a first score representing a feature of the seller based on the acquired data and/or information regarding the seller, in which the calculating the first score includes obtaining the first score from a first machine learning model by inputting the acquired data and/or information regarding the seller into the first machine learning model that has learned a relationship between data and/or information regarding a plurality of the sellers and scores representing features of the plurality of sellers;
   acquiring data regarding a field in which electronic commerce is performed;
   calculating a second score representing a feature of the field based on the acquired data regarding the field, in the calculating the second score includes obtaining the second score from the second machine learning model by inputting the acquired data regarding the field to a second machine learning model that has learned a relationship between the data regarding the plurality of fields and the score representing the feature of the plurality of fields;
   acquiring data and/or information regarding a purchaser;
   calculating a third score representing a feature of the purchaser based on the acquired data and/or information regarding the purchaser, in which the calculating the third score includes obtaining the third score from a third machine learning model by inputting the acquired data and/or information regarding the purchaser into the third machine learning model that has learned a relationship between data and/or information regarding a plurality of the purchasers and scores representing features of the plurality of purchasers;
   determining a deposit in the electronic commerce to be paid by the seller based on the first score and the second score, in which the determining the deposit in the electronic commerce to be paid by the seller includes referring to a database unit, specifying content associated with the first score and the second score, and determining that an amount of the deposit in the electronic commerce to be paid by the seller is the content;
   determining a deposit in the electronic commerce to be paid by the purchaser based on the second score and the third score, in which the determining the deposit in the electronic commerce to be paid by the purchaser includes referring to the database unit, specifying content associated with the second score and the third score, and determining that an amount of the deposit in the electronic commerce to be paid by the purchaser is the content; and
   enabling a product or a service to be sold from the seller to the purchaser in response to detecting that the seller has paid the deposit and that the purchaser has paid the deposit.

### ADVANTAGES OF THE INVENTION

According to the present invention, a system or the like for determining a matter to be determined when a player performs an action can be provided, and thus it is possible to realize an autonomous decentralized system that does not require a centralized administrator.

### BRIEF DESCRIPTION OF THE DRAWINGS

Fig. 1A is a diagram schematically illustrating an example of a flow in a platform 10A for determining a matter to be determined for an advertisement.
Fig. 1B is a diagram schematically illustrating another example of a flow in the platform 10A for determining a matter to be determined for an advertisement.
Fig. 2A is a diagram schematically illustrating an example of a flow in a platform 10B for determining a matter to be determined for electronic commerce.
Fig. 2B is a diagram schematically illustrating another example of a flow in the platform 10B for determining a matter to be determined for electronic commerce.
Fig. 3A is a diagram schematically illustrating an example of a flow in a platform 10C for determining a matter to be determined for e-sports.
Fig. 3B is a diagram schematically illustrating another example of a flow in the platform 10C for determining a matter to be determined for e-sports.
Fig. 4A is a diagram schematically illustrating an example of a flow in a platform 10D for determining a matter to be determined for building management.
Fig. 4B is a diagram schematically illustrating another example of a flow in the platform 10D for determining a matter to be determined for building management.
Fig. 5A is a diagram illustrating an example of a configuration of a system 100 that determines a matter to be determined when a player performs an action.
Fig. 5B is a diagram illustrating an example of a specific configuration of the system 100 that determines a matter to be determined when a player performs an action.
Fig. 5C is a conceptual diagram illustrating an example of association of details stored in a database unit 200.
Fig. 5D is a conceptual diagram illustrating another example of association of details stored in the database unit 200.
Fig. 6A is a diagram illustrating an example of a configuration of a processor unit 120.
Fig. 6B is a diagram illustrating an example of a configuration of a processor unit 120' which is an alternative embodiment of the processor unit 120.
Fig. 7 is a diagram illustrating an example of a structure of a neural network model that can be used by first calculation means 123.
Fig. 8 is a flowchart illustrating an example of processing (processing 800) in the system 100 that determines a matter to be determined when a player performs an action.
Fig. 9A is a flowchart illustrating an example (900) of processing in a case where the system 100 that determines a matter to be determined when a player performs an action is applied to an advertisement field.
Fig. 9B is a flowchart illustrating another example (910) of processing in a case where the system 100 that determines a matter to be determined when a player performs an action is applied to the advertisement field.
Fig. 9C is a flowchart illustrating still another example (920) of processing in a case where the system 100 that determines a matter to be determined when a player performs an action is applied to the advertisement field.
Fig. 10A is a flowchart illustrating an example (1000) of processing in a case where the system 100 that determines a matter to be determined when a player performs an action is applied to an electronic commerce field.
Fig. 10B is a flowchart illustrating an example (1010) of another process in a case where the system 100 that determines a matter to be determined when a player performs an action is applied to the electronic commerce field.
Fig. 10C is a flowchart illustrating still another example (1020) of processing in a case where the system 100 that determines a matter to be determined when a player performs an action is applied to the electronic commerce field.

### DESCRIPTION OF EMBODIMENTS

### 1. Definition

In the present specification, a "player" indicates an entity that performs an action. The player may be, for example, a natural person. The player may be, for example, artificial intelligence (so-called AI).

In the present specification, the "action" is any action. When a player performs an action, there is a matter to be determined. Once the matter to be determined is determined, the player can perform an action.

In the present specification, a "field" is a location where an action is performed. The field may be a location in a real space or a location in a virtual space.

In the present specification, "data" regarding a certain entity is objective details regarding the entity.

In the present specification, "information" regarding a certain entity is subjective details regarding the entity.

In the present specification, "data" regarding a field is objective details regarding the field and/or subjective details regarding the field, with a user of the field as the subject.

In the present specification, an "advertiser" is an entity that places an advertisement. The advertiser may be, for example, a natural person or a corporation. The advertiser may be, for example, artificial intelligence (so-called AI).

In the present specification, an "advertisement recipient" is an entity provided with an advertisement. The advertisement recipient can be provided with an advertisement, for example, through at least one of the five senses (the visual sense, the auditory sense, the tactile sense, the olfactory sense, and the taste). The advertisement recipient may be, for example, a natural person or a corporation.

In the present specification, a "seller" is an entity that sells a product or a service in electronic commerce. The seller may be, for example, a natural person or a corporation. The seller may be, for example, artificial intelligence (so-called AI).

In the present specification, a "purchaser" is an entity that purchases a product or a service in electronic commerce. The purchaser may be, for example, a natural person or a corporation. The purchaser may be, for example, artificial intelligence (so-called AI).

Hereinafter, embodiments of the present invention will be described with reference to the drawings.

### 2. Platform that can determine matter to be determined when player performs action

The inventor has developed a platform that can determine a matter to be determined when a player performs an action. In this platform, a matter to be determined when a player performs an action can be automatically determined from details regarding the player for the action and details regarding a field in which the action is performed. Once the matter to be determined is determined, the player can perform an action. That is, the platform enables a player to perform an action without the need for a centralized administrator.

For example, in this platform, when a player attempts to perform an action, the player provides details regarding the player to the platform consciously or unconsciously. In this platform, details regarding a field in which an action is performed is also acquired. When the details regarding the player is provided, the platform automatically determines a matter to be determined when the player performs an action. When the player consciously or unconsciously agrees with the determined matter, an action is performed according to the determined matter. Alternatively, an action is performed according to the determined matter without consent of the player. As described above, a cycle including (a) intention of an action, (b) determination of a matter to be determined when a player performs the action, and (c) execution of the action according to the determined matter is performed.

In this platform, automatically determining a matter to be determined when a player performs an action is particularly useful, for example, when there are a plurality of parties related to the action. This is because even in the absence of a centralized administrator intermediating the plurality of parties, it is possible to appropriately determine a matter to be determined when the plurality of parties perform an action, that is, to enable the plurality of parties to perform an action. For example, as will be described later, in the advertisement field, in a case where there are a plurality of parties (that is, an advertiser and an advertisement recipient), a matter to be determined when the plurality of parties perform an action (for example, a condition for placing an advertisement or an advertisement to be provided) can be determined even if there is no advertising agency as an intermediary. For example, as will be described later, in the field of electronic commerce, in a case where there are a plurality of parties (that is, a seller and a purchaser), a matter to be determined when the plurality of parties perform an action (for example, an amount of a deposit to ensure proper electronic commerce) can be determined even in the absence of an EC mall administrator as an intermediary. For example, as will be described later, in the e-sports field, in a case where there are a plurality of parties (that is, a plurality of players), a matter to be determined when the plurality of parties perform an action (for example, odds of betting) can be determined even in the absence of an e-sports organizer as an intermediary. For example, as will be described later, in the building management field, in a case where there are a plurality of parties (that is, a plurality of cleaning companies), a matter to be determined when the plurality of parties perform an action (for example, a cleaning company to be in charge of cleaning work of a building) can be determined even in the absence of a bidding manager as an intermediary.

This platform can provide, for example, an autonomous decentralized system that does not require a centralized administrator. For example, even in the absence of a centralized administrator, a cycle including (a) intention of an action, (b) determination of a matter to be determined when a player performs the action, and (c) execution of the action according to the determined matter can be performed autonomously. Autonomous decentralized systems are applicable, for example, to digital cities or metaverses in a virtual space, and this suggests a possibility of creation of a new economic sphere in a virtual space that is separate from the real world.

### 2A. Application to placing advertisement or being provided with advertisement

In one aspect, the above platform that can determine a matter to be determined when a player performs an action may be applied to placing an advertisement or being provided with an advertisement. Here, the player is an advertiser and/or an advertisement recipient, and the field is a field (for example, a virtual space provided by the platform or a virtual street in the virtual space) in which an advertisement is placed. This platform may be accessed by an advertiser and/or an advertisement recipient. For example, an advertiser may access the platform to place an advertisement in a virtual space, and an advertisement recipient may access the platform to receive the advertisement in the virtual space. The advertisement recipient may be provided with the advertisement, for example, through at least one of the five senses (the visual sense, the auditory sense, the tactile sense, the olfactory sense, and the taste), and, may be preferably provided with the advertisement through the visual sense or the auditory sense (that is, a player views or listens to the advertisement). For example, the advertisement recipient can operate a resident (for example, an avatar) in the virtual space and view the advertisement provided in the virtual space.

In this platform, for example, as a matter to be determined when an advertiser places an advertisement, placement conditions of the advertisement to be placed by the advertiser is determined, and conditions of placing the advertisement (placement conditions) can be provided to the advertiser. The advertiser can determine whether or not to place an advertisement according to the provided placement conditions. The placement conditions include, for example, a location where an advertisement is placed and a cost of the advertisement. The placement location is associated with a target of the advertisement, a placement size of the advertisement, and/or a placement period of the advertisement, and determining the placement location may lead to determining the target of the advertisement, the placement size of the advertisement, and/or the placement period of the advertisement. The cost of the advertisement may include an amount of an incentive to be provided to an advertisement recipient who receives the provision of the advertisement in addition to the cost for placing the advertisement on the placement location. When the advertiser determines to place an advertisement, the advertiser may provide a cost for placing the advertisement to the platform according to the placement conditions, and place the advertisement at the determined location.

Alternatively, in this platform, for example, as a matter to be determined when an advertisement recipient is provided with an advertisement, an advertisement to be provided to the advertisement recipient may be determined, and the determined advertisement may be presented to the advertisement recipient. The advertisement recipient may determine whether or not to receive provision of the presented advertisement. For example, the advertisement recipient can obtain an incentive by receiving the provision of the advertisement and performing an action designated in the advertisement. The incentive may preferably be money. The money may be, for example, currency (for example, legal currency, electronic money, or virtual currency) available in the real world, or may be currency or points available within the virtual space provided by the platform.

For example, in a case where it is designated that an advertisement for a certain insurance product is to contact an insurance company as an action for obtaining an incentive, when an advertisement recipient views the advertisement for the insurance product and contacts the insurance company, the advertisement recipient can obtain an incentive. For example, in a case where it is designated that an advertisement for a certain financial product is to provide a contact address to a securities company as an action for obtaining an incentive, when the advertisement recipient views the advertisement for the financial product and provides the contact address to the securities company, the advertisement recipient can obtain an incentive. As described above, an advertisement recipient can provide his/her personal details through an action on an advertisement and obtain a reward therefor. The platform may determine an advertisement to be provided to an advertisement recipient, and thus it is possible to assist the advertisement recipient in searching for the advertisement and to assist the user in obtaining a reward for providing personal details.

Alternatively, in the platform, for example, a combination of at least one advertiser of a plurality of advertisers and at least one advertisement recipient of a plurality of advertisement recipients is determined as a matter to be determined when an advertiser places an advertisement and an advertisement recipient is provided with the advertisement, and the advertiser in the determined combination can provide the advertisement to the advertisement recipient.

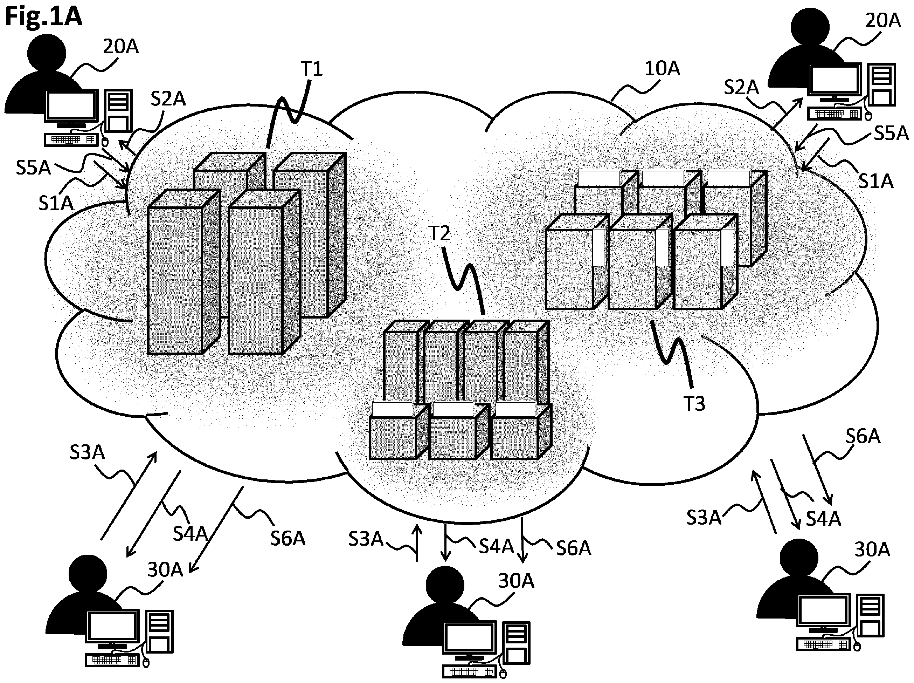

Fig. 1A schematically illustrates an example of a flow in a platform 10A for determining a matter to be determined for an advertisement.

### (Determination of matter to be determined when advertiser places advertisement)

In step S1A, an advertiser 20A accesses a platform 10A and requests to place an advertisement on a virtual space provided by the platform 10A. The advertiser 20A may access platform 10A by using, for example, an own terminal device thereof (for example, a smartphone, a tablet terminal, a smartwatch, a smart glass, or a personal computer) or a terminal device installed at the advertiser's company.

In the example illustrated in Fig. 1A, the virtual space provided by the platform 10A includes a virtual street T1, a virtual street T2, and a virtual street T3, and these virtual streets or a part thereof are candidate locations for placing an advertisement. For example, the advertisement may be placed on a wall surface of a building in the virtual street T1, a rooftop sign or a wall surface of a building in the virtual street T2, a rooftop sign or a wall surface sign of a building in the virtual street T3, and an avatar of the advertisement recipient can see the advertisement when visiting the virtual street T1, the virtual street T2, or the virtual street T3. The virtual space or each virtual street, which is a field in which an advertisement is to be placed, has respective features. For example, as the features, the virtual street T1 is a location where many avatars of a high-income group gather, the virtual street T2 is a location where many avatars of an intermediate layer gather, and the virtual street T3 is a location where many avatars of a family layer gather. For example, the virtual space or the virtual street has features of being managed by a centralized administrator or being managed in a decentralized manner. For example, the virtual space or the virtual street has features that currency guaranteed to be valuable by Japanese yen is in circulation, currency guaranteed to be valuable by U.S. dollars is in circulation, currency guaranteed to be valuable by gold is in circulation, or currency not guaranteed to be valuable is in circulation.

The advertiser 20A may provide data and/or information regarding the advertiser 20A to the platform 10A when requesting placing an advertisement.

Here, the data regarding the advertiser is objective details regarding the advertiser. The data regarding the advertiser may be private details known only to the advertiser himself or herself, or may be public details shared with a third party. The data regarding the advertiser may be acquired from, for example, an terminal device of the advertiser and/or an IoT device capable of communicating with the terminal device of the advertiser. The data regarding the advertiser may be acquired from, for example, any location on a network to which the platform 10A is connected. The data regarding the advertiser may be recorded in, for example, a token stored in an appropriate place on the network to which the platform 10A is connected. Here, the "token" is a physical or virtual device capable of storing details. The details stored in the "token" is preferably held in the token so that falsification is difficult (for example, by using a blockchain technology). As a result, the details stored in the "token" has value. The token may be subject to distribution, for example, handled as being similar to virtual currency. The data regarding the advertiser may include personal details of the advertiser. In a case where advertiser A is a corporation, the data regarding the advertiser may include, for example, corporation details (for example, a name, years of establishment, employee details, and financial details).

Here, the information regarding the advertiser is subjective details with the advertiser as the subject. The information regarding the advertiser may be private details that is known only by the advertiser himself or herself, or may be public details shared with a third party. The information regarding the advertiser may be acquired, for example, by the advertiser directly inputting the details to the terminal device. The information regarding the advertiser may be indirectly derived from, for example, an inquiry or a question to the advertiser. The information regarding the advertiser may be acquired from, for example, any location on the network to which the platform 10A is connected. The information regarding the advertiser may be recorded in, for example, a token stored in an appropriate place on the network to which the platform 10A is connected. The information regarding the advertiser includes details regarding an advertisement that the advertiser desires to place (for example, a field of advertising and a desired target of the advertisement).

The advertiser 20A may provide data and/or information regarding the advertiser 20A to the platform 10A via, for example, an own terminal device thereof. Alternatively, the advertiser 20A may provide data and/or information regarding the advertiser 20A to the platform 10A via, for example, an IoT device associated with the advertiser 20A.

When the platform 10A receives the data and/or the information regarding the advertiser 20A, in the platform 10A, conditions (placement conditions) for the advertiser 20A placing an advertisement are determined. The placement conditions may include, for example, a location (for example, a signboard of a certain virtual street or a certain building in a certain virtual street) where an advertisement is to be placed in the virtual space. Alternatively, the placement conditions may include, for example, a cost for placing an advertisement at a specific location in the virtual space. In the platform 10A, the placement conditions are determined by using data and/or information regarding the advertiser 20A and a feature of the virtual space or a feature of each virtual street in the virtual space.

In step S2A, the placement conditions determined in the platform 10A are presented to the advertiser 20A. The advertiser 20A can examine the placement conditions and determine whether to place an advertisement in the virtual space. When it is determined that the advertisement is to be placed, the advertiser 20A places the advertisement according to the placement conditions.

As described above, in the platform 10A, placement conditions for an advertisement to be placed by the advertiser 20A can be determined as a matter to be determined when the advertiser places the advertisement.

For example, in a case where placement conditions cannot be uniquely determined by using the data and/or the information regarding the advertiser 20A and the feature of the virtual space or the feature of each virtual street in the virtual space, placement conditions may be determined in further consideration of a rule governing the platform 10A. The rule may be, for example, a rule related to a location and/or an advertiser, such as an advertiser with a low reliability cannot place an advertisement in the virtual street T1, a placement cost is 30% off for an advertiser with a high reliability, or an advertiser cannot place an advertisement of an insurance product in the virtual street T3.

In the platform 10A, a matter to be determined when the advertiser places an advertisement (that is, placement conditions, preferably placement conditions suitable for the advertiser, more preferably placement conditions optimum for the advertiser) may be automatically determined by using data and/or information regarding the advertiser 20A and a feature of the virtual space or a feature of each virtual street in the virtual space, or using data and/or information regarding the advertiser 20A and a feature of the virtual space or a feature and a rule of each virtual street in the virtual space. Consequently, it is possible to manage placement of an advertisement in a decentralized manner without the need for a centralized administrator.

### (Determination of matter to be determined when advertisement recipient is provided with advertisement)

In step S3A, an advertisement recipient 30A accesses the platform 10A and searches for an advertisement in the virtual space provided by the platform 10A. The advertisement recipient 30A can access the platform 10A by using, for example, an own terminal device thereof (for example, a smartphone, a tablet terminal, a smartwatch, a smart glass, or a personal computer).

When searching for an advertisement, the advertisement recipient 30A may provide data and/or information regarding the advertisement recipient 30A to the platform 10A.

Here, the data regarding the advertisement recipient is similar to the data regarding the advertiser, and is objective details regarding the advertisement recipient.

Here, the information regarding the advertisement recipient is similar to the details regarding the advertiser, and is subjective details with the advertisement recipient as the subject.

The advertisement recipient 30A may provide data and/or information regarding the advertisement recipient 30A to the platform 10A via, for example, the own terminal device thereof. Alternatively, the advertisement recipient 30A may provide data and/or information regarding the advertisement recipient 30A to the platform 10A via, for example, an IoT device associated with the advertiser 20A.

When the platform 10A receives the data and/or the information regarding the advertisement recipient 30A, the platform 10A determines an advertisement to be provided to the advertisement recipient 30A. The advertisement to be provided to the advertisement recipient 30A may be an advertisement useful for the advertisement recipient 30A, an advertisement for which the advertisement recipient 30A easily receives an incentive, an advertisement that the advertisement recipient 30A may potentially need, or the like. In the platform 10A, an advertisement to be provided to the advertisement recipient 30A is determined by using data and/or information regarding the advertisement recipient 30A and a feature of each virtual street in the virtual space.

In step S4A, the advertisement to be provided to the advertisement recipient 30A, determined in the platform 10A, is presented to the advertisement recipient 30A. The advertisement recipient 30A may determine whether to receive the presented advertisement. For example, the advertisement recipient 30A may determine whether to receive the advertisement in consideration of the content of an incentive acquired from an action for the advertisement, in consideration of the content of an action necessary for obtaining the incentive, or in consideration of the content of the advertisement. When the advertisement recipient 30A determines to receive the advertisement, the advertisement recipient 30A can receive (for example, see or listen to the advertisement) the advertisement in the virtual space.

As described above, in the platform 10A, an advertisement to be provided to the advertisement recipient 30A may be determined as a matter to be determined when the advertisement recipient is provided with the advertisement.

For example, in a case where placement conditions cannot be uniquely determined by using the data and/or the information regarding the advertisement recipient 30A and the feature of each virtual street in the virtual space, an advertisement to be provided may be determined in further consideration of a rule governing the platform 10A. The rule may be, for example, a rule related to a location and/or an advertisement recipient, such as an advertisement with an incentive cannot be provided to an advertisement recipient with a low reliability, an advertisement recipient with a high reliability can be provided with an advertisement in the virtual street T1, or an advertisement of an insurance product in the virtual street T3 cannot be provided.

In the platform 10A, a matter to be determined when the advertisement recipient is provided with an advertisement (that is, an advertisement to be provided to the advertisement recipient) may be automatically determined by using data and/or information regarding the advertisement recipient 30A and a feature of the virtual space or a feature of each virtual street in the virtual space, or using data and/or information regarding the advertisement recipient 30A and a feature of the virtual space or a feature and a rule of each virtual street in the virtual space. Consequently, provision of an advertisement is managed in a decentralized manner without the need for a centralized administrator.

### (Determination of matter to be determined when advertiser places advertisement and advertisement recipient is provided with advertisement)

In step S1A, as described above, the advertiser 20A accesses the platform 10A and requests to place an advertisement in the virtual space provided by the platform 10A. In this case, as described above, data and/or information regarding the advertiser 20A may be provided to the platform 10A. Each of the plurality of advertisers 20A may provide the platform 10A with data and/or information regarding the advertiser 20A.

In step S3A, as described above, the advertisement recipient 30A accesses the platform 10A and searches for an advertisement in the virtual space provided by the platform 10A. In this case, as described above, data and/or information regarding the advertisement recipient 30A may be provided to the platform 10A. Each of the plurality of advertisement recipients 30A may provide the platform 10A with data and/or information regarding the advertisement recipient 30A.

When the platform 10A receives data and/or information regarding the plurality of advertisers 20A and data and/or information regarding the plurality of advertisement recipients 30A, a combination of at least one advertiser of the plurality of advertisers 20A and at least one advertisement recipient of the plurality of advertisement recipients 30A is determined in the platform 10A. The combination of the advertiser and the advertisement recipient may be, for example, a common part (product set) between an advertisement recipient suitable for the advertiser and an advertiser that places an advertisement suitable for the advertisement recipient, and preferably a common part (product set) between an advertisement recipient optimal for the advertiser and an advertiser that places an advertisement optimal for the advertisement recipient. In the platform 10A, a combination of an advertiser and an advertisement recipient is determined by using data and/or information regarding the plurality of advertisement recipients 30A, data and/or information regarding the advertisement recipient 30A, and a feature of each virtual street in the virtual space.

For example, in a case where a combination of an advertiser and an advertisement recipient cannot be uniquely determined by using data and/or information regarding a plurality of advertisers 20A, data and/or information regarding the advertisement recipients 30A, and a feature of each virtual street in the virtual space, the combination of the advertiser and the advertisement recipient may be determined in further consideration of a rule governing the platform 10A. The rule may be that, for example, an advertiser that places an advertisement of an insurance product is not combined with an advertisement recipient with low reliability, or an advertiser that places an advertisement in the virtual street T2 is combined only with an advertisement recipient with high reliability.

When the combination of the advertiser and the advertisement recipient is determined, in step S5A, the advertiser 20A included in the combination provides the advertisement to the advertisement recipient 30A in order to provide the advertisement to the platform 10A included in the combination.

In step S6A, the advertisement recipient 30A included in the combination is provided with the advertisement provided by the advertiser 20A.

As described above, in the platform 10A, a combination of an advertiser and an advertisement recipient may be determined as a matter to be determined when the advertiser places an advertisement and the advertisement recipient is provided with the advertisement. The advertisement of the advertiser is provided to the advertisement recipient according to this combination, so that the advertiser can provide the advertisement to the suitable or optimal advertisement recipient, and the advertisement recipient can receive the suitable or optimal advertisement. This may lead to cost-effective advertising.

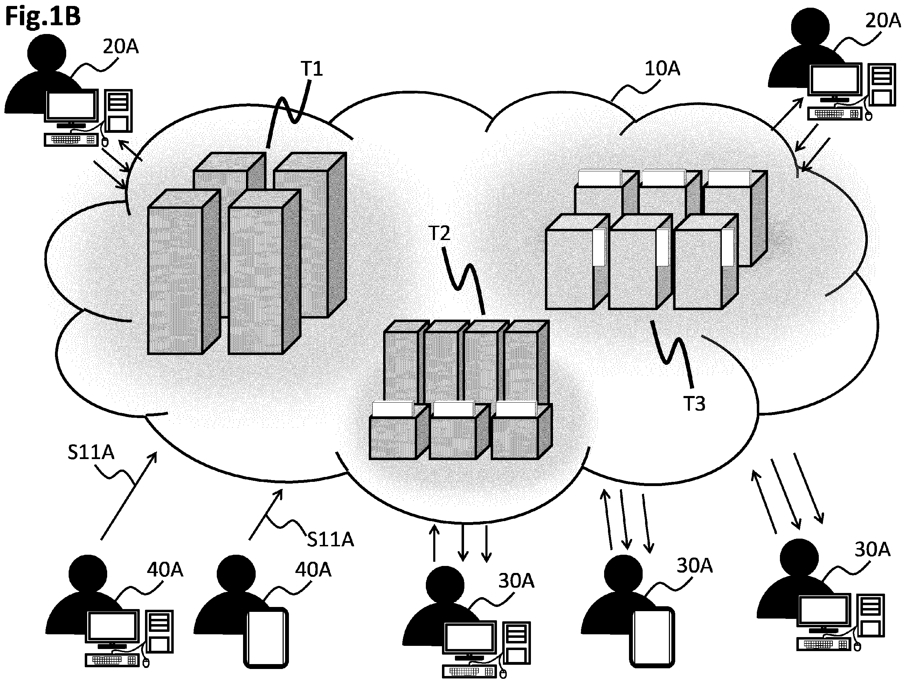

Fig. 1B schematically illustrates another example of a flow in the platform 10A for determining a matter to be determined for an advertisement. The example illustrated in Fig. 1B is similar to the example illustrated in Fig. 1A, except that a rule governing platform 10A can be changed by an interested party (stakeholder).

In step S11A, at least one interested party (stakeholder) 40A accesses the platform 10A and takes a vote to change the rule governing the platform 10A. The interested party 40A can access the platform 10A by using, for example, an own terminal device thereof (for example, a smartphone, a tablet terminal, a smartwatch, a smart glass, or a personal computer).

The interested party 40A has a voting right (for example, a governor token). For example, the interested party 40A has a voting right corresponding to an amount of the governor token that the interested party has. Therefore, the interested party 40A having many governor tokens will have many voting rights, which may be advantageous in voting. The governor token may be issued by a service provider of the platform 10A.

For example, in the platform 10A, some rule change candidates are presented, and the interested party 40A votes for a rule change candidate that the interested party wants to change. For example, voting may be performed on lowering a placement cost of a highly reliable advertiser, raising an amount of incentive for a highly reliable advertisement recipient, enabling placing an advertisement in a new virtual street, and the like.

A rule change candidate is adopted by a majority vote, and the rule is changed accordingly. In the platform 10A, the changed rule may be applied such that a matter to be determined when the advertiser places an advertisement (that is, placement conditions, preferably placement conditions suitable for the advertiser, more preferably placement conditions optimum for advertiser) is automatically determined by using data and/or information regarding the advertiser 20A and a feature of the virtual space or a feature and a rule of each virtual street in the virtual space, as described above. Alternatively, in the platform 10A, the changed rule may be applied such that a matter to be determined when the advertisement recipient is provided with the advertisement (that is, the advertisement to be provided to the advertisement recipient) is automatically determined by using data and/or information regarding the advertisement recipient 30A and a feature of the virtual space or a feature and a rule of each virtual street in the virtual space, as described above. Alternatively, in the platform 10A, the changed rule may be applied such that a matter to be determined when the advertiser places an advertisement and the advertisement recipient is provided with the advertisement (that is, a combination of the advertiser and the advertisement recipient) is automatically determined by using data and/or information regarding the plurality of advertisers 20A, data and/or information regarding the advertisement recipient 30A, and a feature and a rule of each virtual street in the virtual space, as described above. Consequently, it is possible to manage placement and provision of an advertisement in a decentralized manner without the need for a centralized administrator.

The rule is changed through voting so that, for example, an interested party having a governor token may be able to change the rule in a direction that the interested party desires and lead the advertisement industry in a direction that the interested party desires. In addition, by changing the rule, it is possible to dramatically change the way of placing an advertisement in the field, and for example, and it is possible to change the way of placing an advertisement in the field according to the trend or according to an actual situation of the world. This may contribute to development of the field (for example, a virtual space or a metaverse).

### 2B. Application to sales and purchases in electronic commerce

In one aspect, the above platform that can determine a matter to be determined when a player performs an action may be applied to purchase or sale in electronic commerce. Here, the player is a seller and/or a purchaser, and the field is a field in which electronic commerce is performed (for example, a virtual space provided by the platform or a shop in the virtual space). The platform may be accessed by a seller and/or a purchaser. For example, a seller may access the platform to sell a product or a service in the virtual space, and a purchaser may access the platform to purchase the product or the service in the virtual space. The product may be any product, for example a non-fungible token (NFT). For example, the purchaser can operate a resident (for example, an avatar) in the virtual space to purchase products or services sold in a shop in the virtual space.

In this platform, for example, an amount of a deposit to be paid by a seller in an electronic commerce may be determined as a matter to be determined when the seller in the electronic commerce sells a product or a service, and the seller may be required to pay the amount of the deposit when selling the product or the service. The seller can sell the product or the service in the electronic commerce by paying the determined amount of deposit. The deposit will be refunded to the seller when the seller provides the product or the service properly, that is, the seller fulfills the sales contract for the product or the service. For example, if the product sold by the seller is a counterfeit or a defective product or does not provide the service, the deposit will be forfeited. In a case where the purchaser has already paid for the product or the service, the purchaser may be reimbursed from the deposit. The amount of the deposit may be, for example, an amount of currency (for example, legal currency, electronic money, or virtual currency) available in the real world or an amount of currency or points available in the virtual space provided by the platform.

Alternatively, in the platform, for example, an amount of a deposit to be paid by a purchaser in the electronic commerce is determined as a matter to be determined when the purchaser in the electronic commerce purchases a product or a service, and the purchaser may be required to pay the amount of the deposit when purchasing the product or the service. The purchaser can purchase the product or the service in the electronic commerce by paying the determined amount of the deposit. The deposit will be refunded to the purchaser when the purchaser pays for the product or the service properly, that is, the purchaser fulfills the sales contract for the product or the service. For example, in a case where the purchaser fails to pay for the product or a service, the deposit will be forfeited. In a case where the seller has already provided the product or the service, the seller may be reimbursed from the deposit.

Alternatively, in this platform, for example, an amount of a deposit to be paid by a seller and an amount of a deposit to be paid by a purchaser in electronic commerce are determined as a matter to be determined when the seller sells a product or a service and the purchaser purchases the product or the service in the electronic commerce, and after both the seller and the purchaser pay the determined amount of deposit, the product or the service can be sold from the seller to the purchaser.

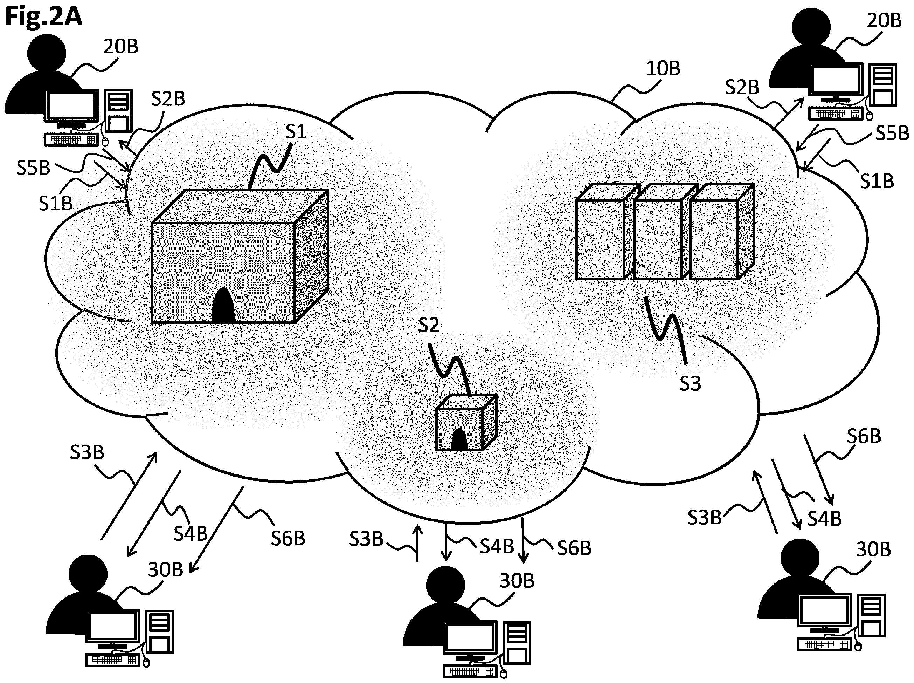

Fig. 2A schematically illustrates an example of a flow in the platform 10B for determining a matter to be determined with respect to an electronic commerce.

### (Determination of matter to be determined when seller sells product or a service)

In step S1B, the seller 20B accesses the platform 10B and requests to sell a product or a service in a virtual space provided by the platform 10B. The seller 20B may access the platform 10B, for example, by using an own terminal device thereof (for example, a smartphone, a tablet terminal, a smartwatch, a smart glass, or a personal computer) or a terminal device installed in a company of the seller.

In the example illustrated in Fig. 2A, the virtual space provided by the platform 10B includes a virtual shop S1, a virtual shop S2, and a virtual shop S3, and electronic commerce is performed in these virtual shops. For example, an avatar of a purchaser can visit the virtual shop S1, the virtual shop S2, or the virtual shop S3 and purchase products or services sold in the shop. The virtual shops have respective features. For example, as the features, the virtual shop S1 is a location where many avatars of a high-income group gather, the virtual shop S2 is a location where many avatars of an intermediate layer gather, and the virtual shop S3 is a location where many avatars of a family layer gather. For example, as the features, the virtual shop S1 is managed by a centralized administrator, and the virtual shop S2 and the virtual shop S3 are managed in a decentralized administrator. For example, the virtual space or the virtual shop has features that currency guaranteed to be valuable by Japanese yen is in circulation, currency guaranteed to be valuable by U.S. dollars is in circulation, currency guaranteed to be valuable by gold is in circulation, or currency not guaranteed to be valuable is in circulation.

The seller 20B may designate which virtual shop in the virtual space to sell a product or a service. Alternatively, the seller 20B may create a new virtual shop in the virtual space.

When requesting to sell a product or a service, the seller 20B may provide data and/or information regarding the seller 20B to the platform 10B.

Here, the data regarding the seller is objective details regarding the seller, and is similar to the data regarding the advertiser described above.

Here, the information regarding the seller is subjective details with the seller as the subject, and is similar to the information regarding the advertiser described above.

The seller 20B may provide the data and/or the information regarding the seller 20B to the platform 10B via, for example, an own terminal device thereof. Alternatively, the seller 20B may provide the data and/or the information regarding the seller 20B to the platform 10B via, for example, an IoT device associated with the seller 20B.

When the platform 10B receives the data and/or the information regarding the seller 20B, the platform 10B determines an amount of a deposit to be paid by the seller 20B in electronic commerce. In the platform 10B, the amount of the deposit is determined by using data and/or information regarding the seller 20B and a feature of the virtual space in which the seller 20B sells the product or the service or a feature of the virtual shop in which the seller 20B sells the product or the service.

The amount of the deposit can be determined, for example, in response to receiving a purchase request for the product or the service sold by the seller 20B from the purchaser 30B. In this case, in the platform 10B, in addition to the data and/or the information regarding the seller 20B and the feature of the virtual space in which the seller 20B sells the product or the service or the feature of the virtual shop in which the seller 20B sells the product or the service, the amount of the deposit may be determined by using data of the product or the service for which the purchase request is made. As a result, the amount of the deposit corresponding to the product or a service to be purchased can be determined.

In step S2B, the amount of the deposit determined in the platform 10B is presented to the seller 20B. The seller 20B can sell the product or the service in the virtual space or the virtual shop by paying the presented amount of deposit.

As described above, in the platform 10B, an amount of a deposit to be paid by the seller 20B in electronic commerce may be determined as a matter to be determined when the seller sells a product or a service.

For example, in a case where an amount of a deposit cannot be uniquely determined by using the data and/or the information regarding the seller 20B and the feature of the virtual space or the feature of each virtual shop in the virtual space (in addition thereto, data of a product or a service to be purchased), the amount of the deposit may be determined in further consideration of a rule governing the platform 10B. The rule may be, for example, a rule related to a location and/or a seller, such as an amount of a deposit is 1.5 times for a seller with low reliability when a product or a service is to be sold in the virtual shop S1, an amount of a deposit is set to 50% of a price of a product to be sold for a seller with high reliability, or an amount of a deposit of a product in the virtual shop S3 is uniformly set to 100 USD.

In the platform 10B, by using data and/or information regarding the seller 20B and a feature of the virtual space or a feature of each virtual shop in the virtual space (in addition thereto, data of a product or a service to be purchased) or using data and/or information regarding the seller 20B and a feature of the virtual space or a feature and a rule of each virtual shop in the virtual space (in addition thereto, data of a product or a service to be purchased), a matter to be determined when a seller sells a product or a service (that is, an amount of a deposit, preferably an amount of a deposit suitable for a product or a service to be purchased) may be automatically determined. The deposit in electronic commerce is particularly useful in the absence of an administrator managing proper electronic commerce. When an administrator is present, the administrator can curb fraudulent electronic commerce by monitoring fraudulent electronic commerce (for example, sales of counterfeits or defective products and non-payment of fees) and imposing penalties on those who have done fraudulent electronic commerce, but this is not possible when an administrator is absent. By adopting a mechanism of forfeiting deposits in a case where both a seller and a purchaser are caused to pay deposits and fraudulent electronic commerce is performed, fraudulent electronic commerce can be curbed, and appropriate electronic commerce can be promoted even in a case where an administrator is absent. Consequently, it is possible to manage sales in electronic commerce in a decentralized manner without the need for a centralized administrator.

### (Determination of matter to be determined when purchaser purchases product or service)

In step S3B, a purchaser 30B accesses the platform 10B and requests to purchase a product or a service in the virtual space provided by the platform 10B. The purchaser 30B can access the platform 10B by using, for example, an own terminal device thereof (for example, a smartphone, a tablet terminal, a smartwatch, a smart glass, or a personal computer).

The purchaser 30B can designate which virtual shop in the virtual space to purchase a product or a service and request to purchase the product or the service. Alternatively, the seller 20B may search for a product sold in the virtual space and request to purchase a product or a service.

The purchaser 30B may provide data and/or information regarding the purchaser 30B to the platform 10B when requesting to purchase a product or a service.

Here, the data regarding the purchaser is similar to the data regarding the seller, and is objective details regarding the purchaser.

Here, the information regarding the purchaser is similar to the information regarding the seller, and is subjective details with the purchaser as the subject.

The purchaser 30B can provide data and/or information regarding the purchaser 30B to the platform 10B via, for example, its own terminal device. Alternatively, the purchaser 30B may provide data and/or information regarding the purchaser 30B to the platform 10B via, for example, an IoT device associated with the seller 20B.

When the platform 10B receives the data and/or the information regarding the purchaser 30B, the platform 10B determines an amount of a deposit to be paid by the purchaser 30B in electronic commerce. In the platform 10B, the amount of the deposit is determined by using the data and/or the information regarding the purchaser 30B and the feature of the virtual space in which the purchaser 30B purchases a product or a service or the feature of the virtual shop in which the purchaser 30B purchases the product or the service.

The amount of the deposit may be determined, for example, in response to receiving a purchase request for the product or the service from the purchaser 30B. In this case, in the platform 10B, in addition to the data and/or the information regarding the purchaser 30B and the feature of the virtual space in which the purchaser 30B purchases the product or the service or the feature of the virtual shop in which the purchaser 30B purchases the product or the service, the amount of the deposit may be determined by using data of the product or the service for which the purchase request is made. As a result, the amount of the deposit corresponding to the product or a service to be purchased can be determined.

In step S4B, the amount of the deposit determined in the platform 10B is presented to the purchaser 30B. The purchaser 30B can purchase a product or a service in the virtual space or the virtual shop by paying the presented amount of the deposit.

As described above, in the platform 10B, an amount of a deposit that the purchaser 30B should pay in an electronic commerce may be determined as a matter to be determined when the purchaser purchases a product or a service.

For example, in a case where the amount of the deposit cannot be uniquely determined by using the data and/or the information regarding the purchaser 30B and the feature of the virtual space or the feature of each virtual shop in the virtual space (in addition thereto, data of the product or the service to be purchased), the amount of the deposit may be determined in further consideration of a rule governing the platform 10B. The rule may be a rule related to a location and/or a purchaser, such as an amount of a deposit is 1.5 times for a purchaser with low reliability when a product or a service is purchased in the virtual shop S1, an amount of a deposit is set to 30% of a price of a product to be purchased for a purchaser with high reliability, or an amount of a deposit of a product in the virtual shop S3 is uniformly set to 100 USD.

In the platform 10B, by using data and/or information regarding the purchaser 30B and a feature of the virtual space or a feature of each virtual shop in the virtual space (in addition thereof, data of a product or a service to be purchased), or using data and/or information regarding the purchaser 30B and a feature of the virtual space or a feature and a rule of each virtual shop in the virtual space (in addition thereof, data of a product or a service to be purchased), a matter to be determined when the purchaser purchases a product or a service (that is, an amount of a deposit, preferably an amount of a deposit suitable for a product or a service to be purchased) may be automatically determined. Consequently, it is possible to manage purchases in electronic commerce in a decentralized manner without the need for a centralized administrator.

### (Determination of matter to be determined when seller sells product or service and purchaser purchases product or service)

In step S1B, as described above, the seller 20B accesses the platform 10B and requests to sell a product or a service in the virtual space provided by the platform 10B. In this case, as described above, data and/or information regarding the seller 20B may be provided to the platform 10B.

In step S3B, the platform 10B is accessed and a request to purchase a product or a service in the virtual space provided by the platform 10B is made, as described above. In this case, as described above, data and/or information regarding the purchaser 30B may be provided to the platform 10B.

When the purchaser 30B requests to purchase the product or the service that the seller 20B requests to sell, the platform 10B determines an amount of a deposit for trading of the product or the service from the seller 20B to the purchaser 30B.

As described above, the amount of the deposit to be paid by the seller 20B is determined by using the data and/or the information regarding the seller 20B and the feature of the virtual space in which the seller 20B sells the product or the service or the feature of the virtual shop in which the seller 20B sells the product or the service. Alternatively, the amount of the deposit to be paid by the seller 20B is determined by using the data and/or the information regarding the seller 20B, the feature of the virtual space in which the seller 20B sells the product or the service or the feature of the virtual shop in which the seller 20B sells the product or the service, and the data of the product or the service to be purchased.

As described above, the amount of the deposit to be paid by the purchaser 30B is determined by using the data and/or the information regarding the purchaser 30B and the feature of the virtual space in which the purchaser 30B purchases the product or the service or the feature of the virtual shop in which the purchaser 30B purchases the product or the service. Alternatively, the amount of the deposit to be paid by the purchaser 30B is determined by using the data and/or the information regarding the purchaser 30B, the feature of the virtual space in which the purchaser 30B purchases the product or a service or the feature of the virtual shop in which the purchaser 30B purchases the product or a service, and the data of the product or a service to be purchased.

When the amount of the deposit is determined for trading of the product or the service from the seller 20B to the purchaser 30B, the seller 20B and the purchaser 30B are required to pay the respective deposits. The platform 10B can detect whether the respective deposits have been paid.

When it is detected that both the seller 20B and the purchaser 30B have paid the respective deposits, in step S5B, the seller 20B can sell the product or the service to the purchaser 30B, and in step S6B, the purchaser 30B can purchase the product or the service from the purchaser 30B. As a result, the trading of the product or the service from the seller 20B to the purchaser 30B is achieved.

As described above, in the platform 10B, an amount of a deposit to be paid by the seller and an amount of a deposit to be paid by the purchaser in the electronic commerce are determined as a matter to be determined when the seller sells a product or a service and the purchaser purchases a product or a service, and after both the seller and the purchaser pay the determined amounts of the deposits, trading of the product or the service between the seller and the purchaser are enabled. Consequently, it is possible to facilitate proper electronic commerce even in the absence of an administrator of the electronic commerce and thus to further manage the platform 10B in a decentralized manner without the need for a centralized administrator.

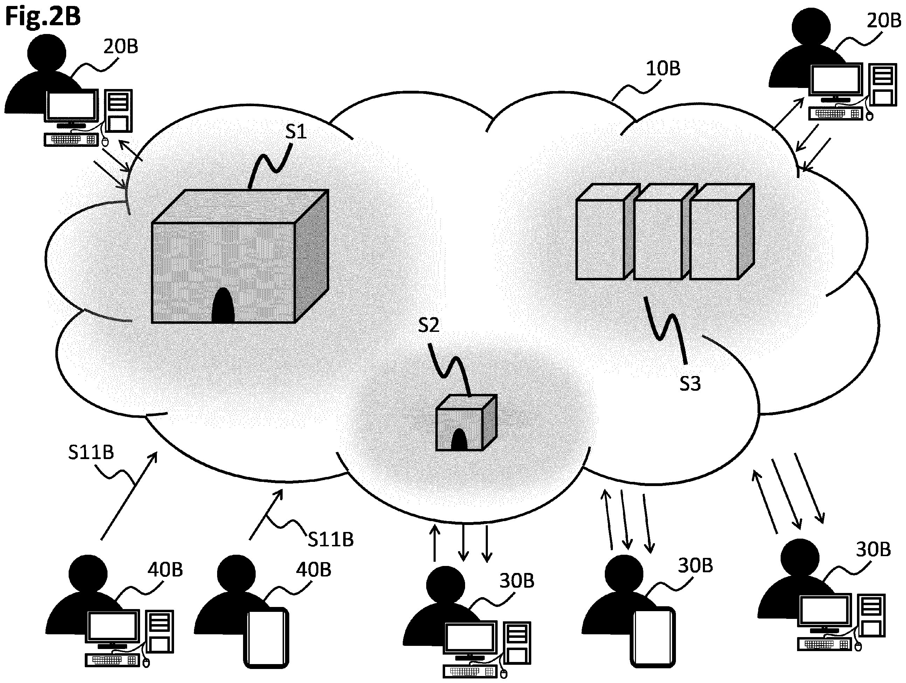

Fig. 2B schematically illustrates another example of a flow in the platform 10B for determining a matter to be determined for electronic commerce. The example illustrated in Fig. 2B is similar to the example illustrated in Fig. 2A, except that a rule governing the platform 10B can be changed by an interested party (stakeholder).

In step S11B, at least one interested party (stakeholder) 40B accesses the platform 10B and takes a vote to change a rule governing the platform 10B. The interested party 40B can access the platform 10B by using, for example, an own terminal device thereof (for example, a smartphone, a tablet terminal, a smartwatch, a smart glass, or a personal computer).

The interested party 40B has a voting right (for example, a governor token). For example, the interested party 40B has a voting right corresponding to an amount of the governor token that the interested party has. Therefore, the interested party 40B having many governor tokens will have many voting rights, which may be advantageous in voting. The governor token may be issued by a service provider of the platform 10B.

For example, in the platform 10B, some rule change candidates are presented, and the interested party 40B votes for a rule change candidate that the interested party wants to change. For example, voting may be performed on lowering an amount of a deposit of a seller with high reliability, raising an amount of a deposit of a purchaser with low reliability, raising an amount of a deposit in the virtual shop S1, and the like.

A rule change candidate is adopted by a majority vote, and the rule is changed accordingly. In the platform 10B, the changed rule may be applied such that a matter to be determined when a seller sells a product or a service (that is, an amount of a deposit, preferably an amount of a deposit suitable for a product or a service to be purchased) is automatically determined by using data and/or information regarding the seller 20B and a feature of the virtual space or a feature and a rule of each virtual shop in the virtual space, as described above. Alternatively, in the platform 10B, the changed rule may be applied such that a matter to be determined when a purchaser purchases a product or a service (that is, an amount of a deposit, preferably an amount of a deposit suitable for a product or a service to be purchased) is automatically determined by using data and/or information regarding the purchaser 30B and a feature of the virtual space or a feature and a rule of each virtual shop in the virtual space, as described above. Alternatively, in the platform 10B, the changed rule may be applied such that a matter to be determined when a seller sells a product or a service and a purchaser purchases a product and a service (that is, an amount of a deposit of each of the seller and the purchaser and paying of the deposit) by using data and/or information regarding the purchaser 30B and a feature and a rule of each virtual shop in the virtual space. Consequently, it is possible to manage trading in electronic commerce in a decentralized manner without the need for a centralized administrator.

The rule is changed through voting so that, for example, an interested party having a governor token may be able to change the rule in a direction that the interested party desires and lead the electronic commerce industry in a direction that the interested party desires. In addition, by changing the rule, it is possible to dramatically change a form of electronic commerce in a field, and for example, it is possible to change a sales aspect of a product or a service in the field according to a trend or according to an actual situation of the world. This may contribute to development of the field (for example, a virtual space or a metaverse).

### 2C. Application to betting in e-sports

In one aspect, the above platform that can determine a matter to be determined when a player performs an action may be applied to betting in e-sports. Here, the player is a player of an e-sport and/or a spectator of an e-sport, and the field is a field (for example, a virtual space in which the e-sport is performed) in which the e-sport is performed. This platform may be accessed by players of e-sports and/or spectators of e-sports. A player of an e-sport can access this platform and play the e-sport. A spectator of an e-sport can access this platform to watch the e-sport, and further, can also make a bet as a user who makes a bet. For example, a sponsor of an e-sport may appeal to players and spectators of the e-sport by placing an advertisement on this platform.

In this platform, for example, odds of betting in an e-sport may be determined as a matter to be determined when a player of the e-sport plays the e-sport, and the odds of betting may be presented to a person (for example, a spectator) who makes a bet when the player of the e-sport plays the e-sport. Odds of betting in e-sports, preferably suitable odds, more preferably optimal odds, may be determined and provided to a person who makes a bet.

In the present specification, an "e-sport" is an abbreviation of an "electronic sport", and in a broad sense, is a competition performed by using an electronic device. In a narrow sense, an "e-sport" is a competition when a competition using a computer game or a video game is regarded as a sport competition. E-sport competitions include, but are not limited to, sports games, as well as shooting games, simulation games, fighting games, racing games, puzzle games, card games, and RPGs. In the present example, a golf game will be described as an example of an e-sport competition.

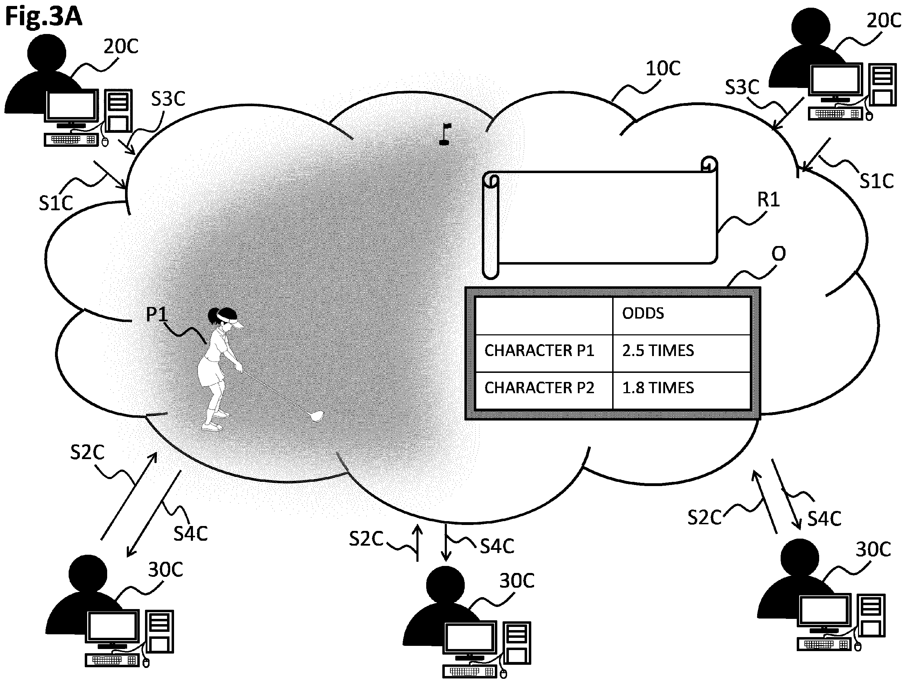

Fig. 3A schematically illustrates an example of a flow in a platform 10C for determining a matter to be determined for an e-sport.

In step S1C, two players 20C access the platform 10C and enter a golf game in the platform 10C. The two players 20C can access the platform 10C by using, for example, own terminal devices thereof (for example, a smartphone, a tablet terminal, a smartwatch, a smart glass, or a personal computer). In the golf game, the first player 20C operates a character P1, and the second player 20C operates a character P2 (not illustrated), so that the first player and the second player battle against each other.

In the present example, a golf game battle between two players 20C is described, but the number of players and the battle form are not limited thereto. For example, the battle may be a battle between three or more players, or a battle between one player and a computer player (non-player character: NPU). The computer player may be, for example, an avatar or a digital clone that copies features of a player. The battle may be a team battle or an individual battle.

The golf game is played on a virtual golf course provided by the platform 10C. In the golf game, there are rules, and in platform 10C, a rule R1 is illustrated. The two players 20C will play the golf game according to the rule R1. The golf game has features associated with a play method (how to play). The virtual golf course may have features. For example, the virtual golf course has features such as a location where many avatars of a high-income group gather, a location where many avatars of a middle group gather, or a location where many avatars of a family group gather. For example, the virtual golf course has features such as being managed by a centralized administrator or being managed in a decentralized manner. For example, the virtual golf course has features that currency guaranteed to be valuable by Japanese yen is in circulation, currency guaranteed to be valuable by U.S. dollars is in circulation, currency guaranteed to be valuable by gold is in circulation, or currency not guaranteed to be valuable is in circulation.

The two players 20C may each provide data and/or information regarding the player to the platform 10C when entering the golf game.

Here, the data regarding the player is objective details regarding the player, and is similar to the data regarding the advertiser described above. The data regarding the player may include personal details of the player. Since details regarding the game such as records of the game is stored in the platform 10C, the details needs not be included in the data regarding the player.

Here, the information regarding the player is subjective details with the player as the subject, and is similar to the information regarding the advertiser described above.

Each of the two players 20C may provide the platform 10C with data and/or information regarding the player via, for example, an own terminal device thereof. Alternatively, each of the two players 20C may provide data and/or information regarding the player to the platform 10C, for example, via an IoT device associated with the player.

When the players 20A and 20B enter the game, odds of betting in the golf game are determined. In the present specification, the odds are odds of a payout when a betting is won. For example, if betting with the odds of 2.5 times is won, the payout will be 2.5 times a wager.

The odds of betting in the golf game are automatically determined based on data and/or information regarding each player 20C and a feature of the virtual golf course. In addition to the data and/or the information regarding each player 20C and the feature of the virtual golf course, the odds may also be determined by taking into consideration of a record in the golf game. However, the record of the game is not essential. Therefore, even in a case where the two players 20C play a battle for the first time (that is, in a case where there is no battle record between the first player and the second player), appropriate odds may be determined. Even in a case where one or both of the two players 20C are playing the golf game itself for the first time (that is, in a case where one of the two players 20C do not have a record or neither thereof have the record), appropriate odds may be determined.

For example, in a case where the odds of betting in the golf game cannot be uniquely determined by using data and/or information regarding the player and a feature of the virtual golf course, the odds of the betting may be determined in further consideration of a rule governing the platform 10C (or the rule R1 of the golf game). The rule may be, for example, a rule related to a player, such as raising the odds of a highly reliable player by 5% or lowering the odds of a player playing for the first time by 1%, or may be a rule of a golf game, such as including a 6-inch place.

In the platform 10C, determined odds O are illustrated. In the example illustrated in Fig. 3A, the odds in a case where the character P1 wins the golf game are illustrated as 2.5 times, and the odds in a case where the character P2 wins the golf game are illustrated as 1.8 times. In the golf game, since the second player 20C is determined to be more advantageous, the odds of the character P2 are lower than the odds of the character P1.

Note that, in the present example, the description will be made of betting on winning and losing of the character P1 and the character P2 in the golf game, but the content of the betting is not limited thereto. The betting may be performed on any matter other than winning and losing in the golf game. Betting may be performed on, for example, the longest distance (which character achieves the longest distance? maximum distance is 300 yards or more? or the like), and betting may be performed on, for example, a distance to a pin (which character is closest to the pin in the first hit? shortest distance to pin is 5 yards or less? or the like).

In step S2, at least one spectator 30C accesses the platform 10C and bets on the golf game of the two players 20C. At least one spectator 30C can access the platform 10C by using, for example, an own terminal device thereof (for example, a smartphone, a tablet terminal, a smartwatch, a smart glass, or a personal computer). The spectator 30C checks the odds O, predicts which of the two players 20C will win, and applies a wager on a character who is considered to win. The wager may be, for example, currency (or points) dedicated to the platform 10C, virtual currency, or legal currency. The spectator 30C may provide the wager to platform 10C by using any means.

When the betting by the spectator 30C is completed, in step S3C, the two players 20CB play the golf game on the platform 10C.

When the golf game is completed, winning or losing of the betting is determined, and the spectator 30C is notified of the result of the betting in step S4. In a case where the spectator 30C wins the betting, a payout is also provided. The payout may be, for example, currency (or points) dedicated to the platform 10C, virtual currency, or legal currency. The payout is preferably in the same currency as the wager. The payout may be provided to the spectators 30C by using any means. A prize money may be provided to a player who wins the golf game. As a result, the player's participation in the game can be promoted.

As described above, in the platform 10C, the odds of betting on an e-sport may be determined as a matter to be determined when a player of the e-sport plays the e-sport. A spectator of an e-sport may perform betting based on the determined odds of the bet. Consequently, it is possible to manage betting in e-sports in a decentralized manner without the need for a centralized administrator.

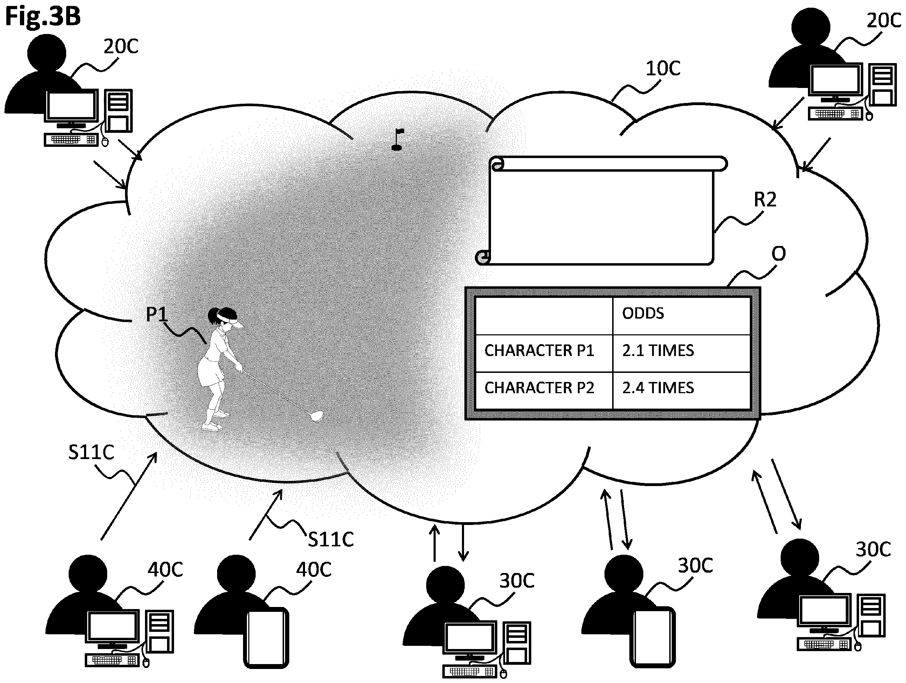

Fig. 3B schematically illustrates another example of a flow in the platform 10C for determining a matter to be determined for e-sports. The example illustrated in Fig. 3B is similar to the example illustrated in Fig. 3A, except that rules of an e-sport can be changed by an interested party (stakeholder).

In step S11C, at least one interested party (stakeholder) 40C accesses the platform 10C and takes a vote to change a rule governing the platform 10C. The interested party 40C can access the platform 10C by using, for example, an own terminal device thereof (for example, a smartphone, a tablet terminal, a smartwatch, a smart glass, or a personal computer).

The interested party 40C has a voting right (for example, a governor token). For example, the interested party 40C has a voting right corresponding to an amount of the governor token that the interested party has. Therefore, the interested party 40C having many governor tokens will have many voting rights, which may be advantageous in voting. The governor token may be issued by a service provider of the platform 10C.

For example, in the platform 10C, some rule change candidates are presented, and the interested party 40C votes for a rule change candidate that the interested party wants to change. For example, in a golf game, voting is performed on whether or not to include no OB in a rule, whether or not to include a mulligan in a rule, whether or not to include a 6-inch place in a rule, and the like.

A rule change candidate is adopted by a majority vote, and the rule is changed accordingly. In the platform 10C, the changed rule may be applied such that the odds of betting is automatically determined by using data and/or information regarding the player 20C and a feature and a rule R2 of the virtual golf course, as described above.

In the platform 10C, determined odds O are illustrated. In the example illustrated in Fig. 3B, the odds in a case where the character P1 wins the golf game are illustrated as 2.1 times, and the odds in a case where the character P2 wins the golf game are illustrated as 2.4 times. In the golf game in the rule R2 after the change, the odds of the character P1 are lower than the odds of the character P2 because the first player is determined to be somewhat more advantageous.

The spectators 30 may perform betting based on the determined odds.

As described above, by providing the platform 10C, the player 20C may play the golf game, the spectator 30C may watch the golf game and perform betting in the golf game, and the sponsor may place an advertisement in the golf game. In particular, the odds of the betting in the golf game are appropriately determined based on the rule 11' after the change of the golf game and the data and/or the information regarding each player 20C, so that the spectator 30 can perform appropriate betting. The rule is changed through voting so that, for example, mannerization of the game is curbed, and a constantly fresh and unexpected user experience can be provided to the player 20C and the spectator 30. This may contribute to development of the field (for example, a virtual space or a metaverse).

In the example described above, betting in e-sports has been described as a target, but the present invention is not limited thereto. The present invention may be applied to betting in any competition. In the present specification, competition indicates that a player competes for winning/losing or superiority/inferiority according to a rule. Here, the player may include not only a human, but also a real-world object such as an animal, a plant, a robot, and the like, and a virtual world object such as an avatar. Therefore, the competition includes, in addition to the e-sports performed in the virtual world as described above, sports performed in the real world, public competitions such as horse racing, bicycle racing, and boat racing, casino games, and mahjong, but is not limited thereto.

### 2D. Application to management of building

In one aspect, the above platform that can determine a matter to be determined when a player performs an action as described above can be applied to management of a building. Here, the player is a cleaning company and the field is a building to be managed. This platform can be accessed by a cleaning company. For example, the cleaning company may access this platform and make bids to determine a cleaning company to be in charge of cleaning of a building to be managed. The building to be managed may be, for example, a building standing in the real world or a building standing in a virtual space.

In this platform, for example, a cleaning company in charge of cleaning of a building to be managed may be determined as a matter to be determined when the cleaning company cleans the building in managing the building. The determined cleaning company is entrusted with cleaning work of the building.

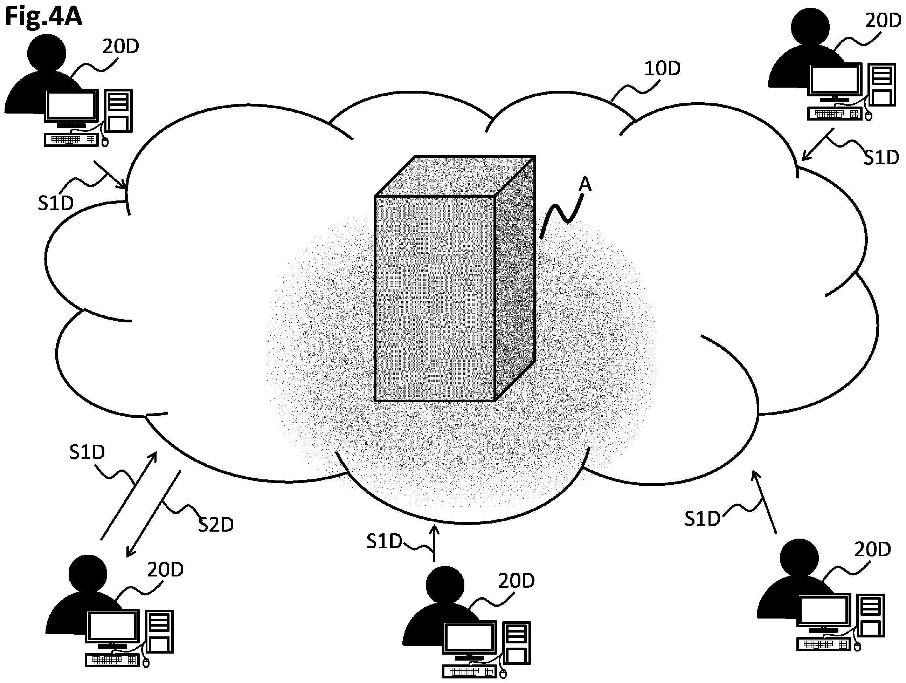

Fig. 4A schematically illustrates an example of a flow in the platform 10D for determining a matter to be determined for building management.

In step S1D, the cleaning company 20D may access the platform 10D and make bids to determine a cleaning company to be in charge of cleaning of the building in the platform 10D. The cleaning company 20D can access the platform 10D by using, for example, a terminal device (for example, a smartphone, a tablet terminal, a smartwatch, a smart glass, or a personal computer) installed in the cleaning company 20D. Each of a plurality of cleaning companies 20D may access the platform 10D and make bids to determine a cleaning company to be in charge of cleaning of the building in the platform 10D. Fig. 4A illustrates five cleaning companies 20D.

In the example illustrated in Fig. 4A, a building A stands in a virtual space provided by platform 10D, which may or may not be a digital clone of a building as it stands in the real world. The building A has features associated with aspects of management. For example, the building A has a feature of being managed by a centralized administrator or being managed in a decentralized manner. For example, the building A has features that currency guaranteed to be valuable by Japanese yen is in circulation, currency guaranteed to be valuable by U.S. dollars is in circulation, currency guaranteed to be valuable by gold is in circulation, or currency not guaranteed to be valuable is in circulation.

The cleaning company 20D may provide data and/or information regarding the cleaning company 20D to the platform 10D when making bids to determine a cleaning company to be in charge of cleaning of the building A.

Here, the data regarding the cleaning company is objective details regarding the cleaning company, and is similar to the data regarding the advertiser described above.

Here, the information regarding the cleaning company is subjective details with the cleaning company as the subject, and is similar to the information regarding the advertiser described above.

The cleaning company 20D may provide data and/or information regarding the cleaning company 20D to the platform 10D via, for example, an terminal device of the cleaning company 20D. Alternatively, the cleaning company 20D may provide data and/or information regarding the cleaning company 20D to the platform 10D via, for example, an IoT device associated with the cleaning company 20D. Each of the plurality of cleaning companies 20D provides data and/or information regarding the cleaning company 20D to the platform 10D.

When the platform 10D receives data and/or information regarding the plurality of cleaning companies 20D, a cleaning company in charge of cleaning of the building A is determined from the plurality of cleaning companies in the platform 10D. In the platform 10D, the data and/or the information regarding the cleaning company 20D and a feature of the building A are used to determine a cleaning company in charge of cleaning of the building A.

In step S2D, cleaning work is entrusted to the cleaning company 20D determined to be in charge of cleaning in the platform 10D. The entrusted cleaning company 20D will perform the cleaning work of the building A.

As described above, in the platform 10D, a cleaning company in charge of cleaning the building can be determined as a matter to be determined when the cleaning company cleans the building.

For example, in a case where a cleaning company in charge of cleaning cannot be uniquely determined by using the data and/or the information regarding the cleaning company 20D and the feature of the building A, a cleaning company in charge of cleaning may be determined in further consideration of a rule governing the platform 10D. The rule may be, for example, selecting, as a cleaning company in charge of cleaning, a cleaning company with the lowest price, or selecting, as a cleaning company in charge of cleaning, a cleaning company with a large employee scale.

In the platform 10D, by using data and/or information regarding the cleaning company 20D and a feature of the building A or data and/or information regarding the cleaning company 20D and a feature and a rule of the building A, a matter to be determined when the cleaning company cleans the building (that is, the cleaning company in charge of cleaning) may be automatically determined. In the above-described example, it has been described that a cleaning company is determined as a part of the building management work, but building management work in which the platform 10D can determine a matter to be determined is not limited thereto. As long as data and/or information regarding a player in the building management work and a feature of the building A can be used to determine a matter, the platform 10D can determine a matter to be determined for any building management work. Consequently, it is possible to manage building management work in a decentralized manner without the need for a centralized administrator.

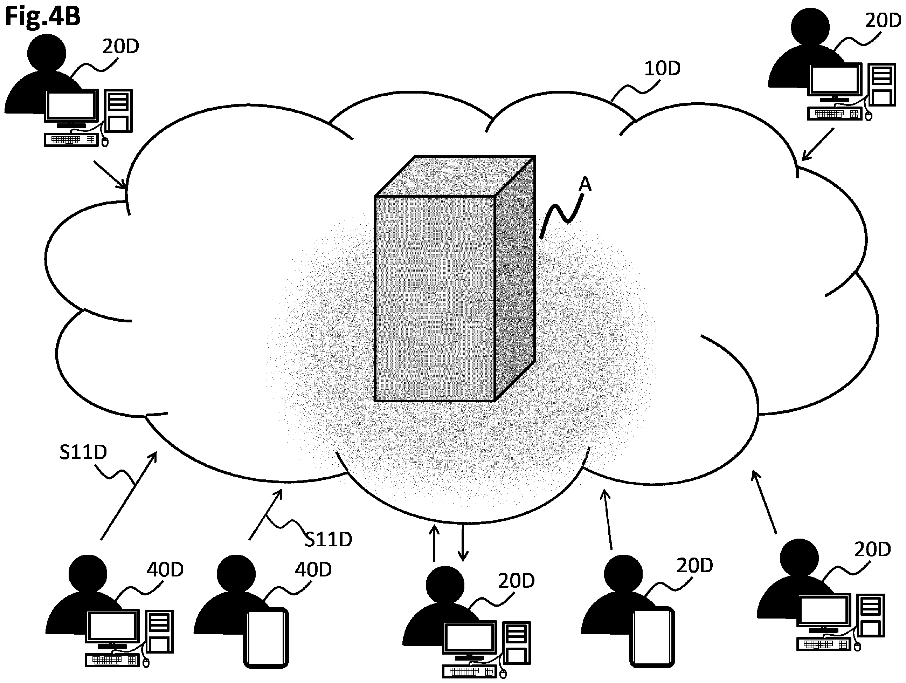

Fig. 4B schematically illustrates another example of a flow in the platform 10D for determining a matter to be determined for building management. The example illustrated in Fig. 4B is similar to the example illustrated in Fig. 4A, except that a rule governing platform 10D can be changed by an interested party (stakeholder).

In step S11D, at least one interested party (stakeholder) 40D accesses the platform 10D and takes a vote to change a rule governing the platform 10D. The interested party 40D can access the platform 10D by using an own terminal device thereof (for example, a smartphone, a tablet terminal, a smartwatch, a smart glass, or a personal computer), for example.

The interested party 40D has a voting right (for example, a governor token). For example, the interested party 40D has a voting right corresponding to an amount of the governor token that the interested party has. Therefore, the interested party 40D having many governor tokens will have many voting rights, which may be advantageous in voting. The governor token may be issued by a service provider of the platform 10D.

For example, in the platform 10D, some rule change candidates are presented, and the interested party 40D votes for a rule change candidate that the interested party wants to change. For example, voting may be performed on whether to give priority to a cheap company or give priority to a careful company.

A rule change candidate is adopted by a majority vote, and the rule is changed accordingly. In the platform 10D, the changed rule may be applied such that a matter to be determined when a cleaning company cleans a building (for example, a cleaning company in charge of cleaning) is automatically determined by using data and/or information regarding a player (for example, the cleaning company 20D) in the building management work and a feature and a rule of the building A. Consequently, it is possible to manage building management work in a decentralized manner without the need for a centralized administrator.

The rule is changed through voting so that, for example, an interested party having a governor token may be able to change the rule in a direction that the interested party desires and lead the building management work in a direction that the interested party desires. In addition, by changing the rule, it is possible to dramatically change the manner of building management in a field, and for example, it is possible to change the manner of building management in the field according to a trend or an actual situation of the world. This may contribute to development of the field (for example, a virtual space or a metaverse).

The platforms 10A, 10B, 10C, and 10D described above are examples of specific applications of platforms that can determine a matter to be determined when a player performs an action, and are not limited to these applications. The present invention can be applied to any application as long as a matter to be determined when a player performs an action can be determined from details regarding a player for the action and details regarding a field in which the action is performed. The platform that can determine a matter to be determined when a player performs an action may be implemented, for example, by a system that determines a matter to be determined when a player performs an action, described below.

### 3. Configuration of system that determines matter to be determined when player performs action

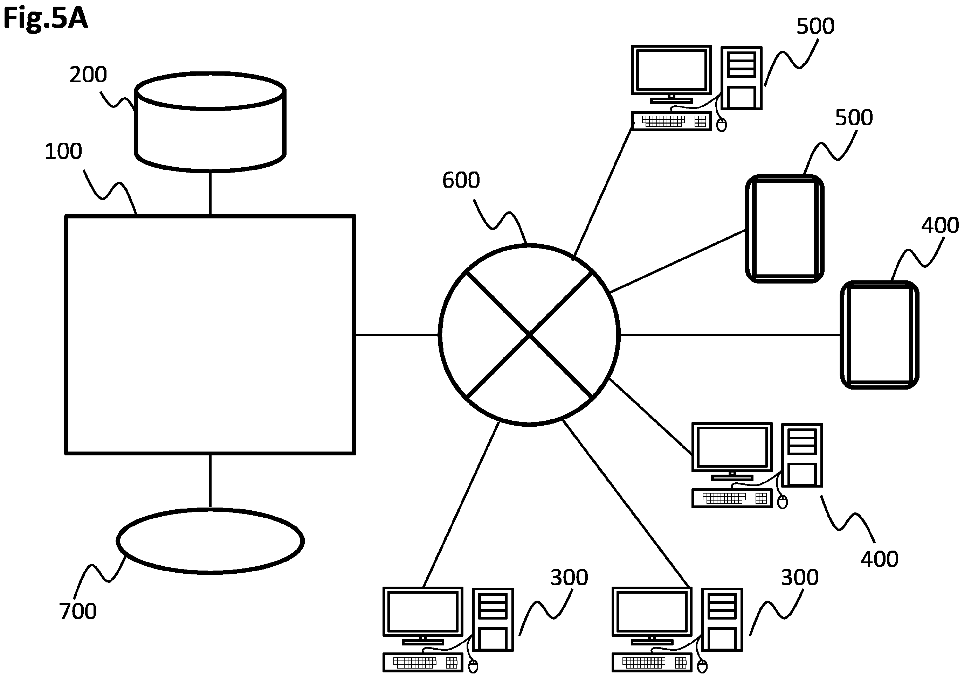

Fig. 5A illustrates an example of a configuration of a system 100 that determines a matter to be determined when a player performs an action.

The system 100 is connected to a database unit 200. The system 100 is also connected to at least one first player terminal device 300, at least one second player terminal device 400, and at least one voter terminal device 500 via a network 600.

Note that, in Fig. 5A, two first player terminal devices 300, two second player terminal devices 400, and two voter terminal devices 500 are illustrated, but the number of first player terminal devices 300, second player terminal devices 400, and voter terminal devices 500 is not limited thereto. Any number of first player terminal devices 300, any number of second player terminal devices 400, and any number of voter terminal devices 500 may be connected to the system 100 via the network 600. For example, in a case where there is no second player performing an action, the second player terminal device 400 may be omitted. For example, in a case where the first player and/or the second player also serve as a voter, the voter terminal device 500 may be omitted.

The network 600 may be any type of network. The network 600 may be, for example, the Internet or a LAN. The network 600 may be a wired network or a wireless network.

The system 100 is further connected to a blockchain network 700. The blockchain network 700 is a network constructed by a blockchain technology, and may be used to manage details regarding a player. Since falsification of details to be managed can be easily detected by using the blockchain technology, it is substantially impossible to falsify personal details managed by the blockchain network 700. information managed in the blockchain network 700 may be used to calculate a first score and/or a third score representing a feature of a player.

Note that, although it has been described that personal details is managed by using the blockchain technology, the present invention is not limited to the blockchain technology. Any technology can be used to construct the blockchain network 700 as long as details can be managed in such a manner that falsification is not possible.

For example, in a case where the system 100 is applied to placing an advertisement or being provided with an advertisement, the system 100 may be a computer (for example, a server device) installed in a service provider that provides the platform 10A for determining a matter to be determined for the advertisement. The first player may be the advertiser 20A, and the first player terminal device 300 may be a computer (for example, a terminal device) used by the advertiser 20A. The second player may be the advertisement recipient 30A, and the second player terminal device 400 may be a computer (for example, a terminal device) used by the advertisement recipient 30A. The voter may be a stakeholder related to an advertisement (for example, a person who has a governor token related to the advertisement), and the voter terminal device 500 may be a computer (for example, a terminal device) used by the stakeholder.

For example, in a case where the system 100 is applied to purchase or selling in electronic commerce, the system 100 may be a computer (for example, a server device) installed in a service provider that provides the platform 10B for determining a matter to be determined for the electronic commerce. The first player may be the seller 20B, and the first player terminal device 300 may be a computer (for example, a terminal device) used by the seller 20B. The second player may be the purchaser 30B, and the second player terminal device 400 may be a computer (for example, a terminal device) used by the purchaser 30B. The voter may be a stakeholder related to electronic commerce (for example, a person who has a governor token for the electronic commerce), and the voter terminal device 500 may be a computer (for example, a terminal device) used by the stakeholder.

For example, in a case where the system 100 is applied to betting in e-sports, the system 100 may be a computer (for example, a server device) installed in a service provider that provides the platform 10C for determining a matter to be determined for e-sports. The first player may be the player 20C in an e-sport, and the first player terminal device 300 may be a computer (for example, a terminal device) used by the player 20C. The second player may be the spectator 30C, and the second player terminal device 400 may be a computer (for example, a terminal device) used by the spectator 30C. The voter may be a stakeholder related to electronic commerce (for example, a person who has a governor token for the electronic commerce), and the voter terminal device 500 may be a computer (for example, a terminal device) used by the stakeholder.

For example, in a case where the system 100 is applied to building management, the system 100 may be a computer (for example, a server device) installed in a service provider that provides the platform 10D for determining a matter to be determined for building management. The first player may be the cleaning company 20D, and the first player terminal device 300 may be a computer (for example, a terminal device) used by the cleaning company 20D. The voter may be a stakeholder related to building management (for example, a person who has a governor token related to building management), and the voter terminal device 500 may be a computer (for example, a terminal device) used by the stakeholder.

Here, the computer (a server device or a terminal device) may be any type of computer. For example, the terminal device may be any type of terminal device such as a smartphone, a tablet terminal, a personal computer, smart glasses, or a smart watch.

The database unit 200 stores, for example, various types of details used to calculate a score (second score) representing a feature of a field in which an action is performed. The database unit 200 may store, for example, various types of details used to calculate a score (first score) representing a feature of the first player and/or a score (third score) representing a feature of the second player. The database unit 200 may store, for example, various types of details used to calculate a score (fourth score) representing a feature of a target object (for example, a product or a service to be transacted in electronic commerce) of an action. The database unit 200 may store details indicating the matter determined by the system 100.

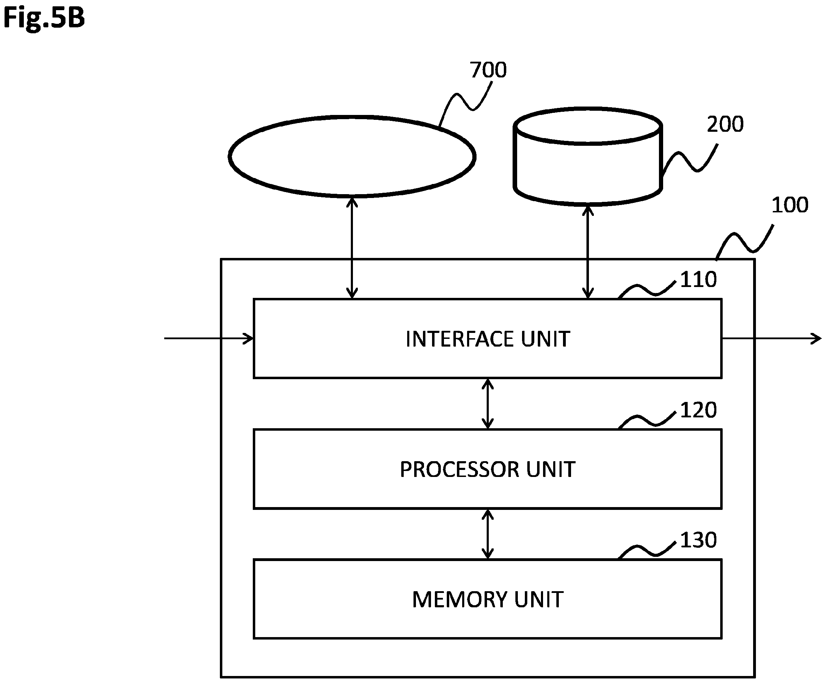

Fig. 5B illustrates an example of a specific configuration of the system 100 that determines a matter to be determined when a player performs an action.

The system 100 includes an interface unit 110, a processor unit 120, and a memory 130 unit.

The interface unit 110 exchanges details with the outside of the system 100. The processor unit 120 of the system 100 can receive details from the outside of the system 100 via the interface unit 110, and can transmit details to the outside of the system 100. The interface unit 110 can exchange details in any format.

The interface unit 110 includes, for example, an input unit that enables details to be input to the system 100. It does not matter how the input unit enables details to be input to the system 100. For example, in a case where the input unit is a receiver, the receiver may receive details from the outside of the system 100 via a network such that the details is input. Alternatively, in a case where the input unit is a data reading device, details may be input by reading the details from a storage medium connected to the system 100.

The interface unit 110 includes, for example, an output unit that enables details to be output from the system 100. It does not matter how the output unit enables details to be output from the system 100. For example, in a case where the output unit is a transmitter, the transmitter may transmit details to the outside of the system 100 via a network such that the details is output. Alternatively, in a case where the output unit is a data writing device, details may be output by writing the details in a storage medium connected to the system 100.

The system 100 may transmit details to the database unit 200 and/or receive the details from the database unit 200 via, for example, the interface unit 110. The system 100 may transmit details to the first player terminal device 300 and/or receive the details from the first player terminal device 300 via, for example, the interface unit 110. The system 100 may transmit details to the second player terminal device 400 and/or receive the details from the second player terminal device 400 via, for example, the interface unit 110. The system 100 may transmit details to the voter terminal device 500 and/or receive the details from the voter terminal device 500 via, for example, the interface unit 110.

The system 100 may receive, for example, data and/or information regarding a player via the interface unit 110. The system 100 may receive, for example, data and/or information regarding a player via the interface unit 110.

The system 100 may receive via, for example, the interface unit 110, a vote to change a rule used in determining a matter to be determined when a player performs an action. The system 100 may detect, for example, an action performed by a player via the interface unit 110. The system 100 may transmit the determined matter via, for example, the interface unit 110.

The processor unit 120 executes processing of the system 100 and controls operation of the entire system 100. The processor unit 120 reads a program stored in the memory unit 130 and executes the program. This enables the system 100 to function as a system that performs desired steps. The processor unit 120 may be implemented by a single processor or may be implemented by a plurality of processors.

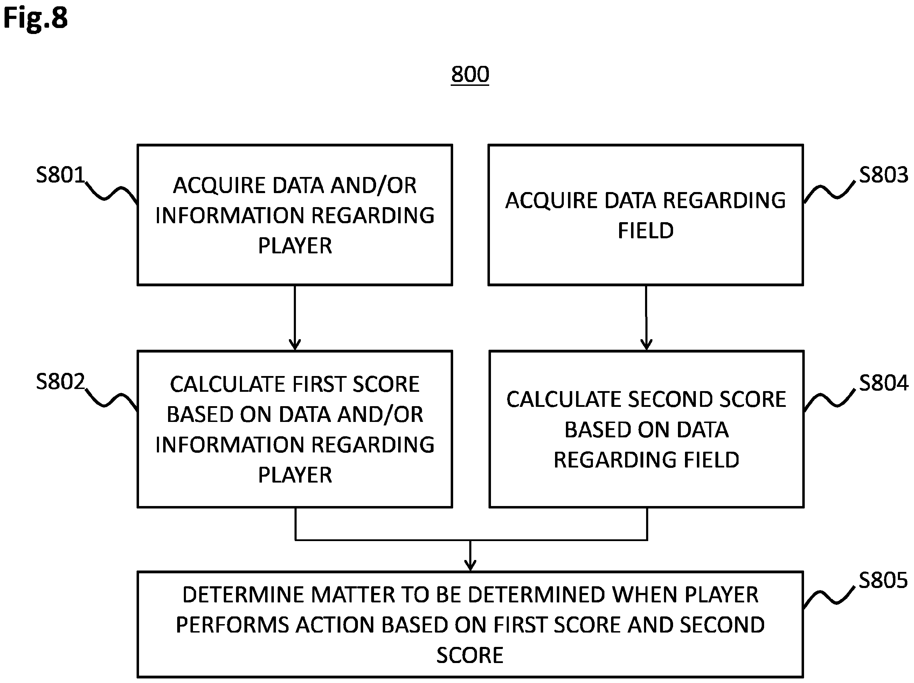

The memory unit 130 stores a program required for executing processing of the system 100, data required for executing the program, and the like. The memory unit 130 may store a program (for example, a program for realizing processing illustrated in Figs. 8, 9A, 9B, 9C, 10A, 10B, and 10C that will be described later) for causing the processor unit 120 to perform processing for determining a matter to be determined when a player performs an action. Here, any method of storing the program in the memory unit 130 may be used. For example, the program may be preinstalled in the memory unit 130. Alternatively, the program may be installed in the memory unit 130 by being downloaded via a network. In this case, any type of the network may be used. The memory unit 130 may be implemented by any storage means. Alternatively, the program may be stored in a computer-readable storage medium and installed in the memory unit 130 by reading the program.

The database unit 200 may store, for example, data and/or information regarding a player.

The data regarding the player is objective details regarding the player. The data regarding the player may be private details known only by the player himself or herself, or may be public details shared with a third party. The data regarding the player may be acquired from, for example, a terminal device of the player and/or an IoT device capable of communicating with the terminal device of the player. The data regarding the player may be acquired from, for example, any location on the network. The data regarding the player may be recorded in, for example, a token stored in an appropriate place on the network. The data regarding the player includes, for example, a behavior history (for example, an exercise history, a health activity history, a purchase history, an economization behavior history, a meal history, a web page browsing history, a conversation history with AI speaker, and an SNS use history) of the player, health details (for example, a height, a weight, a blood pressure, a heart rate, and afflicted diseases), details regarding DNA, and insurance purchase details, but is not limited thereto. The data regarding the player may include personal details of the player. The personal details includes, for example, at least one of a name, an address, a telephone number, a mail address, an age, a gender, a family structure, an occupation, an annual income, an asset, a medical history, and the like, but is not limited thereto. In a case where the player is a corporation, the data regarding the player may include, for example, corporation details (for example, a name, years of establishment, employee details, and financial details).

The data regarding the player may be acquired from, for example, a payroll card. The payroll card is a system capable of electronically receiving payment of a salary from an employer. With the payroll card, it is possible to receive payment of a salary without using a bank account. In the payroll card, revenue details and expenditure details from payment of a salary may be recorded. information regarding business expenses may also be recorded on the payroll card. For example, the amount, the name, and the like paid as expenses are recorded on the payroll card. Therefore, by acquiring the data regarding the player from the payload card, not only the details regarding the balance of the player in private but also the details regarding the balance of the player in business can be used as the data regarding the player.

The information regarding the player is subjective details with the player as the subject. The information regarding the player may be private details that is known only by the player himself or herself, or may be public details shared with a third party. The information regarding the player may be acquired, for example, by the player directly inputting the details into the terminal device. The information regarding the player may be indirectly derived from, for example, an inquiry or a question with respect to the player. The information regarding the player may be acquired from, for example, any location on the network. The information regarding the player may be recorded, for example, in a token stored in an appropriate place on the network. The information regarding the player includes, for example, a hobby, a preference, and a reason for behavior (for example, a candidate motivation for a current or past occupation and a reason for changing a job from a past occupation), but is not limited thereto.

The database unit 200 stores, for example, various types of details (for example, details of currency distributed in a field, details of an administrator who manages the field, evaluation of a user for the field, and the like) used to calculate the second score representing a feature of a field. The various types of details used to calculate the second score representing the feature of the field may be, for example, details that can represent the reliability of the field. The details of currency distributed in the field can indicate the reliability of the field by the reliability of the currency, for example. For example, it is considered that a field in which currency of which a value is supported on a highly reliable criterion such as gold is distributed has high reliability, a field in which currency of which a value is supported on a less reliable criterion is distributed has a low reliability, and a field in which currency such as virtual currency of which a value is not supported is distributed has a lower reliability. information regarding an administrator managing the field can represent the reliability of the field by, for example, the presence or absence of the administrator, and can also represent the reliability of the field by a monitoring level of the administrator. For example, it is considered that a decentralized field in which an administrator does not exist is less reliable, a centralized field in which an administrator exists has a high reliability, and a centralized field in which an administrator constantly and strictly monitors exists has a higher reliability.

The database unit 200 stores, for example, various types of details (for example, a value or a price of a target object of an action, or more specifically, a price of a product or a service that is a transaction target in the electronic commerce) used to calculate a fourth score representing a feature of the target object of the action.

The database unit 200 stores, for example, various types of details used to calculate the first score or the third score representing a feature of a player.

Here, the feature of the player may be a concept representing what kind of person the player is, that is, the personality of the player. The feature of the player may also represent the personality of the player from the viewpoint of the character of the player. For example, the feature of a player may represent the personality of the player from the viewpoint of "personality.". In addition, the feature of the player may represent the personality of the player in terms of "money" and/or the personality of the player from the viewpoint of "health". Therefore, a score representing a feature of a player may include a feature related to "personality", and the score representing the feature of the player may be a multi-dimensional score additionally including a feature related to "money" and/or a feature related to "health". Multi-dimensional axes of the score may include, for example, an axis of a viewpoint related to "personality", an axis of a viewpoint related to "money", and/or an axis of a viewpoint of "health". Here, the "personality" is details indicating whether or not the person's character and/or personality is reliable, and includes, for example, evaluation from another person. The "money" is details regarding the person's money, and includes, for example, annual income, assets, and whether the person saves money. The "health" is details regarding the health of the person, and includes, for example, details such as diseases, dietary habits, and activities for health.

As an example, in a case where a score representing a feature of a player has the axis of the viewpoint related to "personality", scores will be given for a plurality of items with respect to "personality", and the personality of the person will be represented with respect to "personality", based on the scores for each of the plurality of items. For example, in a person who is angry but has an honest character, among the items related to "personality", a score of an item related to "honest person" is high or a score of an item related to "lying" is low, and a score of an item related to "short temper" is high or a score of an item related to "temperance" is low.

As another example, in a case where a score representing a feature of a player has the axis of the viewpoint related to "money", scores are given for a plurality of items related to "money", and a personality of the person is represented with respect to "money" based on the scores of each of the plurality of items. For example, for a person who wastes a lot, among the items related to "money", a score of an item related to "economization" is high or a score of an item related to "waste" is low.

As another example, in a case where a score representing a feature of a player has the axis of the viewpoint related to "healthy", scores are given for a plurality of items related to "healthy", and a personality of the person will be represented with respect to "healthy" based on the score of each of the plurality of items. For example, in a person with an obese body shape, a score of an item related to "obesity level" or" BMI" among the items related to "health" is high.

These items are examples, and each of the multi-dimensional axes may have any item. As the number of items included in each axis increases, it is possible to more finely represent the personality of the player from the viewpoint of the axis, but a data amount also increases accordingly. The smaller the number of items included in each axis, the smaller the amount of data of the score representing the feature of the player and the easier the handling, but the more schematically the personality of the player is represented. For example, the score representing the feature of the player may be, for example, a score derived by extracting specific items for at least two axes of the plurality of axes (a score schematically representing the personality of the player) from a score represented for a plurality of axes having a large number of items (a score representing the personality of the player in detail).

For example, the database unit 200 may store concepts related to parameters used for score calculation and various types of details in association with each other. The parameters used to calculate the score may include, for example, "personality", "money", and "health".

For example, regarding the parameter of "personality", the database unit 200 may store a concept related to personality and various types of details in association with each other. For example, keywords such as "volunteer", "contribution", "consideration", and "consultation", and statuses such as "frequently participating in volunteer", "frequently receiving consultation", and "experienced contribution" may be stored in association with the concept of "altruistic" (or "transpersonal") related to "personality". For example, the concept of sustainable development goals (SDGs) related to "personality" may be stored in association with keywords related to 17 goals and/or 169 targets (for example, "equal" and "environmental conservation"), a status such as "performing behaviors related to 17 goals and/or 169 targets" and "having ideas related to 17 goals and/or 169 targets".

For example, regarding the parameter "money", the concept related to money and various types of details may be stored in the database unit 200 in association with each other. For example, the concept of "rich" (or "cashflowrich") related to "money" may be stored in association with keywords such as "Harvard University" and "MBA", a status such as "annual income of 20 million yen or more", and the like. For example, the concept of "rich" (or "stock rich") related to "money" may be stored in association with keywords such as "landowner" and "shareholder", a status such as "assets of 100 million yen or more", and the like.

For example, for the parameter "health", a concept related to health and various types of details may be stored in the database unit 200 in association with each other. For example, the concept of "excellent body" (or "physical health") related to "health" may be stored in association with keywords such as "non-smoking" and "normal blood pressure", a status such as "BMI 18 to 27", and the like. For example, the concept of "mental fullness" (or "mental health") related to "health" may be stored in association with keywords such as "worth doing" and "stressless", statuses such as "stress check result is less than a predetermined value" and "sense of coherence (SOC) is high".

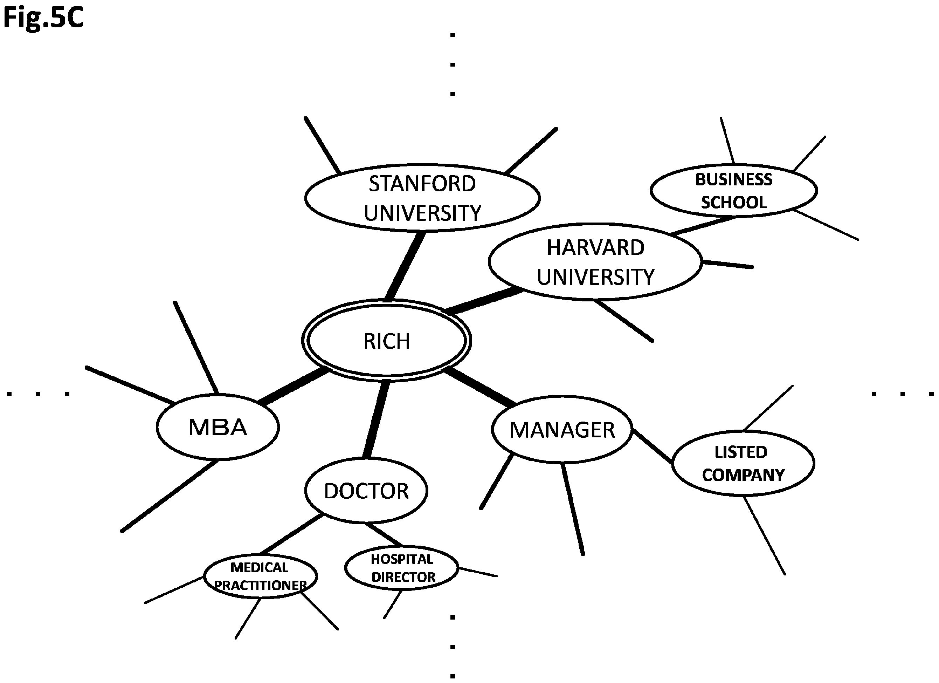

Fig. 5C is a conceptual diagram illustrating an example of association of details stored in the database unit 200.

In the example illustrated in Fig. 5C, the concept of "rich" related to money may be associated with keywords such as "Harvard University", "Stanford University", "MBA", "doctor", and "manager". Another keyword (for example, "business school", "medical practitioner", and "listed company") is associated with these keywords. Further keywords may be associated with these keywords.

Such association may be performed by using, for example, artificial intelligence (AI) capable of performing semantic search, that is, artificial intelligence that has learned a correspondence relationship between keywords.

This artificial intelligence learns a correspondence relationship between keywords from a large amount of sentences. For example, the artificial intelligence extracts a plurality of keywords in a sentence by syntactically analyzing the sentence, and specifies a relationship between the plurality of keywords in the sentence. For example, in a case where a certain keyword is used in combination with another certain keyword in many sentences, the artificial intelligence learns those keywords as having a strong correspondence relationship. The artificial intelligence that has learned the correspondence relationship between the keywords as described above may output a keyword correlated with an input keyword based on the learned correspondence relationship.

For example, when the keyword "rich" is input to the artificial intelligence that has learned the correspondence relationship between the keywords, "Harvard University", "Stanford University", "MBA", "doctor", "manager", and the like may be output as keywords correlated with "rich". For example, when the keywords "rich" and "doctor "are input to the artificial intelligence that has learned the correspondence relationship between the keywords, "medical practitioner", "hospital director", and the like may be output as keywords correlated with "rich" and "doctor".

As described above, the database unit 200 may store the keywords input to the artificial intelligence that has learned the correspondence relationship between the keywords and the output keywords in association with each other.

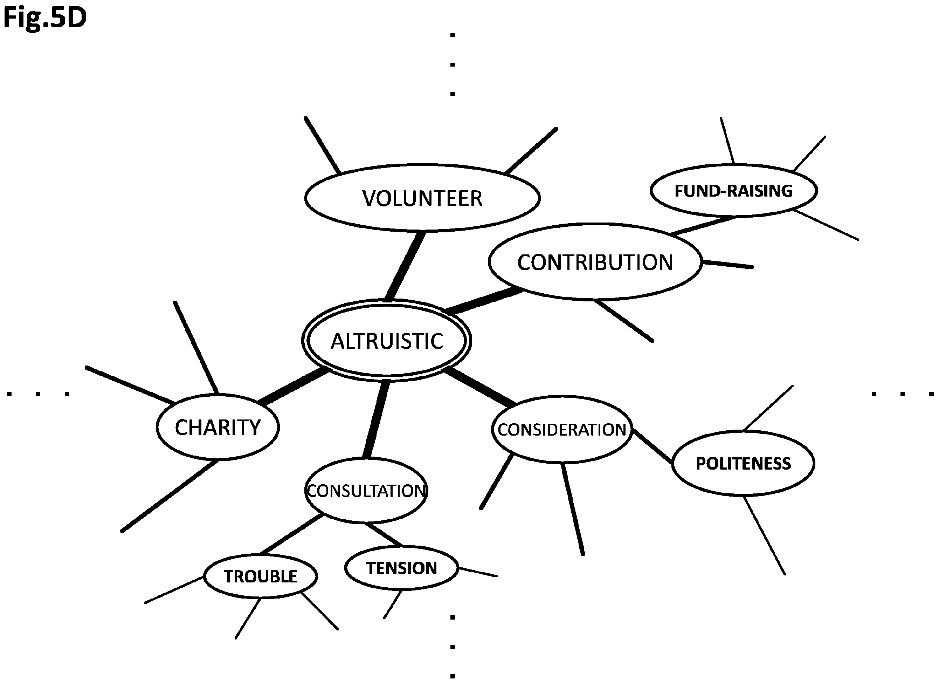

Fig. 5D is a conceptual diagram illustrating another example of association of details stored in the database unit 200.

In the example illustrated in Fig. 5D, keywords such as "volunteer", "contribution", "consideration", and "consultation" are associated with the concept of "altruistic" related to personality. Other keywords (for example, "trouble", "tension", and "politeness") are associated with these keywords. Further keywords may be associated with these keywords.

As described above, such association may be performed by using artificial intelligence (AI) capable of performing semantic search, that is, artificial intelligence that has learned a correspondence relationship between keywords.

For example, when the keyword "altruistic" is input to the artificial intelligence which has learned the correspondence relationship between the keywords, "volunteer", "contribution", "consideration", "consultation", and the like may be output as keywords correlated with "altruistic". For example, when the keywords "altruistic" and "consideration" are input to the artificial intelligence that has learned the correspondence relationship between the keywords, "politeness" and the like may be output as keywords correlated with "altruistic" and "consideration".

As described above, the database unit 200 may store the keywords input to the artificial intelligence that has learned the correspondence relationship between the keywords and the output keywords in association with each other.

The database unit 200 may store the first score and the second score in association with each piece of content (that is, a value) of a matter (that is, a parameter) to be determined when a player performs an action. Alternatively, the database unit 200 may store the second score and the third score in association with each piece of content of a matter to be determined when a player performs an action. Alternatively, the database unit 200 may store the first score, the second score, and the third score in association with each piece of content of a matter to be determined when a player performs an action. In addition to these, a rule related to actions may also be stored in the database unit 200 in association with each piece of content of a matter to be determined when a player performs an action.

In the example illustrated in Figs. 5A and 5B, the database unit 200 is provided outside the system 100, but the present invention is not limited thereto. At least a part of the database unit 200 may be provided inside the system 100. In this case, at least a part of the database unit 200 may be implemented by the same storage means as the storage means that implements the memory unit 130, or may be implemented by storage means different from the storage means that implements the memory unit 130. In any case, at least a part of the database unit 200 is configured as a storage unit for the system 100. The configuration of the database unit 200 is not limited to a specific hardware configuration. For example, the database unit 200 may be configured by a single hardware component or may be configured by a plurality of hardware components. For example, the database unit 200 may be configured as an external hard disk device of the system 100, may be configured as a storage on a cloud connected via a network, or may be configured as a distributed network using a blockchain technology or the like.

For example, data and/or information regarding a player is stored in the database unit 200 configured as a distributed network using a blockchain technology or the like, and in this case, falsification of the data and/or the information regarding the player becomes substantially impossible. This ensures the reliability of the data and/or the information regarding the player. Data of records of a competition may also be stored in the database unit 200 configured as a distributed network using the blockchain technology or the like, and falsification of the data of the records of the competition becomes substantially impossible. Note that the fact that falsification is substantially impossible indicates that even if falsification is performed, the falsification may be easily detected.

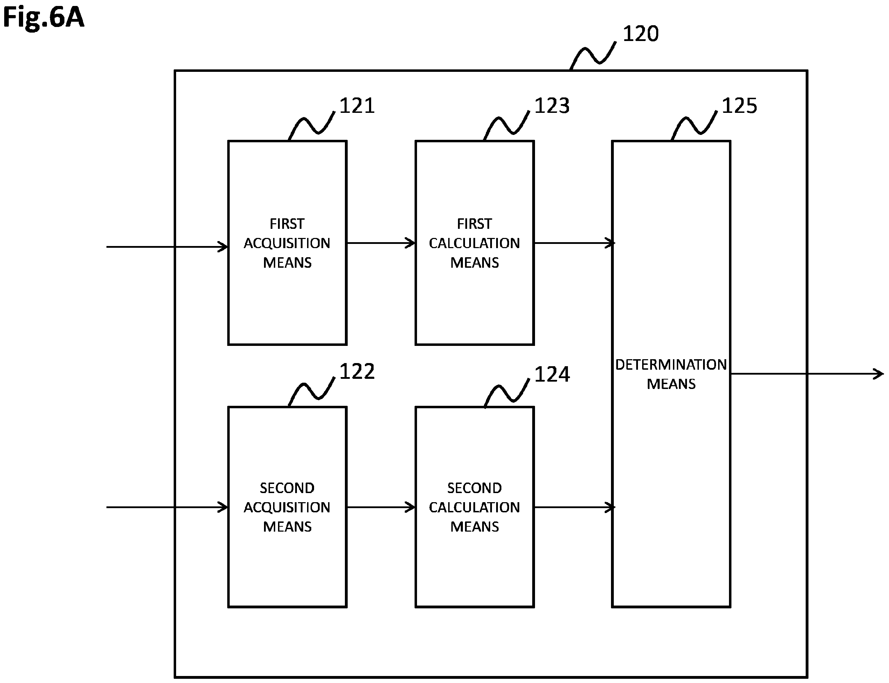

Fig. 6A illustrates an example of a configuration of the processor unit 120.

The processor unit 120 includes first acquisition means 121, second acquisition means 122, first calculation means 123, second calculation means 124, and determination means 125.

The first acquisition means 121 is configured to acquire data and/or information regarding a player.

For example, the first acquisition means 121 may acquire data and/or information regarding the first player and/or the second player stored in the database unit 200 via the interface unit 110. Alternatively, the first acquisition means 121 may acquire data and/or information regarding the first player received from the first player terminal device 300 via the interface unit 110, for example. Additionally or alternatively, the first acquisition means 121 may acquire data and/or information regarding the second player received from the second player terminal device 400 via the interface unit 110, for example. The data and/or the information regarding the first player and the data and/or the information regarding the second player may be acquired by the same acquisition means or may be acquired by separate acquisition means. In the present specification and the claims, the "first acquisition means" and the "third acquisition means" may be the same element or may be separate elements.

For example, in an embodiment of determining a matter to be determined when a player performs an action with respect to an advertisement, the first acquisition means 121 may acquire data and/or information regarding an advertiser. Additionally or alternatively, the first acquisition means 121 may acquire data and/or information regarding an advertisement recipient.

For example, in an embodiment of determining a matter to be determined when a player performs an action with respect to electronic commerce, the first acquisition means 121 may acquire data and/or information regarding a seller. Additionally or alternatively, the first acquisition means 121 may acquire data and/or information regarding a purchaser.

For example, in an embodiment of determining a matter to be determined when a player performs an action with respect to an e-sport, the first acquisition means 121 may acquire data and/or information regarding a player of the e-sport. Additionally or alternatively, the first acquisition means 121 may acquire data and/or information regarding a spectator.

For example, in an embodiment of determining a matter to be determined when a player performs an action with respect to building management, the first acquisition means 121 may acquire data and/or information regarding a cleaning company.

The acquired data and/or information regarding the player is passed to the first calculation means 123.

The second acquisition means 122 is configured to acquire data regarding a field in which an action is performed.

The second acquisition means 122 may acquire data regarding a field stored in the database unit 200 via the interface unit 110, for example. The second acquisition means 122 may acquire data regarding a field stored on the network 600 or the blockchain network 700 via the interface unit 110, for example.

For example, in an embodiment of determining a matter to be determined when a player performs an action with respect to an advertisement, the second acquisition means 122 may acquire data regarding a field in which the advertisement is placed.

For example, in an embodiment of determining a matter to be determined when a player performs an action with respect to electronic commerce, the second acquisition means 122 may acquire data regarding a field in which the electronic commerce is performed.

For example, in an embodiment of determining a matter to be determined when a player performs an action with respect to an e-sport, the second acquisition means 122 may acquire data regarding a field in which the e-sport is performed.

For example, in an embodiment of determining a matter to be determined when a player performs an action with respect to building management, the second acquisition means 122 may acquire data and/or information regarding a field in which the building management is performed.

The acquired data regarding the field is passed to the second calculation means 124.

The first calculation means 123 is configured to calculate a score (the first score or the third score) representing a feature of a player based on data and/or information regarding the player. The first calculation means 123 may calculate the first score representing a feature of the first player based on data and/or information regarding the first player, and may calculate the third score representing a feature of the second player based on data and/or information regarding the second player.

The feature of the player may be a concept representing what kind of person the player is, that is, the personality of the player. The feature of the player may also represent the personality of the player from the viewpoint of the character of the player. For example, the feature of a player may represent the personality of the player from the viewpoint of "personality.". The feature of the player may additionally represent the personality of the player from the viewpoint of "money" and/or the personality of the player from the viewpoint of "health". Therefore, the score representing the feature of the player (the first score and the third score) may include one of a feature related to "money", a feature related to "health", and a feature related to "personality", and may be a multi-dimensional score additionally including at least another one of a feature related to "money", a feature related to "health", and a feature related to "personality". Although the term "digital twin" is known, it may also be said that a score that multi-dimensionally represents a player's features is a score that represents the player's digital twin.

Multi-dimensional axes of the first and third scores may include, for example, an axis of a viewpoint related to "personality", an axis of a viewpoint related to "money", and/or an axis of a viewpoint of "health".

For example, the first calculation means 123 may calculate the first score according to a degree to which data and/or information regarding the first player is correlated with a parameter used to calculate the first score. The first calculation means 123 refers to, for example, the database unit 200 that stores various types of details correlated with a concept related to a parameter used to calculate the first score, and determines a degree to which data and/or information regarding the first player is correlated with a concept related to a parameter used to calculate the first score. The data and/or the information regarding the first player may include, for example, details regarding "personality", "money", and "health". For example, the first calculation means 123 may refer to a database unit that stores various types of details correlated with a corresponding concept among the concept related to personality, the concept related to money, and the concept related to health for at least one of the details regarding personality, the details regarding money, and the details regarding health, and may calculate a score including a feature corresponding to a specific concept among the corresponding concepts according to the degree of correlation with the corresponding concept.

For example, the first calculation means 123 may determine a degree to which data and/or information regarding the first player is correlated with the concept related to "personality", and calculate the first score according to the determined degree of correlation. For example, in a case where the data and/or the information regarding the first player is highly correlated with a specific concept among concepts related to "personality", the first calculation means 123 may cause a feature corresponding to the concept to be included in the first score or increase a score of an item corresponding to the concept. For example, the more strongly the data and/or the information regarding the first player is correlated with "altruistic" (or "transpersonal"), the more or more strongly the feature corresponding to "altruistic" is included in the first score or the higher the score of an item corresponding to "altruistic" may be. For example, the more strongly the data and/or the information regarding the first player is correlated with "strong pressure", the more or more strongly the feature corresponding to "strength of pressure" is included in the first score or the higher the score of an item corresponding to "strength of pressure" may be.

For example, the first calculation means 123 may determine a degree to which data and/or information regarding the first player is correlated with the concept related to "money", and calculate the first score according to the determined degree of correlation. For example, in a case where the data and/or the information regarding the first player is highly correlated with a specific concept among concepts related to "money", the first calculation means 123 may cause a feature corresponding to the concept to be included in the first score or increase a score of an item corresponding to the concept. For example, the more strongly data and/or the information regarding the first player is correlated with "cache-flow rich", the more or more strongly the feature corresponding to "cache-flow rich" may be included or the higher the score of the item corresponding to the concept of "cache-flow rich" may be. For example, the more strongly the data and/or the information regarding the first player is correlated with "stock rich", the more or more strongly the feature corresponding to "stock rich" is included in the first score or the higher the score of an item corresponding to the concept of "stock rich" may be.

For example, the first calculation means 123 may determine a degree to which data and/or information regarding the first player is correlated with the concept related to "health", and calculate the first score according to the determined degree of correlation. For example, in a case where the data and/or the information regarding the first player is highly correlated with a specific concept among concepts related to "health", the first calculation means 123 may cause a feature corresponding to the concept to be included in the first score or increase a score of an item corresponding to the concept. For example, the more strongly the data and/or the information regarding the first player is correlated with the "excellent" (or "physical health"), the more or more strongly the feature corresponding to "excellent" may be included in the first score or the higher the score of an item corresponding to the concept of "excellent" may be. For example, the more strongly the data and/or the information regarding the first player is correlated with "mindfulness" (or "mental health"), the more or more strongly the feature corresponding to "mindfulness" (or "mental health") is included in the first score or the higher the score of an item corresponding to the concept of "mindfulness" may be.

In an embodiment, the first calculation means 123 may calculate the first score multi-dimensionally representing the feature of the first player by using, for example, a machine learning model that has learned a relationship between data and/or information regarding a plurality of players and a score representing the feature of each player. The data and/or the information regarding the player may include, for example, details regarding "personality", "money", and "health".

The machine learning model may be constructed by using any machine learning model. The machine learning model may be, for example, a neural network model.

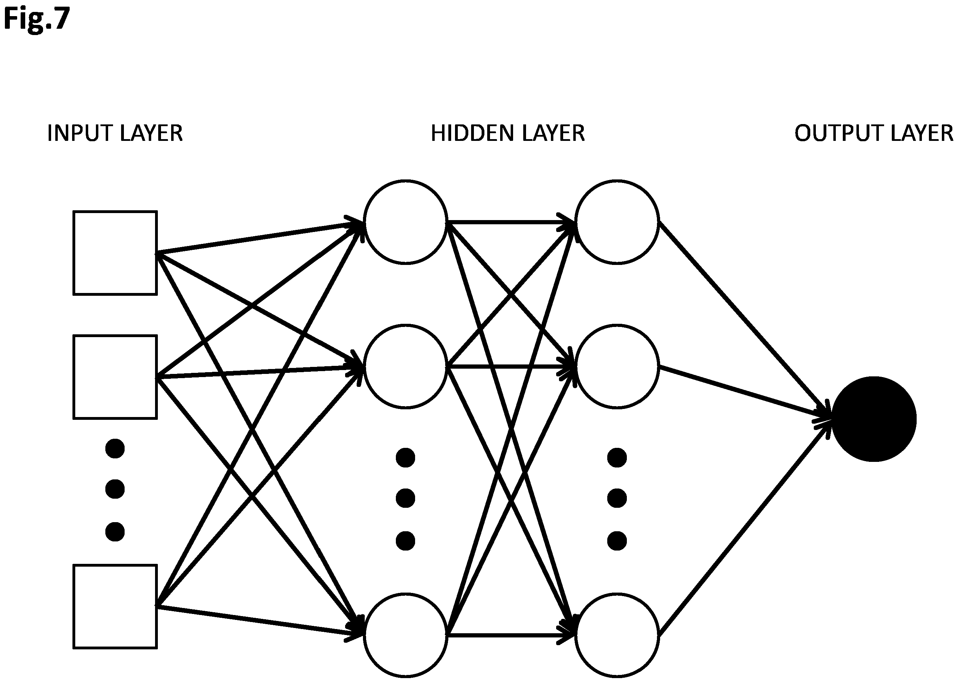

Fig. 7 illustrates an example of a structure of a neural network model that may be used by the first calculation means 123.

The neural network model includes an input layer, at least one hidden layer, and an output layer. The number of nodes in the input layer of the neural network model corresponds to the number of dimensions of the data and/or the information regarding the first player to be input. The hidden layer of the neural network model may include any number of nodes. The number of nodes in the output layer of the neural network model corresponds to the number of dimensions of data to be output. For example, in a case where the first score representing a feature of the first player is output, the number of nodes in the output layer may be one.

The neural network model may be subjected to a learning process in advance by using data and/or information regarding a plurality of players acquired by the first acquisition means 121. The learning process is a process of calculating a weighting coefficient of each node of the hidden layer of the neural network model by using data and/or information regarding a plurality of players acquired in advance by the first acquisition means 121.

The learning process is, for example, supervised learning. In the supervised learning, for example, it is possible to construct a machine learning model capable of correlating data and/or information regarding a player with a score representing a feature of the player by calculating a weighting coefficient of each node of the hidden layer of the neural network model by using details regarding a plurality of players with the data and/or information regarding the player as input training data and a score representing a feature of the player as output training data.

For example, a set of (input training data, output training data) for supervised learning may be (data and/or information regarding player 1, score representing feature of player 1), (data and/or information regarding player 2, score representing feature of player 2), ..., (data and/or information regarding player i, score representing features of player i), ..., or the like. When new data and/or information regarding a player acquired from the player is input to the input layer of such a trained neural network model, a score representing the feature of the player is output to the output layer.

In the supervised learning, for example, a degree to which data and/or information regarding a player is correlated with a parameter used to calculate a score may be used as input training data.

The first calculation means 123 may similarly calculate the third score representing the feature of the second player. Alternatively, the third score representing the feature of the second player may be calculated by calculation means separate from the first calculation means 123. In the present specification and the claims, the "first calculation means" and the "third calculation means" may be the same element or may be separate elements.

For example, in an embodiment of determining a matter to be determined when a player performs an action with respect to an advertisement, the first acquisition means 121 may calculate the first score representing a feature of an advertiser based on data and/or information regarding the advertiser. Additionally or alternatively, the first calculation means 123 may calculate the third score representing a feature of an advertisement recipient based on data and/or information regarding the advertisement recipient.

For example, in an embodiment of determining a matter to be determined when a player performs an action with respect to electronic commerce, the first calculation means 123 may calculate the first score representing a feature of a seller based on data and/or information regarding the seller. Additionally or alternatively, the first calculation means 123 may calculate the third score representing a feature of a purchaser based on data and/or information regarding the purchaser.

For example, in an embodiment of determining a matter to be determined when a player performs an action with respect to an e-sport, the first calculation means 123 may calculate the first score representing a feature of a player of the e-sport based on data and/or information regarding the player of the e-sport. Additionally or alternatively, the first calculation means 123 may calculate the third score representing a feature of a spectator based on data and/or information regarding the spectator.

For example, in an embodiment of determining a matter to be determined when a player performs an action with respect to building management, the first calculation means 123 may calculate the first score representing a feature of a cleaning company based on data and/or information regarding the cleaning company.

The calculated first score and third score are passed to the determination means 125.

Fig. 6A will be referred to again. The second calculation means 124 is configured to calculate a score (second score) representing a feature of a field in which an action is performed. For example, the second score may represent the feature of the field with the reliability of the field. For example, a field with a higher reliability has a higher second score, and a field with a lower reliability has a lower second score. The second calculation means 124 may calculate the second score based on whether the field is a reliable field.

For example, the second calculation means 124 may calculate the reliability of a field indicated by data regarding the field and reflect the reliability in the second score. For example, the reliability may be calculated based on details regarding currency distributed in the field, details regarding an administrator who manages the field, evaluation of a user for the field, and the like. The reliability may become higher, for example, as the currency distributed in the field becomes more reliable, and/or higher as management by an administrator managing the field becomes stricter, and/or higher as the user's evaluation for the field becomes higher. The reliability may become lower, for example, as the currency distributed in the field becomes less reliable, and/or lower as management by an administrator managing the field becomes looser, and lower as the user's evaluation for the field becomes lower. The reliability may be lower, for example, when an administrator managing the field is absent. The second calculation means 124 may calculate the second score based on the degree to which the field is managed in a decentralized manner or the degree to which the field is managed in a centralized manner. For example, the second calculation means 124 may calculate the second score by substituting data regarding the field into a function designed such that the second score becomes higher as the field has higher reliability and the second score becomes lower as the field has lower reliability.

For example, the second calculation means 124 may calculate the second score by using a machine learning model that has learned a relationship between the data regarding the field and the second score. For example, the machine learning model may be subjected to a learning process such that when data regarding a field is input, the second score of the field may be output.

The machine learning model may be constructed by using any machine learning model. The machine learning model may be, for example, a neural network model.

The neural network model may be subjected to a learning process in advance by using the data regarding the field acquired by the second acquisition means 122. The learning process is a process of calculating a weighting coefficient of each node of the hidden layer of the neural network model by using data regarding a plurality of fields acquired in advance by the second acquisition means 122.

The learning process is, for example, supervised learning. In the supervised learning, for example, it is possible to construct a machine learning model capable of correlating data regarding a field with the second score by calculating a weighting coefficient of each node of the hidden layer of the neural network model by using details regarding a plurality of fields with the data regarding the field as input training data and the second score representing a feature of the field as output training data.

For example, a set of (input training data, output training data) for supervised learning may be (data regarding field 1, second score of field 1), (data regarding field 2, second score of field 2), ..., (data regarding field i, second score of field i), ..., or the like. When data regarding a field is input to the input layer of such a trained neural network model, the second score of the field is output to the output layer.

In the supervised learning, for example, a degree to which the data regarding the field is correlated with a parameter used to calculate the second score may be used as input training data.

For example, in an embodiment of determining a matter to be determined when a player performs an action with respect to an advertisement, the second calculation means 124 may calculate the second score representing a feature of a field in which an advertisement is to be placed based on data regarding the field in which the advertisement is to be placed.

For example, in an embodiment of determining a matter to be determined when a player performs an action with respect to electronic commerce, the second calculation means 124 may calculate the second score representing a feature of a field in which the electronic commerce is performed based on data regarding the field in which the electronic commerce is performed.

For example, in an embodiment of determining a matter to be determined when a player performs an action with respect to an e-sport, the second calculation means 124 may calculate the second score representing a feature of a field in which the e-sport is performed based on data regarding the field in which the e-sport is performed.

For example, in an embodiment of determining a matter to be determined when a player performs an action with respect to building management, the second calculation means 124 may calculate the second score representing a feature of a field in which the building management is performed based on data and/or information regarding the field in which the building management is performed.

The calculated second score is passed to the determination means 125.

The determination means 125 is configured to determine a matter to be determined when a player performs an action based on the first score and the second score. For example, the determination means 125 may refer to the database unit 200, specify the content associated with the first score calculated by the first calculation means 123 and the second score calculated by the second calculation means 124, and determine that a matter to be determined when a player performs an action is the content.

For example, the determination means 125 may determine a matter to be determined when a player performs an action according to a correlation between the first score and the second score. For example, each piece of content (that is, a value) of the matter (that is, a parameter) to be determined when a player performs an action is stored in the database unit 200 in association with the degree of correlation between the first score and the second score, and the determination means 125 may determine the matter to be determined when the player performs the action by referring to the association.

For example, the determination means 125 may determine a matter to be determined when a player performs an action according to a combination of the first score and the second score. For example, each piece of content (that is, a value) of the matter (that is, the parameter) to be determined when the player performs the action is stored in the database unit 200 in association with the combination of the first score and the second score, and the determination means 125 may determine the matter to be determined when the player performs the action by referring to the association.

For example, the determination means 125 may determine a matter to be determined when the player performs an action based on the feature derived from the first score and the second score. For example, each piece of content (that is, a value) of the matter (that is, a parameter) to be determined when the player performs the action is stored in the database unit 200 in association with a feature derived from the first score and the second score, and the determination means 125 may determine the matter to be determined when the player performs the action by referring to the association. The determination means 125 may derive a specific feature from the score by using any method. In one example, the determination means 125 may extract a specific feature from the features included in the first score and/or the second score. Here, the extraction of the feature indicates that a feature is extracted without changing a value of the feature. In another example, the determination means 125 may derive a specific feature by applying a specific function to the first score and/or the second score. Here, the specific function may be any function. For example, the specific function may be a hash function. For example, the determination means 125 may derive the feature by applying a function (that is, a function according to the feature of the field) corresponding to the second score to the first score. For example, the determination means 125 may derive the feature by using a machine learning model that has learned a relationship between the first score and the second score, and the derived feature.

For example, the determination means 125 may determine a matter to be determined when a player performs an action by substituting the first score and the second score, a correlation coefficient between the first score and the second score, a calculation value of the first score and the second score, or a feature derived from the first score and the second score into an equation for determining the matter to be determined when the player performs the action.

In an embodiment, the determination means 125 may determine a matter to be determined when a player performs an action based on the first score, the second score, and a rule related to the action. This is useful, for example, in a case where a matter to be determined when a player performs an action cannot be uniquely determined by using the first score and the second score. This is because, even in a case where a matter to be determined when a player performs an action cannot be uniquely determined by using the first score and the second score, it is possible to uniquely determine the matter to be determined when the player performs the action by also considering the rule related to the action.

For example, the determination means 125 may refer to the database unit 200, specify the content associated with the first score calculated by the first calculation means 123, the second score calculated by the second calculation means 124, and the rule related to the action, and determine that the matter to be determined when the player performs the action is the content. Alternatively, the determination means 125 may determine a matter to be determined when a player performs an action by narrowing down the content specified based on the first score and the second score according to the rule related to the action. Alternatively, the determination means 125 may determine a matter to be determined when a player performs an action by adjusting the content specified based on the first score and the second score according to the rule related to the action.

The determination means 125 may similarly determine a matter to be determined when a player performs an action based on the second score and the third score.

In an embodiment, the determination means 125 may determine a matter to be determined when a player performs an action based on the first score, the second score, and the third score. For example, the determination means 125 may refer to the database unit 200, specify the content associated with the first score calculated by the first calculation means 123, the second score calculated by the second calculation means 124, and the third score calculated by the third calculation means, and determine that the matter to be determined when the player performs an action is the content.

For example, the determination means 125 may determine a matter to be determined when a player performs an action according to a combination of the first score, the second score, and the third score. For example, each piece of content (that is, a value) of the matter (that is, a parameter) to be determined when the player performs the action is stored in the database unit 200 in association with the combination of the first score, the second score, and the third score, and the determination means 125 may determine the matter to be determined when the player performs the action by referring to the association.

For example, the determination means 125 may determine a matter to be determined when a player performs an action based on a feature derived from the first score, the second score, and the third score. For example, each piece of content (that is, a value) of the matter (that is, a parameter) to be determined when a player performs an action is stored in the database unit 200 in association with the feature derived from the first score, the second score, and the third score, and the determination means 125 may determine the matter to be determined when the player performs the action by referring to the association. The determination means 125 may derive a specific feature from the score by using any method. In one example, the determination means 125 may extract a specific feature from the features included in the first score and/or the second score and/or the third score. In another example, the determination means 125 may derive a specific feature by applying a specific function to the first score and/or the second score and/or the third score. Here, the specific function may be any function. For example, the specific function may be a hash function. For example, the determination means 125 may derive each feature by applying a function (that is, a function according to the feature of the field) corresponding to the second score to the first score and the third score. For example, the determination means 125 may derive a feature by using a machine learning model that has learned a relationship between the first score, the second score, and the third score and the derived feature.

For example, the determination means 125 may determine a matter to be determined when a player performs an action by substituting the first score, the second score, and the third score, or calculation values thereof or features into an equation for determining the matter to be determined when the player performs the action.

In an embodiment, the determination means 125 may determine a matter to be determined when a player performs an action based on the first score, the second score, the third score, and a rule related to the action. This is useful, for example, in a case where a matter to be determined when a player performs an action cannot be uniquely determined by using the first score, the second score, and the third score. This is because, even in a case where a matter to be determined when a player performs an action cannot be uniquely determined by using the first score, the second score, and the third score, it is possible to uniquely determine the matter to be determined when the player performs the action by also considering the rule related to the action.

For example, the determination means 125 may refer to the database unit 200, specify the content associated with the first score calculated by the first calculation means 123, the second score calculated by the second calculation means 124, the third score calculated by the third calculation means, and the rule related to the action, and determine that the matter to be determined when the player performs the action is the content. Alternatively, the determination means 125 may determine a matter to be determined when a player performs an action by narrowing down the content specified based on the first score, the second score, and the third score according to the rule related to the action. Alternatively, the determination means 125 may determine a matter to be determined when a player performs an action by adjusting the content specified based on the first score, the second score, and the third score according to the rule related to the action.

For example, in an embodiment of determining a matter to be determined when a player performs an action with respect to an advertisement, a matter to be determined when an advertiser places an advertisement may be placement conditions of an advertisement placed by the advertiser. The determination means 125 may determine the placement conditions of the advertisement based on the first score representing a feature of the advertiser and the second score representing a feature of the field in which the advertisement is placed, or based on the first score representing the feature of the advertiser, the second score representing the feature of the field in which the advertisement is placed, and a rule related to the advertisement.

For example, in an embodiment of determining a matter to be determined when a player performs an action with respect to an advertisement, a matter to be determined when an advertisement recipient is provided with the advertisement may be the advertisement to be provided to the advertisement recipient. The determination means 125 may determine an advertisement to be provided to an advertisement recipient based on the first score representing a feature of the advertisement recipient and the second score representing a feature of the field in which the advertisement is placed, or based on the first score representing the feature of the advertisement recipient, the second score representing the feature of the field in which the advertisement is placed, and a rule related to the advertisement.

For example, in an embodiment of determining a matter to be determined when a player performs an action with respect to an advertisement, a matter to be determined when an advertiser places an advertisement and an advertisement recipient is provided with the advertisement may be a combination of the advertiser and the advertisement recipient. The determination means 125 may determine the combination of the advertiser and the advertisement recipient based on the first score representing a feature of the advertiser, the second score representing a feature of the field in which the advertisement is placed, and the third score representing a feature of the advertisement recipient, or based on the first score representing the feature of the advertiser, the second score representing the feature of the field in which the advertisement is placed, the third score representing the feature of the advertisement recipient, and a rule related to the advertisement.

For example, in an embodiment of determining a matter to be determined when a player performs an action with respect to electronic commerce, a matter to be determined when a seller in the electronic commerce sells a product or a service may be an amount of a deposit that the seller is to pay in the electronic commerce. The determination means 125 may determine the amount of the deposit to be paid by the seller in the electronic commerce based on the first score representing a feature of the seller and the second score representing a feature of the field in which the electronic commerce is performed, or based on the first score representing the feature of the seller, the second score representing the feature of the fields in which the electronic commerce is performed, and a rule related to the electronic commerce.

For example, in an embodiment of determining a matter to be determined when a player performs an action with respect to electronic commerce, a matter to be determined when a purchaser in the electronic commerce purchases a product or a service may be an amount of a deposit that the purchaser is to pay in the electronic commerce. The determination means 125 may determine the amount of the deposit to be paid by the purchaser in the electronic commerce based on the first score representing a feature of the purchaser and the second score representing a feature of the field in which the electronic commerce is performed, or based on the first score representing the feature of the purchaser, the second score representing the feature of the field in which the electronic commerce is performed, and a rule related to the electronic commerce.

For example, in an embodiment of determining a matter to be determined when a player performs an action with respect to electronic commerce, a matter to be determined when a seller in the electronic commerce sells a product or a service and a purchaser purchases the product or the service may be an amount of a deposit of each of the seller and the purchaser and paying of the deposit. The determination means 125 may determine an amount of a deposit to be paid by the seller in the electronic commerce based on the first score representing a feature of the seller and the second score representing a feature of the field in which the electronic commerce is performed or based on the first score representing the feature of the seller, the second score representing the feature of the field in which the electronic commerce is performed, and a rule related to the electronic commerce, determine an amount of a deposit to be paid by the purchaser in the electronic commerce based on the first score representing a feature of the purchaser and the second score representing the feature of the field in which the electronic commerce is performed or based on the first score representing the feature of the purchaser, the second score representing the feature of the field in which the electronic commerce is performed, and the rule related to the electronic commerce, and determine that those deposits have been paid.

For example, in an embodiment of determining a matter to be determined when a player performs an action with respect to an e-sport, a matter to be determined when a player of the e-sport performs the e-sport may be odds of betting in the e-sport. The determination means 125 may determine the odds of betting in the e-sport based on the first score representing a feature of the player of the e-sport and the second score representing a feature of the field in which the e-sport is performed, or based on the first score representing the feature of the player of the e-sport, the second score representing the feature of the field in which the e-sport is performed, and a rule related to the e-sport. Alternatively, the determination means 125 may determine the odds of betting in the e-sport based on the first score representing a feature of the player of the e-sport, the second score representing a feature of the field in which the e-sport is performed, and the third score representing a feature of a spectator, or based on the first score representing the feature of the player of the e-sport, the second score representing the feature of the field in which the e-sport is performed, the third score representing the feature of the spectator, and a rule related to the e-sport.

For example, in an embodiment of determining a matter to be determined when a player performs an action with respect to building management, a matter to be determined when a cleaning company of building management cleans a building may be a preferred or optimal cleaning company in the building management. The determination means 125 may determine, for each of a plurality of cleaning companies, a preferred or optimal cleaning company in building management based on the first score representing a feature of each cleaning company and the second score representing a feature of the field in which the cleaning work is performed, or for each of the plurality of cleaning companies, based on the first score representing the feature of each cleaning company, the second score representing the feature of the field in which the cleaning work is performed, and a rule related to the building management.

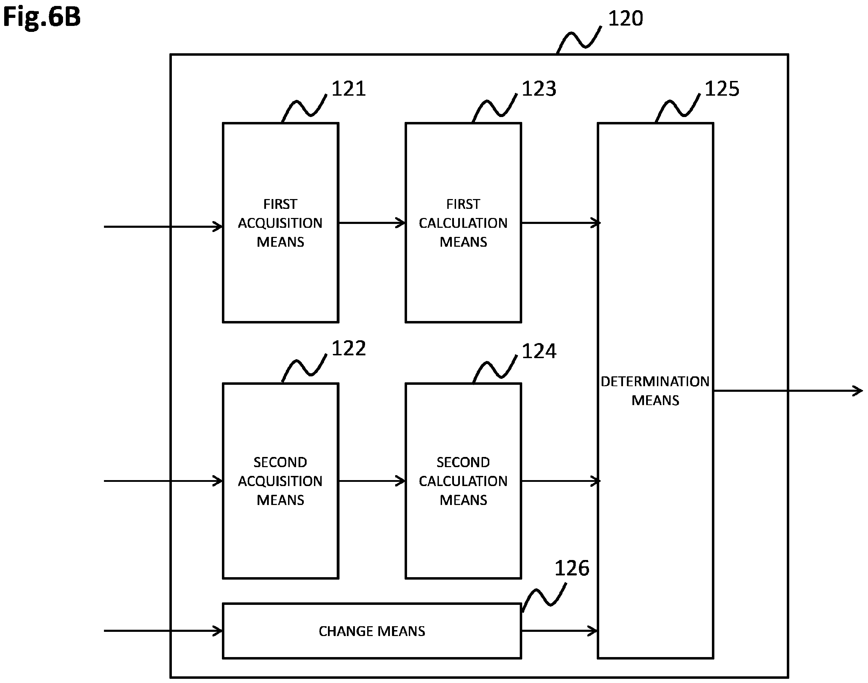

Fig. 6B illustrates an example of a configuration of a processor unit 120' that is an alternative embodiment of the processor unit 120.

The processor unit 120' has the same configuration as the processor unit 120 except that change means 126 is provided. In Fig. 6B, the same constituents as those in the configuration described above with reference to Fig. 6A are denoted by the same reference numerals, and description thereof will be omitted here.

The processor unit 120' includes first acquisition means 121, second acquisition means 122, first calculation means 123, second calculation means 124, determination means 125, and change means 126.

The change means 126 is configured to change a rule related to an action.

For example, the change means 126 may change the rule in accordance with a request from the outside. For example, the change means 126 may receive a vote from the outside of the system 100 via the interface unit 110 and change the rule based on a result of the vote. A voter may be, for example, the interested party 40 described above. The interested party 40 has a voting right (for example, a governor token). The interested party 40 may be, for example, a first player (for example, an advertiser, a seller, a player of an e-sport, or a cleaning company), a second player (for example, an advertisement recipient, a purchaser, or a spectator), or a person who is neither the first player nor the second player. For example, the interested party 40 has a voting right corresponding to an amount of the governor token that the interested party has. Therefore, the interested party 40 having many governor tokens will have many voting rights, which may be advantageous in voting. The governor token may be issued by the system 100.

For example, the change means 126 may present at least one rule change candidate to the voter terminal device 500 via the interface unit 110. Then, the change means 126 may receive a vote for at least one rule change candidate from the voter terminal device 500 via the interface unit 110. As a result of counting the votes, in a case where the change to at least one rule change candidate is approved by a majority, the rule change candidate is adopted, and the current rule is changed. Alternatively, a rule change candidate that has acquired the maximum number of votes among the plurality of rule change candidates is adopted, and the current rule is changed.

The voting of the interested party having the governor token may be performed by using techniques known in the art. For example, the voting may be performed by using a blockchain technology.

For example, the change means 126 may change the rule independently of a request from the outside. The change means 126 may change the rule, for example, when a predetermined condition is satisfied (for example, at least one of a predetermined time, a predetermined elapsed time, and a predetermined number of participants is satisfied). For example, the change means 126 may change the current rule to a predetermined rule, or may change the current rule to a rule according to a degree of satisfying a predetermined condition.

When the rule is changed by the change means 126, the determination means 125 determines a matter to be determined when a player performs an action based on the first score, the second score, and the changed rule.

As described above, a rule related to an action is changed by the processing of the processor unit 120', and a matter to be determined when a player performs the action is determined according to the changed rule. As a result, a matter to be determined when a player performs an action is not constant, and the matter to be determined when the player performs the action may be changed according to a trend or an actual situation of the world. This may contribute to development of the field (for example, a virtual space or a metaverse).

The processor unit 120 illustrated in Fig. 6A and the processor unit 120' illustrated in Fig. 6B may include fourth acquisition means and fourth calculation means in addition to the above-described configurations.

The fourth acquisition means is configured to acquire data regarding a target object of an action. The target object of the action may be, for example, a product or a service that is a transaction target in electronic commerce. Data regarding the target object of the action may be, for example, a value or a price of the target object of the action, and more specifically, a price of a product or a service that is a transaction target in electronic commerce.

The fourth calculation means is configured to calculate a fourth score representing a feature of the target object of the action based on the data regarding the target object of the action. The fourth score may be, for example, a value reflecting the value or the price of the target object of the action. For example, the higher the value of the target object of the action, the higher the fourth score, and the lower the value of the target object of the action, the lower the fourth score.

The calculated fourth score is passed to the determination means 125.

The determination means may determine a matter to be determined when a player performs an action further based on the fourth score. For example, the determination means 125 may refer to the database unit 200, specify the content associated with the first score calculated by the first calculation means 123, the second score calculated by the second calculation means 124, the third score calculated by the third calculation means, and the fourth score calculated by the fourth calculation means, and determine that the matter to be determined when the player performs the action is the content.

For example, the determination means 125 may determine the matter to be determined when the player performs the action according to a combination of the first score, the second score, the third score, and the fourth score. For example, each piece of content (that is, a value) of the matter (that is, a parameter) to be determined when the player performs the action is stored in the database unit 200 in association with the combination of the first score, the second score, the third score, and the fourth score, and the determination means 125 may determine the matter to be determined when the player performs the action by referring to the association.

For example, the determination means 125 may determine a matter to be determined when the player performs an action based on a feature derived from the first score, the second score, the third score, and the fourth score. For example, each piece of content (that is, the value) of the matter (that is, a parameter) to be determined when the player performs the action is stored in the database unit 200 in association with the feature derived from the first score, the second score, the third score, and the fourth score, and the determination means 125 may determine the matter to be determined when the player performs the action by referring to the association. The determination means 125 may derive a specific feature from the score by using any method. In one example, the determination means 125 may extract a specific feature from the features included in the first score and/or the second score and/or the third score and/or the fourth score. In another example, the determination means 125 may derive a specific feature by applying a specific function to the first score and/or the second score and/or the third score and/or the fourth score. Here, the specific function may be any function. For example, the specific function may be a hash function. For example, the determination means 125 may derive each feature by applying a function (that is, a function according to the feature of the field) corresponding to the second score to the first score, the third score, and the fourth score. For example, the determination means 125 may derive the feature by using a machine learning model that has learned a relationship between the first score, the second score, the third score, and the fourth score, and the derived feature.

For example, the determination means 125 may determine a matter to be determined when a player performs an action by substituting the first score, the second score, the third score, and the fourth score, or calculation values thereof or features into an equation for determining the matter to be determined when the player performs the action.

In an embodiment, the determination means 125 may determine a matter to be determined when a player performs an action based on the first score, the second score, the third score, the fourth score, and a rule related to the action. This is useful, for example, in a case where a matter to be determined when a player performs an action cannot be uniquely determined by using the first score, the second score, the third score, and the fourth score. This is because, even in a case where a matter to be determined when a player performs an action cannot be uniquely determined by using the first score, the second score, the third score, and the fourth score, it is possible to uniquely determine the matter to be determined when the player performs the action by also considering the rule related to the action.

For example, the determination means 125 may refer to the database unit 200, specify the content associated with the first score calculated by the first calculation means 123, the second score calculated by the second calculation means 124, the third score calculated by the third calculation means, the fourth score calculated by the fourth calculation means, and the rule related to the action, and determine that the matter to be determined when the player performs the action is the content. Alternatively, the determination means 125 may determine a matter to be determined when a player performs an action by narrowing down the content specified based on the first score, the second score, the third score, and the fourth score according to the rule related to the action. Alternatively, the determination means 125 may determine a matter to be determined when a player performs an action by adjusting the content specified based on the first score, the second score, the third score, and the fourth score according to the rule related to the action.

For example, in an embodiment of determining a matter to be determined when a player performs an action with respect to electronic commerce, a matter to be determined when a seller in the electronic commerce sells a product or a service may be an amount of a deposit that the seller is to pay in the electronic commerce. The determination means 125 may determine the amount of the deposit to be paid by the seller in the electronic commerce based on the first score representing a feature of the seller, the second score representing a feature of the field in which the electronic commerce is performed, and the fourth score representing a feature of a product or service that is a transaction target, or based on the first score representing the feature of the seller, the second score representing the feature of the field in which the electronic commerce is performed, the fourth score representing the feature of the product or the service that is a transaction target, and a rule related to the electronic commerce.

For example, in an embodiment of determining a matter to be determined when a player performs an action with respect to electronic commerce, a matter to be determined when a purchaser in the electronic commerce purchases a product or a service may be an amount of a deposit that the purchaser is to pay in the electronic commerce. The determination means 125 may determine the amount of the deposit to be paid by the purchaser in the electronic commerce based on the first score representing a feature of the purchaser, the second score representing a feature of the field in which the electronic commerce is performed, and the fourth score representing a feature of a product or a service that is a transaction target, or based on the first score representing the feature of the purchaser, the second score representing the feature of the field in which the electronic commerce is performed, the fourth score representing the feature of the product or the service that is a transaction target, and a rule related to the electronic commerce.

For example, in an embodiment of determining a matter to be determined when a player performs an action with respect to electronic commerce, a matter to be determined when a seller in the electronic commerce sells a product or a service and a purchaser purchases the product or the service may be an amount of a deposit of each of the seller and the purchaser and paying of the deposit. The determination means 125 may determine an amount of a deposit to be paid by the seller in the electronic commerce based on the first score representing a feature of the seller, the second score representing a feature of the field in which the electronic commerce is performed, and the fourth score representing a feature of a product or a service that is a transaction target, or based on the first score representing the feature of the seller, the second score representing the feature of the field in which the electronic commerce is performed, the fourth score representing the feature of the product or the service that is a transaction target, and a rule related to the electronic commerce, determine an amount of a deposit to be paid by the purchaser in the electronic commerce based on the first score representing a feature of the purchaser, the second score representing the feature of the field in which the electronic commerce is performed, and the fourth score representing the feature of the product or service that is a transaction target, or based on the first score representing the feature of the purchaser, the second score representing the feature of the field in which the electronic commerce is performed, the fourth score representing the feature of the product or the service that is a transaction target, and the rule related to the electronic commerce, and determine that those deposits have been paid.

In the examples illustrated in Figs. 6A and 6B described above, the constituents of the processor units 120 and 120' are provided in the same processor unit 120 or 120', but the present invention is not limited thereto. A configuration in which the respective constituents of the processor units 120 and 120' are distributed to a plurality of processor units is also within the scope of the present invention. In this case, the plurality of processor units may be located in the same hardware component, or may be located in separate nearby or remote hardware components.

Note that each component of the system 100 described above may be configured by a single hardware component or may be configured by a plurality of hardware components. In a case where the component includes a plurality of hardware components, a mode in which each hardware component is connected is not limited. The hardware components may be connected wirelessly or by wire. The system 100 of the present invention is not limited to a specific hardware configuration. It is also within the scope of the present invention that the processor units 120 and 120' are configured by analog circuits instead of digital circuits. A configuration of the system 100 of the present invention is not limited to that described above as long as the function can be realized.

### 4. Processing in system that determines matter to be determined when player performs action

Fig. 8 illustrates an example of processing (processing 800) in the system 100 determining a matter to be determined when a player performs an action. The processing 800 is performed in the processor unit 120 of the system 100. The processing 800 may be similarly performed in the processor unit 120'.

In step S801, the first acquisition means 121 of the processor unit 120 acquires data and/or information regarding a player.

For example, the first acquisition means 121 may acquire data and/or information regarding a player stored in the database unit 200 via the interface unit 110. Alternatively, the first acquisition means 121 may acquire data and/or information regarding a player received from the player terminal device 300 via the interface unit 110, for example. Alternatively, the first acquisition means 121 may acquire data and/or information regarding a player from a predetermined location on the network. The first acquisition means 121 may acquire data regarding a player from, for example, a payroll card owned by the player (or a server device that manages the payroll card). The acquired data and/or information regarding the player is passed to the first calculation means 123.

In step S802, the first calculation means 122 of the processor unit 120 calculates a first score representing a feature of the player based on the data and/or the information regarding the player acquired in step S801.

For example, the first calculation means 123 may calculate the first score according to a degree to which the data and/or the information regarding the player is correlated with a parameter used to calculate the score. The first calculation means 123 refers to, for example, the database unit 200 that stores various types of details correlated with a concept related to the parameter used to calculate the first score, and determines the degree to which the data and/or the information regarding the player is correlated with the concept related to the parameter used to calculate the first score. The data and/or the information regarding the player may include, for example, details regarding "personality", "money", and "health". For example, the first calculation means 123 may refer to a database unit that stores various types of details correlated with a corresponding concept among the concept related to personality, the concept related to money, and the concept related to health for at least one of the details regarding personality, the details regarding money, and the details regarding health, and may calculate a score including a feature corresponding to a specific concept among the corresponding concepts according to the degree of correlation with the corresponding concept.

For example, the first calculation means 123 may determine the degree to which the data and/or the information regarding the player is correlated with the concept related to "personality", and calculate the first score according to the determined degree of correlation. For example, the first calculation means 123 may determine the degree to which the data and/or the information regarding the player is correlated with the concept related to "money", and calculate the first score according to the determined degree of correlation. For example, the first calculation means 123 may determine the degree to which the data and/or the information regarding the player is correlated with the concept related to "health", and calculate the first score according to the determined degree of correlation.

The first calculation means 122 may calculate a score that multi-dimensionally represents a feature of a player by using, for example, a machine learning model that has learned a relationship between data and/or information regarding a plurality of players and scores. The data and/or the information regarding the player may include, for example, details regarding "personality", "money", and "health".

For example, when the data and/or the information regarding the player acquired in step S801 is input to the machine learning model, the first score of the player may be output.

In step S803, the second acquisition means 122 of the processor unit 120 acquires data regarding the field in which the action is performed.

The second acquisition means 122 may acquire data regarding a field stored in the database unit 200 via the interface unit 110, for example. The second acquisition means 122 may acquire data regarding a field stored on the network 600 or the blockchain network 700 via the interface unit 110, for example.

In step S804, the second calculation means 124 of the processor unit 120 calculates a second score representing a feature of the field based on the data regarding the field acquired in step S803.

The second calculation means 124 may calculate the second score, for example, based on whether the field is a reliable field. More specifically, the second calculation means 124 may calculate the second score based on, for example, a degree to which the field is managed in a decentralized manner or a degree to which the field is managed in a centralized manner. For example, the second calculation means 124 may calculate the second score by substituting data regarding the field into a function designed such that the second score becomes higher as the field has higher reliability and the second score becomes lower as the field has lower reliability. For example, the second calculation means 124 may calculate the second score by using a machine learning model that has learned a relationship between the data regarding the field and the second score.

In step S805, the determination means 125 of the processor unit 120 determines a matter to be determined when the player performs an action based on the first score calculated in step S802 and the second score calculated in step S804. For example, the determination means 125 may refer to the database unit 200, identify the content associated with the first score calculated in step S802 and the second score calculated in step S804, and determine that the matter to be determined when the player performs the action is the content.

For example, the determination means 125 may determine the matter to be determined when the player performs the action according to a correlation between the first score calculated in step S802 and the second score calculated in step S804. Alternatively, for example, the determination means 125 may determine the matter to be determined when the player performs the action according to a combination of the first score calculated in step S802 and the second score calculated in step S804. Alternatively, for example, the determination means 125 may determine the matter to be determined when the player performs the action based on a feature derived from the first score calculated in step S802 and the second score calculated in step S804. The determination means 125 may derive a specific feature from the score by using any method. In one example, the determination means 125 may extract a specific feature from features included in the first score calculated in step S802 and/or the second score calculated in step S804. In another example, the determination means 125 may derive a specific feature by applying a specific function to the first score calculated in step S802 and/or the second score calculated in step S804. For example, the determination means 125 may derive a feature by applying a function (that is, a function according to the feature of the field) corresponding to the second score calculated in step S804 to the first score calculated in step S802. For example, the determination means 125 may derive the feature by using a machine learning model that has learned a relationship between the first score and the second score, and the derived feature. For example, the determination means 125 may determine the matter to be determined when the player performs the action by substituting the first score calculated in step S802 and the second score calculated in step S804, or a correlation coefficient therebetween, a calculation value thereof, or the feature derived therefrom into an equation for determining the matter to be determined when the player performs the action. Alternatively, a plurality of combinations of the methods described above may be used to determine the matter to be determined when the player performs the action.

In one embodiment, in step S805, the determination means 125 may determine the matter to be determined when the player performs the action based on the first score, the second score, and the rule related to the action. This is useful, for example, in a case where a matter to be determined when a player performs an action cannot be uniquely determined by using the first score and the second score. This is because, even in a case where a matter to be determined when a player performs an action cannot be uniquely determined by using the first score and the second score, it is possible to uniquely determine the matter to be determined when the player performs the action by also considering the rule related to the action.

In a case of determining the matter to be determined when the player performs the action based on the first score, the second score, and the rule related to the action in step S805, the processing 800 may include a step of changing the rule. This is applied to a case where the processing 800 is performed in the processor unit 120'.

For example, the processing 800 may include, before step S805, a step in which the change means 126 of the processor unit 120' receives votes of at least some of the stakeholders related to the action with respect to the change of the rule, and a step in which the change means 126 changes the rule based on a result of the votes.

Alternatively, for example, the processing 800 may include, before step S805, a step in which the change means 126 of the processor unit 120' determines whether or not a predetermined condition related to the rule change is satisfied, and a step in which the change means 126 changes the rule in a case where it is determined that the predetermined condition is satisfied. The predetermined condition may be, for example, when at least one of a predetermined time, a predetermined elapsed time, and a predetermined number of participants is satisfied.

In step S805, a matter to be determined when the player performs the action is determined based on the first score calculated in step S802, the second score calculated in step S804, and the changed rule.

As described above, by changing the rule related to the action and determining the matter to be determined when the player performs the action by using the changed rule, a matter to be determined when the player performs the action is not constant, and a matter to be determined when the player performs the action can be changed according to a trend or according to an actual situation of the world. This may contribute to the development of the field (for example, a virtual space or a metaverse).

As described above, in the processing 800, the score representing the feature of the player and the score representing the feature of the field can be used to determine the matter to be determined when the player performs the action. For example, through the processing 800, it is possible to automatically determine a matter to be determined when a player performs an action without the need for a centralized administrator. That is, through the processing 800, it is possible to realize an autonomous decentralized system that does not require a centralized administrator. Through the processing 800, in an autonomous decentralized system, even in the absence of a centralized administrator, a cycle including (a) intention of an action, (b) determination of a matter to be determined when a player performs the action, and (c) execution of the action according to the determined matter can be autonomously performed. Autonomous decentralized systems are applicable, for example, to digital cities or metaverses in a virtual space, and this suggests a possibility of creation of a new economic sphere in a virtual space that is separate from the real world.

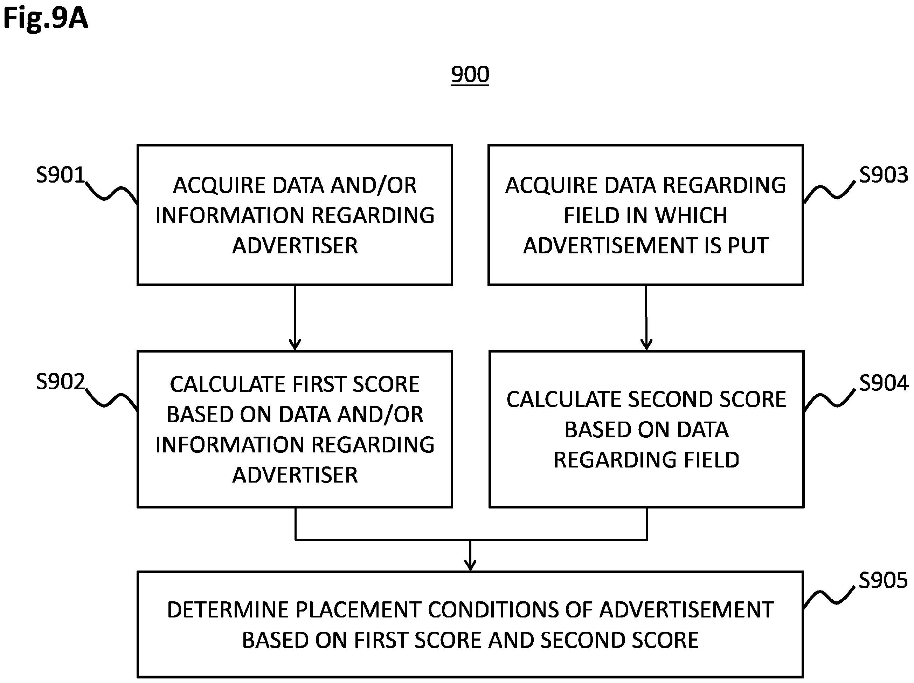

Fig. 9A illustrates an example (900) of processing in a case where the system 100 that determines a matter to be determined when a player performs an action is applied to the advertisement field. The processing 900 is performed in the processor unit 120 of the system 100. The processing 900 may be similarly performed in the processor unit 120'.

In step S901, the first acquisition means 121 of the processor unit 120 acquires data and/or information regarding an advertiser. The process in step S901 is similar to the process in step S801.

In step S902, the first calculation means 122 of the processor unit 120 calculates a first score representing a feature of the advertiser based on the data and/or the information regarding the advertiser acquired in step S901. The process in step S902 is similar to the process in step S802.

In step S903, the second acquisition means 122 of the processor unit 120 acquires data regarding the field in which an advertisement is to be placed. The process in step S903 is similar to the process in step S803.

In step S904, the second calculation means 124 of the processor unit 120 calculates a second score representing a feature of the field based on the data regarding the field acquired in step S903. The process in step S904 is similar to the process in step S804.

In step S905, the determination means 125 of the processor unit 120 determines placement conditions of the advertisement based on the first score calculated in step S902 and the second score calculated in step S904. For example, the determination means 125 may refer to the database unit 200, and determine placement conditions associated with the first score calculated in step S902 and the second score calculated in step S904 as placement conditions of the advertisement to be placed by the advertiser. The placement conditions include, for example, at least one of a placement location of the advertisement and a cost of the advertisement. The placement location of the advertisement is associated with a target of the advertisement, a placement size of the advertisement, and/or a placement period of the advertisement, and determining the placement location of the advertisement may lead to determining the target of the advertisement, the placement size of the advertisement, and/or the placement period of the advertisement. The cost of the advertisement may include an amount of an incentive to be provided to an advertisement recipient who receives the provision of the advertisement in addition to the cost for placing the advertisement on the placement location.

For example, the determination means 125 may determine the placement conditions according to a correlation between the first score calculated in step S902 and the second score calculated in step S904. Alternatively, for example, the determination means 125 may determine the placement conditions according to a combination of the first score calculated in step S902 and the second score calculated in step S904. Alternatively, for example, the determination means 125 may determine the placement conditions based on a feature derived from the first score calculated in step S902 and the second score calculated in step S904. The determination means 125 may derive a specific feature from the score by using any method. In one example, the determination means 125 may extract a specific feature from features included in the first score calculated in step S902 and/or the second score calculated in step S904. In another example, the determination means 125 may derive a specific feature by applying a specific function to the first score calculated in step S902 and/or the second score calculated in step S904. For example, the determination means 125 may derive a feature by applying a function (that is, a function according to the feature of the field) corresponding to the second score calculated in step S904 to the first score calculated in step S902. For example, the determination means 125 may derive the feature by using a machine learning model that has learned a relationship between the first score and the second score, and the derived feature. For example, the determination means 125 may determine the placement conditions (for example, a cost of the advertisement) by substituting the first score calculated in step S902 and the second score calculated in step S904, or a correlation coefficient therebetween, a calculation value thereof, or the feature derived therefrom into an equation for determining the placement conditions (for example, a cost of the advertisement). Alternatively, the placement conditions may be determined by using a plurality of combinations of the above-described methods.

In one embodiment, in step S905, the determination means 125 may determine the placement conditions of the advertisement based on the first score, the second score, and the rule related to the action. This is useful, for example, in a case where the placement conditions of the advertisement cannot be uniquely determined by using the first score and the second score. This is because, even when the placement conditions of the advertisement cannot be uniquely determined by using the first score and the second score, it is possible to uniquely determine the placement conditions of the advertisement by considering the rule related to the action.

In a case where the placement conditions of the advertisement are determined based on the first score, the second score, and the rule related to the action in step S905, the processing 900 may include a step of changing the rule. This is applied to a case where the processing 900 is performed in the processor unit 120'. The step of changing the rule is similar to the step described in the above processing 800.

Consequently, in step S905, the placement conditions of the advertisement are determined based on the first score calculated in step S902, the second score calculated in step S904, and the changed rule.

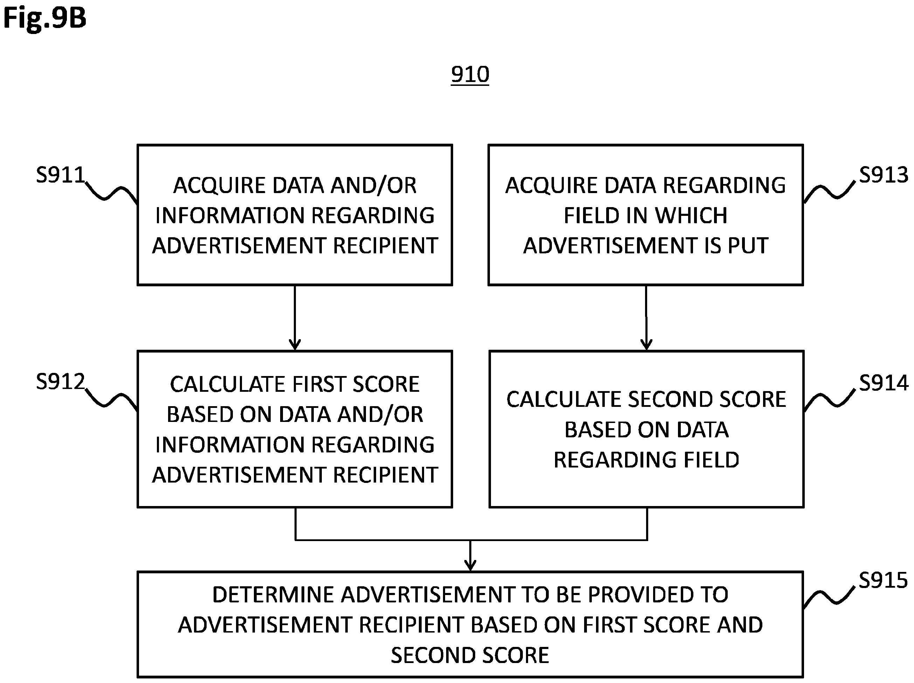

Fig. 9B illustrates another example (910) of processing in a case where the system 100 that determines a matter to be determined when a player performs an action is applied to the advertisement field. The processing 910 is performed in the processor unit 120 of the system 100. The processing 910 may be similarly performed in the processor unit 120'. The processing 910 differs from the processing 900 in that the player is an advertisement recipient.

In step S911, the first acquisition means 121 of the processor unit 120 acquires data and/or information regarding the advertisement recipient. The process in step S911 is similar to the process in step S801.

In step S912, the first calculation means 122 of the processor unit 120 calculates the first score representing a feature of the advertisement recipient based on the data and/or the information regarding the advertisement recipient acquired in step S911. The process in step S912 is similar to the process in step S802.

In step S913, the second acquisition means 122 of the processor unit 120 acquires data regarding the field in which the advertisement is to be placed. The process in step S913 is similar to the process in step S803.

In step S914, the second calculation means 124 of the processor unit 120 calculates a second score representing the feature of the field based on the data regarding the field acquired in step S913. The process in step S914 is similar to the process in step S804.

In step S915, the determination means 125 of the processor unit 120 determines an advertisement to be provided to the advertisement recipient based on the first score calculated in step S912 and the second score calculated in step S914. For example, the determination means 125 may refer to the database unit 200 and determine an advertisement associated with the first score calculated in step S912 and the second score calculated in step S914 as an advertisement to be provided to the advertisement recipient. The advertisement to be provided to the advertisement recipient may be an advertisement that is provided to the advertisement recipient and in which an incentive can be obtained by performing a specified action.

For example, the determination means 125 may determine the advertisement to be provided according to a correlation between the first score calculated in step S912 and the second score calculated in step S914. Alternatively, for example, the determination means 125 may determine the advertisement to be provided according to a combination of the first score calculated in step S912 and the second score calculated in step S914. Alternatively, for example, the determination means 125 may determine an advertisement to be provided based on a feature derived from the first score calculated in step S912 and the second score calculated in step S914. The determination means 125 may derive a specific feature from the score by using any method. In one example, the determination means 125 may extract a specific feature from features included in the first score calculated in step S912 and/or the second score calculated in step S914. In another example, the determination means 125 may derive a specific feature by applying a specific function to the first score calculated in step S912 and/or the second score calculated in step S914. For example, the determination means 125 may derive a feature by applying a function (that is, a function according to the feature of the field) corresponding to the second score calculated in step S914 to the first score calculated in step S912. For example, the determination means 125 may derive the feature by using a machine learning model that has learned a relationship between the first score and the second score, and the derived feature. For example, the determination means 125 may determine an advertisement (for example, a cost of the advertisement) to be provided by substituting the first score calculated in step S912 and the second score calculated in step S914, or a correlation coefficient therebetween, a calculation value thereof, or a feature derived therefrom into an equation for determining the advertisement (for example, a cost of the advertisement) to be provided. Alternatively, a plurality of combinations of the above-described methods may be used to determine an advertisement to be provided.

In one embodiment, in step S915, the determination means 125 may determine the advertisement to be provided based on the first score, the second score, and the rule related to the action. This is useful, for example, in a case where an advertisement to be provided cannot be uniquely determined by using the first score and the second score. This is because, even in a case where an advertisement to be provided cannot be uniquely determined by using the first score and the second score, it may be possible to uniquely determine an advertisement to be provided by also considering the rule related to the action.

In a case of determining an advertisement to be provided based on the first score, the second score, and the rule related to the action in step S915, the processing 910 may include changing the rule. This is applied to a case where the processing 910 is performed in the processor unit 120'. The step of changing the rule is similar to the step described in the above processing 800.

Consequently, in step S915, an advertisement to be provided is determined based on the first score calculated in step S912, the second score calculated in step S914, and the changed rule.

The advertisement recipient may be provided with the determined advertisement. The advertisement recipient may perform, for example, an action designated in the provided advertisement. As a result, the advertisement recipient may be provided with an incentive.

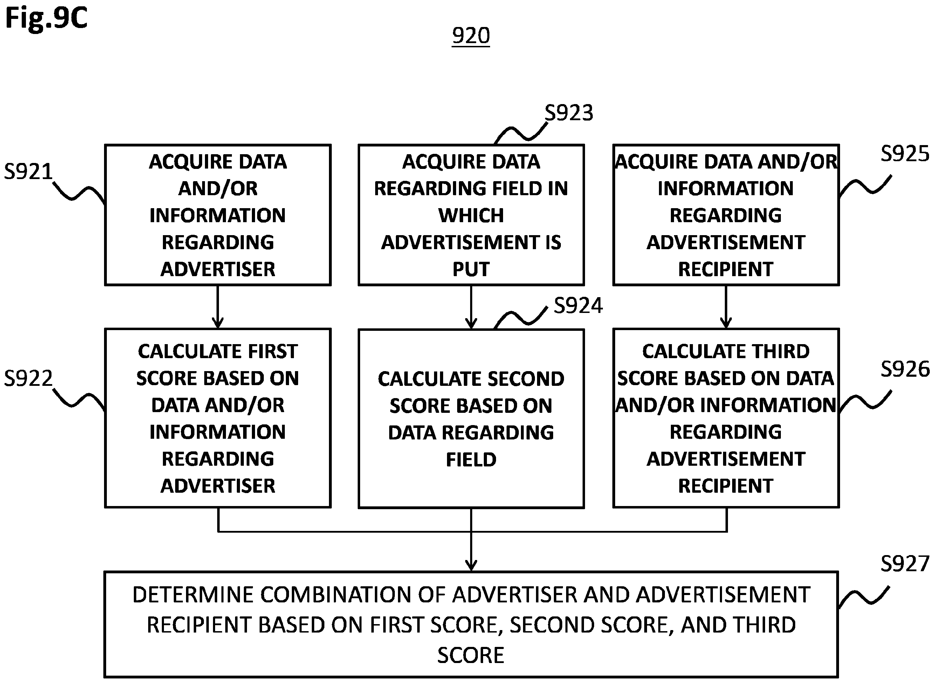

Fig. 9C illustrates another example (920) of processing in a case where the system 100 that determines a matter to be determined when a player performs an action is applied to the advertisement field. The processing 920 is performed in the processor unit 120 of the system 100. The processing 920 may be similarly performed in the processor unit 120'. The processing 920 differs from the processing 900 in that the player is an advertisement recipient.

In step S921, the first acquisition means 121 of the processor unit 120 acquires data and/or information regarding an advertiser for a plurality of advertisers. The process in step S921 is similar to the processes in steps S901 and S801.

In step S922, the first calculation means 122 of the processor unit 120 calculates, for a plurality of advertisers, a first score representing a feature of the advertiser based on the data and/or information regarding the advertiser acquired in step S921. The process in step S922 is similar to the processes in steps S902 and S802.

In step S923, the second acquisition means 122 of the processor unit 120 acquires data regarding the field in which the advertisement is placed. The process in step S923 is similar to the processes in steps S903 and S803.

In step S924, the second calculation means 124 of the processor unit 120 calculates a second score representing a feature of the field based on the data regarding the field acquired in step S923. The process in step S924 is similar to the processes in steps S904 and S804.

In step S925, the first acquisition means 121 (or third acquisition means separate from the first acquisition means) of the processor unit 120 acquires data and/or information regarding an advertisement recipient for a plurality of advertisement recipients. The process in step S925 is similar to the processes in steps S911 and S801.

In step S926, the first calculation means 122 (or the third acquisition means separate from the first calculation means) of the processor unit 120 calculates, for a plurality of advertisement recipients, a third score representing a feature of the advertisement recipient based on the data and/or information regarding the advertisement recipient acquired in step S925. The process in step S926 is similar to the processes in steps S912 and S802.

In step S927, the determination means 125 of the processor unit 120 determines a combination of an advertiser and an advertisement recipient among the plurality of advertisers and the plurality of advertisement recipient based on the first score calculated in step S922, the second score calculated in step S924, and the third score calculated in step S926. For example, the determination means 125 may refer to the database unit 200, and determine an advertiser and an advertisement recipient satisfying conditions associated with the first score calculated in step S922, the second score calculated in step S924, and the third score calculated in step S926 as a combination of the advertiser and the advertisement recipient. The combination of the advertiser and the advertisement recipient may be, for example, a common part (product set) between an advertisement recipient suitable for the advertiser and an advertiser that places an advertisement suitable for the advertisement recipient, and preferably a common part (product set) between an advertisement recipient optimal for the advertiser and an advertiser that places an advertisement optimal for the advertisement recipient.

For example, the determination means 125 may determine a combination of the advertiser and the advertisement recipient by determining a third score that the advertisement recipient to be combined with the advertiser is to have based on the first score calculated in step S922 and the second score calculated in step S924 for one advertiser among the plurality of advertisers and specifying an advertisement recipient of which the third score calculated in step S926 satisfies the determined third score. Alternatively, for example, the determination means 125 may determine the combination of the advertiser and the advertisement recipient according to a combination of the first score calculated in step S922 and the second score calculated in step S924. Alternatively, for example, the determination means 125 may determine the combination of the advertiser and the advertisement recipient by determining a first score that an advertiser to be combined with one advertisement recipient among the plurality of advertisement recipients is to have based on the third score calculated in step S926 and the second score calculated in step S924, and specifying an advertiser of which the first score calculated in step S922 satisfies the determined first score.

In one embodiment, in step S927, the determination means 125 may determine a combination of the advertiser and the advertisement recipient based on the first score, the second score, the third score, and the rule related to the action. This is useful, for example, in a case where a combination of the advertiser and the advertisement recipient cannot be uniquely determined by using the first score, the second score, and the third score. This is because even in a case where a combination of the advertiser and the advertisement recipient cannot be uniquely determined by using the first score, the second score, and the third score, it may be possible to uniquely determine the combination of the advertiser and the advertisement recipient by also considering the rule related to the action.

When determining a combination of the advertiser and the advertisement recipient based on the first score, the second score, the third score, and the rule related to the action in step S927, the processing 920 may include changing the rule. This is applied to a case where the processing 920 is performed in the processor unit 120'. The step of changing the rule is similar to the step described in the above processing 800.

Consequently, in step S927, a combination of the advertiser and the advertisement recipient is determined based on the first score calculated in step S922, the second score calculated in step S924, the third score calculated in step S926, and the changed rule.

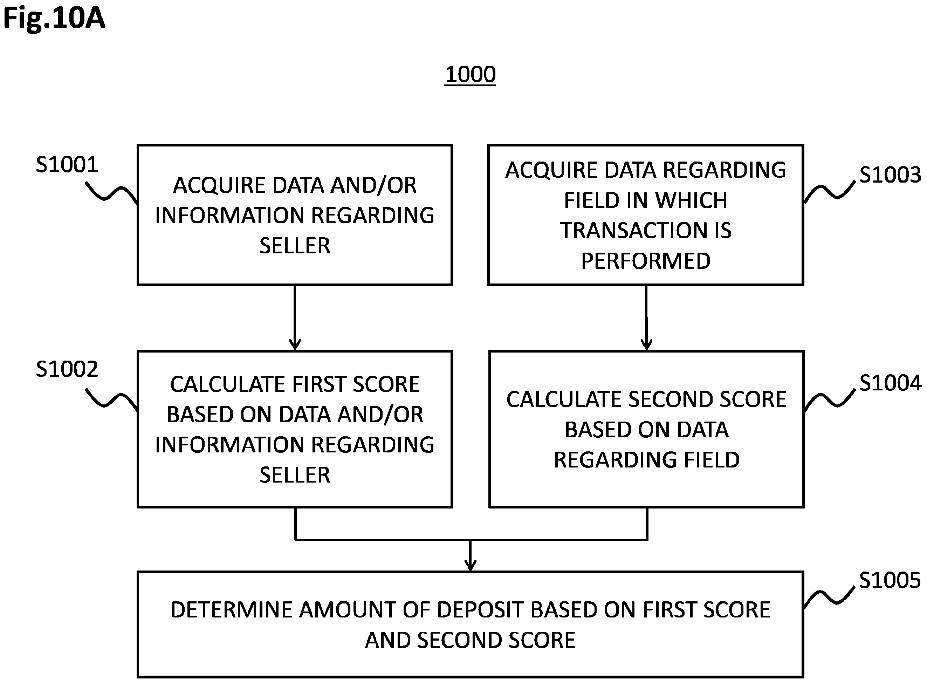

Fig. 10A illustrates an example (1000) of processing in a case where the system 100 that determines a matter to be determined when a player performs an action is applied to the electronic commerce field. The processing 1000 is performed in the processor unit 120 of the system 100. The processing 1000 may be similarly performed in the processor unit 120'.

In step S1001, the first acquisition means 121 of the processor unit 120 acquires data and/or information regarding the seller. The process in step S1001 is similar to the process in step S801.

In step S1002, the first calculation means 122 of the processor unit 120 calculates a first score representing a feature of the seller based on the data and/or information regarding the seller acquired in step S1001. The process in step S1002 is similar to the process in step S802.

In step S1003, the second acquisition means 122 of the processor unit 120 acquires data regarding the field in which the electronic commerce is performed. The process in step S1003 is similar to the process in step S803.

In step S1004, the second calculation means 124 of the processor unit 120 calculates a second score representing a feature of the field based on the data regarding the field acquired in step S1003. The process in step S1004 is similar to the process in step S804.

In step S1005, the determination means 125 of the processor unit 120 determines an amount of a deposit to be paid by the seller based on the first score calculated in step S1002 and the second score calculated in step S1004. For example, the determination means 125 may refer to the database unit 200, and determine an amount of a deposit associated with the first score calculated in step S1002 and the second score calculated in step S1004 as the amount of the deposit to be paid by the seller.

For example, the determination means 125 may determine the amount of the deposit according to a correlation between the first score calculated in step S1002 and the second score calculated in step S1004. Alternatively, for example, the determination means 125 may determine the amount of the deposit according to a combination of the first score calculated in step S1002 and the second score calculated in step S1004. Alternatively, for example, the determination means 125 may determine the amount of the deposit based on a feature derived from the first score calculated in step S1002 and the second score calculated in step S1004. The determination means 125 may derive a specific feature from the score by using any method. In one example, the determination means 125 may extract a specific feature from the features included in the first score calculated in step S1002 and/or the second score calculated in step S1004. In another example, the determination means 125 may derive a specific feature by applying a specific function to the first score calculated in step S1002 and/or the second score calculated in step S1004. For example, the determination means 125 may derive the feature by applying a function (that is, a function according to the feature of the field) corresponding to the second score calculated in step S1004 to the first score calculated in step S1002. For example, the determination means 125 may derive the feature by using a machine learning model that has learned a relationship between the first score and the second score, and the derived feature. For example, the determination means 125 may determine the amount of the deposit by substituting the first score calculated in step S1002 and the second score calculated in step S1004, or a correlation coefficient therebetween, a calculation value thereof, or a feature derived therefrom into an equation for determining the amount of the deposit. Alternatively, the amount of the deposit may be determined by using a plurality of combinations of the above-described methods.

In one embodiment, in step S1005, the determination means 125 may determine the amount of the deposit to be paid by the seller based on the first score, the second score, and the rule related to the action. This is useful, for example, in a case where the amount of the deposit to be paid by the seller cannot be uniquely determined by using the first score and the second score. This is because even in a case where the amount of the deposit to be paid by the seller cannot be uniquely determined by using the first score and the second score, it may be possible to uniquely determine the amount of the deposit to be paid by the seller by also considering the rule related to the action.

In a case of determining the amount of the deposit to be paid by the seller based on the first score, the second score, and the rule related to the action in step S1005, the processing 1000 may include a step of changing the rule. This is applied to a case where the processing 1000 is performed in the processor unit 120'. The step of changing the rule is similar to the step described in the above processing 800.

Consequently, in step S1005, the amount of the deposit to be paid by the seller is determined based on the first score calculated in step S1002, the second score calculated in step S1004, and the changed rule.

In step S1005, the determination means 125 may determine the amount of the deposit to be paid by the seller also based on a fourth score representing a feature of a product or a service that is a transaction target in the electronic commerce. As a result, an amount of a deposit corresponding to a product or a service to be sold can be determined.

For example, the processing 1000 may include, before step S1005, a step in which the fourth acquisition means of the processor unit 120 acquires data regarding a product or a service that is a transaction target in electronic commerce, and a step in which the fourth calculation means of the processor unit 120 calculates a fourth score representing a feature of the product or the service based on the data regarding the product or the service that is a transaction target in the electronic commerce.

In step S1005, the amount of the deposit to be paid by the seller is determined based on the first score calculated in step S1002, the second score calculated in step S1004, and the calculated fourth score, or based on the first score calculated in step S1002, the second score calculated in step S1004, the calculated fourth score, and the rule or the changed rule.

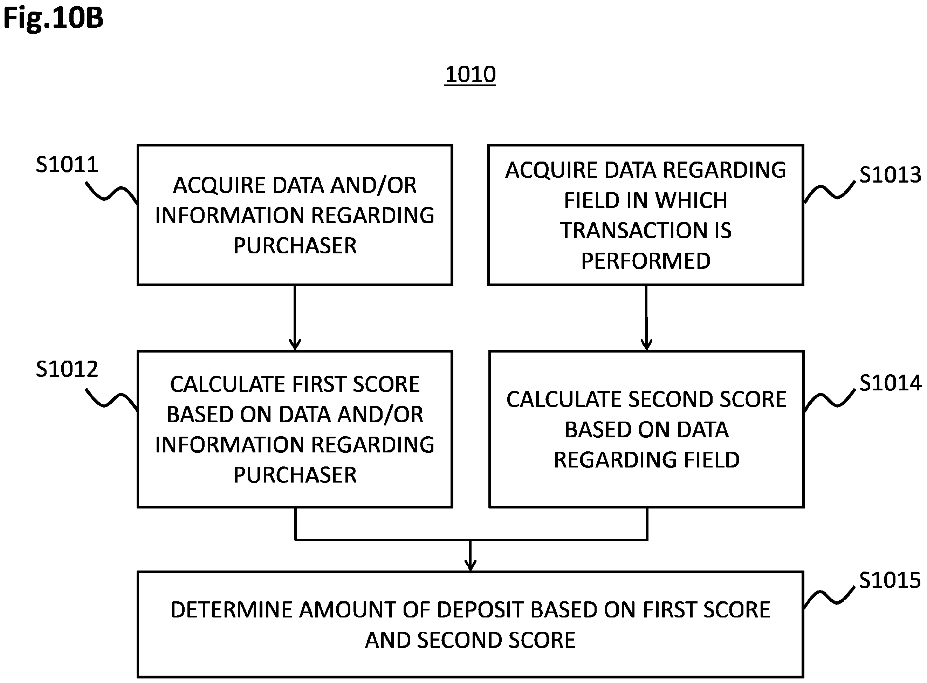

Fig. 10B illustrates an example (1010) of another processing in a case where the system 100 that determines a matter to be determined when a player performs an action is applied to the electronic commerce field. The processing 1010 is performed in the processor unit 120 of the system 100. The processing 1010 may be similarly performed in the processor unit 120'.

In step S1011, the first acquisition means 121 of the processor unit 120 acquires data and/or information regarding a purchaser. The process in step S1011 is similar to the process in step S801.

In step S1012, the first calculation means 122 of the processor unit 120 calculates a first score representing a feature of the purchaser based on the data and/or information regarding the purchaser acquired in step S1011. The process in step S1012 is similar to the process in step S802.

In step S1013, the second acquisition means 122 of the processor unit 120 acquires data regarding the field in which the electronic commerce is performed. The process in step S1013 is similar to the process in step S803.

In step S1014, the second calculation means 124 of the processor unit 120 calculates a second score representing a feature of the field based on the data regarding the field acquired in step S1013. The process in step S1014 is similar to the process in step S804.

In step S1015, the determination means 125 of the processor unit 120 determines an amount of a deposit to be paid by the purchaser based on the first score calculated in step S1012 and the second score calculated in step S1014. For example, the determination means 125 may refer to the database unit 200, and determine an amount of a deposit associated with the first score calculated in step S1012 and the second score calculated in step S1014 as the amount of the deposit to be paid by the purchaser.

For example, the determination means 125 may determine the amount of the deposit according to a correlation between the first score calculated in step S1012 and the second score calculated in step S1014. Alternatively, for example, the determination means 125 may determine the amount of the deposit according to a combination of the first score calculated in step S1012 and the second score calculated in step S1014. Alternatively, for example, the determination means 125 may determine the amount of the deposit based on a feature derived from the first score calculated in step S1012 and the second score calculated in step S1014. The determination means 125 may derive a specific feature from the score by using any method. In one example, the determination means 125 may extract a specific feature from the features included in the first score calculated in step S1012 and/or the second score calculated in step S1014. In another example, the determination means 125 may derive a specific feature by applying a specific function to the first score calculated in step S1012 and/or the second score calculated in step S1014. For example, the determination means 125 may derive a feature by applying a function (that is, a function according to the feature of the field) corresponding to the second score calculated in step S1014 to the first score calculated in step S1012. For example, the determination means 125 may derive the feature by using a machine learning model that has learned a relationship between the first score and the second score, and the derived feature. For example, the determination means 125 may determine the amount of the deposit by substituting the first score calculated in step S1012 and the second score calculated in step S1014, or a correlation coefficient therebetween, a calculation value thereof, or a feature derived therefrom into an equation for determining the amount of the deposit. Alternatively, the amount of the deposit may be determined by using a plurality of combinations of the above-described methods.

In one embodiment, in step S1015, the determination means 125 may determine the amount of the deposit to be paid by the purchaser based on the first score, the second score, and the rule related to the action. This is useful, for example, in a case where the amount of the deposit to be paid by the purchaser cannot be uniquely determined by using the first score and the second score. This is because even in a case where the amount of the deposit to be paid by the purchaser cannot be uniquely determined by using the first score and the second score, it may be possible to uniquely determine the amount of the deposit to be paid by the purchaser by also considering the rule related to the action.

In a case where the amount of deposit to be paid by the purchaser is determined based on the first score, the second score, and the rule related to the action in step S1015, the processing 1010 may include a step of changing the rule. This is applied to a case where the processing 1010 is performed in the processor unit 120'. The step of changing the rule is similar to the step described in the above processing 800.

Consequently, in step S1015, the amount of the deposit to be paid by the purchaser is determined based on the first score calculated in step S1012, the second score calculated in step S1014, and the changed rule.

In step S1015, the determination means 125 may determine the amount of the deposit to be paid by the purchaser also based on a fourth score representing a feature of a product or a service that is a transaction target in the electronic commerce. As a result, the amount of the deposit corresponding to the product or a service to be purchased can be determined.

For example, the processing 1010 may include, before step S1015, a step in which the fourth acquisition means of the processor unit 120 acquires data regarding a product or a service that is a transaction target in the electronic commerce, and a step in which the fourth calculation means of the processor unit 120 calculates a fourth score representing a feature of the product or the service based on the data regarding the product or the service that is a transaction target in the electronic commerce.

In step S1015, the amount of the deposit to be paid by the purchaser is determined based on the first score calculated in step S1012, the second score calculated in step S1014, and the calculated fourth score, or based on the first score calculated in step S1012, the second score calculated in step S1014, the calculated fourth score, and the rule or the changed rule.

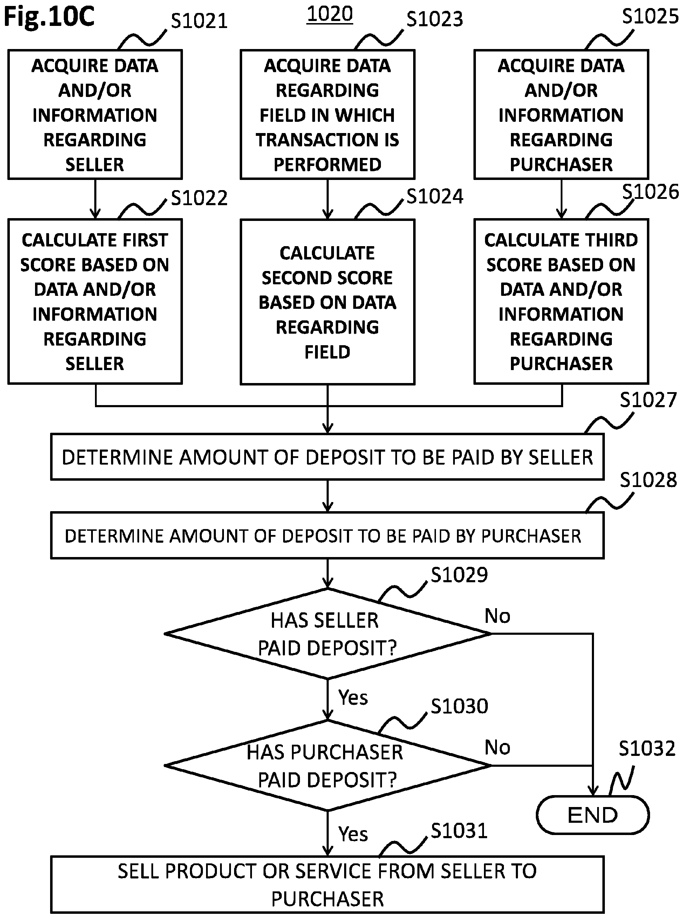

Fig. 10C illustrates another example (1020) of processing in a case where the system 100 that determines a matter to be determined when a player performs an action is applied to the electronic commerce field. The processing 1020 is performed in the processor unit 120 of the system 100. The processing 1020 may be similarly performed in the processor unit 120'.

In step S1021, the first acquisition means 121 of the processor unit 120 acquires data and/or information regarding a seller. The process in step S1021 is similar to the processes in steps S1001 and S801.

In step S1022, the first calculation means 122 of the processor unit 120 calculates a first score representing a feature of the seller based on the data and/or information regarding the seller acquired in step S1021. The process in step S1022 is similar to the processes in steps S1002 and S802.

In step S1023, the second acquisition means 122 of the processor unit 120 acquires data regarding the field in which the electronic commerce is performed. The process in step S1023 is similar to the processes in steps S1003 and S803.

In step S1024, the second calculation means 124 of the processor unit 120 calculates a second score representing a feature of the field based on the data regarding the field acquired in step S1023. The process in step S1024 is similar to the processes in steps S1004 and S804.

In step S1025, the first acquisition means 121 (or third acquisition means separate from the first acquisition means) of the processor unit 120 acquires data and/or information regarding the purchaser. The process in step S1025 is similar to the processes in steps S1011 and S801.

In step S1026, the first calculation means 122 (or third acquisition means separate from the first calculation means) of the processor unit 120 calculates a third score representing a feature of the purchaser based on the data and/or the information regarding the purchaser acquired in step S1025. The process in step S1026 is similar to the processes in steps S1012 and S802.

In step S1027, the determination means 125 of the processor unit 120 determines an amount of a deposit to be paid by the seller based on the first score calculated in step S1022 and the second score calculated in step S1024. The process in step S1027 is similar to the process in step S1005.

In step S1028, the determination means 125 of the processor unit 120 determines an amount of a deposit to be paid by the purchaser based on the second score calculated in step S1024 and the third score calculated in step S1026. The process in step S1028 is similar to the process in step S1015.

In step S1029, the determination means 125 determines whether the seller has paid the amount of the deposit determined in step S1027. For example, the determination means 125 monitors an account or the like for payment of the deposit, and determines that the seller has paid the deposit when it is detected that the seller has paid the deposit within a predetermined period. For example, the determination means 125 monitors an account or the like for payment of the deposit, and determines that the seller has not paid the deposit when it is detected that the seller has not paid the deposit within a predetermined period. When it is determined that the seller has paid the deposit (Yes), the processing proceeds to step S1030. When it is determined that the seller has not paid the deposit (No), the processing proceeds to step S1032, and the transaction between the seller and the purchaser is canceled.

In step S1030, the determination means 125 determines whether the purchaser has paid the amount of the deposit determined in step S1028. For example, the determination means 125 monitors an account or the like for payment of the deposit, and determines that the purchaser has paid the deposit when it is detected that the purchaser has paid the deposit within a predetermined period. For example, the determination means 125 monitors an account or the like for payment of the deposit, and determines that the purchaser has not paid the deposit when it is detected that the purchaser has not paid the deposit within a predetermined period. When it is determined that the purchaser has paid the deposit (Yes), the processing proceeds to step S1031. When it is determined that the purchaser has not paid the deposit (No), the processing proceeds to step S1032, and the transaction between the seller and the purchaser is canceled.

In step S1031, selling means that may be included in the processor unit 120 enables the seller to sell the product or the service to the purchaser. By enabling a product or a service to be sold after it is checked that both the seller and the purchaser have paid the deposits, fraudulent electronic commerce may be curbed. This is particularly useful in the absence of an administrator monitoring the electronic commerce.

In the example described above with reference to Figs. 8, 9A, 9B, 9C, 10A, 10B, and 10C, the processes are performed in a specific order. However, the order of each process is not limited to the described order, and processes may be performed in any logically possible order. For example, before performing step S801, step S803 and/or step S804 may be performed. For example, before performing step S901, step S903 and/or step S904 may be performed. For example, the order of step S1029 and step S1030 may be changed.

In the examples described above with reference to Figs. 8, 9A, 9B, 9C, 10A, 10B, and 10C, it has been described that the process in each step illustrated in Figs. 8, 9A, 9B, 9C, 10A, 10B, and 10C is realized by the processor unit 120 or 120' and the program stored in the memory unit 130, but the present invention is not limited thereto. At least one of the process in each step illustrated in Figs. 8, 9A, 9B, 9C, 10A, 10B, and 10C may be realized by a hardware configuration such as a control circuit.

The present invention is not limited to the above-described embodiments. It is understood that the invention is to be interpreted only by the claims. It is understood from the description of the specific preferred embodiments of the present invention that a person skilled in the art can implement the equivalent scope based on the description of the present invention and the common general knowledge.

### INDUSTRIAL APPLICABILITY

The present invention is useful as providing a system or the like that determines a matter to be determined when a player performs an action. An autonomous decentralized system can be implemented with a system that determines a matter to be determined when a player performs an action, which is applicable to a digital town or a metaverse in a virtual space. This may lead to the creation of a new economic sphere, separate from the real world, in the virtual space.

### DESCRIPTION OF REFERENCE SIGNS

10A, 10B, 10C, 10D Platform
20A Advertiser
20B Advertisement recipient
20C Player of e-sport
20D Cleaning company
30A Advertisement recipient
30B Purchaser
30C Spectator
40A, 40B, 40C, 40D Interested party
100 System
110 Interface unit
120 Processor unit
130 Memory unit
200 Database unit
300, 400 Player terminal device
500 Voter terminal device

## Claims

1. A system that determines a matter to be determined when a player performs an action, the system comprising:
first acquisition means for acquiring data and/or information regarding a player related to an action;
first calculation means for calculating a first score representing a feature of the player based on the acquired data and/or information regarding the player;
second acquisition means for acquiring data regarding a field in which the action is performed;
second calculation means for calculating a second score representing a feature of the field based on the acquired data regarding the field; and
determination means for determining the matter to be determined based on the first score and the second score.

2. The system according to claim 1, wherein the determination means determines the matter to be determined based on the first score, the second score, and a rule related to the action.

3. The system according to claim 2, further comprising change means for changing the rule, wherein
the change means is configured to:
receive votes of at least some of stakeholders related to the action with respect to change of the rule, and
change the rule based on a result of the votes.

4. The system according to any one of claims 1 to 3, wherein the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.

5. The system according to any one of claims 1 to 4, wherein the second calculation means calculates the second score based on whether the field is a reliable field.

6. The system according to claim 5, wherein the second calculation means calculates the second score based on a degree to which the field is managed in a decentralized manner or a degree to which the field is managed in a centralized manner.

7. A method of determining a matter to be determined when a player performs an action, the method comprising:
acquiring data and/or information regarding a player related to an action;
calculating a first score representing a feature of the player based on the acquired data and/or information regarding the player;
acquiring data regarding a field in which the action is performed;
calculating a second score representing a feature of the field based on the acquired data regarding the field; and
determining the matter to be determined based on the first score and the second score.

8. A program for determining a matter to be determined when a player performs an action, the program being executed in a system including a processor unit and causing the processor unit to execute processes comprising:
acquiring data and/or information regarding a player related to an action;
calculating a first score representing a feature of the player based on the acquired data and/or information regarding the player;
acquiring data regarding a field in which the action is performed;
calculating a second score representing a feature of the field based on the acquired data regarding the field; and
determining the matter to be determined based on the first score and the second score.

9. A system that determines a matter to be determined when an advertiser places an advertisement, the system comprising:
first acquisition means for acquiring data and/or information regarding an advertiser;
first calculation means for calculating a first score representing a feature of the advertiser based on the acquired data and/or information regarding the advertiser;
second acquisition means for acquiring data regarding a field in which an advertisement is placed;
second calculation means for calculating a second score representing a feature of the field based on the acquired data regarding the field; and
determination means for determining placement conditions of the advertisement based on the first score and the second score.

10. The system according to claim 9, wherein the determination means determines the placement conditions of the advertisement based on the first score, the second score, and a rule related to the advertisement.

11. The system according to claim 10, further comprising change means for changing the rule, wherein
the change means
receives votes of at least some of stakeholders related to the advertisement with respect to change of the rule, and
changes the rule based on a result of the votes.

12. The system according to any one of claims 9 to 11, wherein the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.

13. The system according to any one of claims 9 to 12, wherein the second calculation means calculates the second score based on whether the field is a reliable field.

14. The system according to claim 13, wherein the second calculation means calculates the second score based on a degree to which the field is managed in a decentralized manner or a degree to which the field is managed in a centralized manner.

15. The system according to any one of claims 9 to 14, wherein the placement conditions include at least one of a placement location of the advertisement and a cost of the advertisement.

16. The system according to claim 15, wherein the cost of the advertisement includes an amount of an incentive to be provided to an advertisement recipient provided with the advertisement.

17. The system according to any one of claims 9 to 16, wherein the determination means determines the placement conditions of the advertisement according to an association between the first score and the second score.

18. A method of determining a matter to be determined when an advertiser places an advertisement, the method comprising:
acquiring data and/or information regarding an advertiser;
calculating a first score representing a feature of the advertiser based on the acquired data and/or information regarding the advertiser;
acquiring data regarding a field in which an advertisement is placed;
calculating a second score representing a feature of the field based on the acquired data regarding the field; and
determining placement conditions of the advertisement based on the first score and the second score.

19. A program for determining a matter to be determined when an advertiser places an advertisement, the program being executed in a system including a processor unit and causing the processor unit to execute processes comprising:
acquiring data and/or information regarding an advertiser;
calculating a first score representing a feature of the advertiser based on the acquired data and/or information regarding the advertiser;
acquiring data regarding a field in which an advertisement is placed;
calculating a second score representing a feature of the field based on the acquired data regarding the field; and
determining placement conditions of the advertisement based on the first score and the second score.

20. A system that determines a matter to be determined when an advertisement recipient is provided with an advertisement, the system comprising:
first acquisition means for acquiring data and/or information regarding an advertisement recipient;
first calculation means for calculating a first score representing a feature of the advertisement recipient based on the acquired data and/or information regarding the advertisement recipient;
second acquisition means for acquiring data regarding a field in which an advertisement is placed;
second calculation means for calculating a second score representing a feature of the field based on the acquired data regarding the field; and
determination means for determining the advertisement to be provided to the advertisement recipient based on the first score and the second score.

21. The system according to claim 20, wherein the determination means determines the advertisement to be provided to the advertisement recipient based on the first score, the second score, and a rule related to the advertisement.

22. The system according to claim 21, further comprising change means for changing the rule, wherein
the change means
receives votes of at least some of stakeholders related to the advertisement with respect to change of the rule, and
changes the rule based on a result of the votes.

23. The system according to any one of claims 20 to 22, wherein the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.

24. The system according to any one of claims 20 to 23, wherein the second calculation means calculates the second score based on whether the field is a reliable field.

25. The system according to claim 24, wherein the second calculation means calculates the second score based on a degree to which the field is managed in a decentralized manner or a degree to which the field is managed in a centralized manner.

26. The system according to any one of claims 20 to 25, further comprising:
first providing means for providing the determined advertisement to the advertisement recipient;
detection means for detecting that the advertisement recipient has executed an action designated in the provided advertisement; and
second providing means for providing an incentive to the advertisement recipient according to the detected action.

27. The system according to any one of claims 20 to 26, wherein the determination means determines the advertisement to be provided to the advertisement recipient according to an association between the first score and the second score.

28. A method of determining a matter to be determined when an advertisement recipient is provided with an advertisement, the method comprising:
acquiring data and/or information regarding an advertisement recipient;
calculating a first score representing a feature of the advertisement recipient based on the acquired data and/or information regarding the advertisement recipient;
acquiring data regarding a field in which an advertisement is placed;
calculating a second score representing a feature of the field based on the acquired data regarding the field; and
determining the advertisement to be provided to the advertisement recipient based on the first score and the second score.

29. A program for determining a matter to be determined when an advertisement recipient is provided with an advertisement, the program being executed in a system including a processor unit and causing the processor unit to execute processes comprising:
acquiring data and/or information regarding an advertisement recipient;
calculating a first score representing a feature of the advertisement recipient based on the acquired data and/or information regarding the advertisement recipient;
acquiring data regarding a field in which an advertisement is placed;
calculating a second score representing a feature of the field based on the acquired data regarding the field; and
determining the advertisement to be provided to the advertisement recipient based on the first score and the second score.

30. A system that determines a matter to be determined when an advertiser provides an advertisement and an advertisement recipient is provided with the advertisement, the system comprising:
first acquisition means for acquiring data and/or information regarding an advertiser for a plurality of advertisers;
first calculation means for calculating, for the plurality of advertisers, a first score representing a feature of the advertiser based on the acquired data and/or information regarding the advertiser;
second acquisition means for acquiring data regarding a field in which an advertisement is placed;
second calculation means for calculating a second score representing a feature of the field based on the acquired data regarding the field;
third acquisition means for acquiring data and/or information regarding an advertisement recipient for a plurality of advertisement recipients;
third calculation means for calculating a third score representing a feature of the advertisement recipient based on the acquired data and/or information regarding the advertisement recipient; and
determination means for determining a combination of at least one advertiser among the plurality of advertisers and at least one advertisement recipient among the plurality of advertisement recipients based on the first score, the second score, and the third score.

31. The system according to claim 30, further comprising providing means for providing an advertisement from the at least one advertiser in the combination to the at least one advertisement recipient in the combination.

32. The system according to claim 30 or 31, wherein the determination means determines the combination according to an association between the first score, the second score, and the third score.

33. A method of determining a matter to be determined when an advertiser provides an advertisement and an advertisement recipient is provided with the advertisement, the method comprising:
acquiring data and/or information regarding an advertiser for a plurality of advertisers;
calculating, for the plurality of advertisers, a first score representing a feature of the advertiser based on the acquired data and/or information regarding the advertiser;
acquiring data regarding a field in which an advertisement is placed;
calculating a second score representing a feature of the field based on the acquired data regarding the field;
acquiring data and/or information regarding an advertisement recipient for a plurality of advertisement recipients;
calculating a third score representing a feature of the advertisement recipient based on the acquired data and/or information regarding the advertisement recipient; and
determining a combination of at least one advertiser among the plurality of advertisers and at least one advertisement recipient among the plurality of advertisement recipients based on the first score, the second score, and the third score.

34. A program for determining a matter to be determined when an advertiser places an advertisement and an advertisement recipient is provided with the advertisement, the program being executed in a system including a processor unit and causing the processor unit to execute processes comprising:
acquiring data and/or information regarding an advertiser for a plurality of advertisers;
calculating, for the plurality of advertisers, a first score representing a feature of the advertiser based on the acquired data and/or information regarding the advertiser;
acquiring data regarding a field in which an advertisement is placed;
calculating a second score representing a feature of the field based on the acquired data regarding the field;
acquiring data and/or information regarding an advertisement recipient for a plurality of advertisement recipients;
calculating a third score representing a feature of the advertisement recipient based on the acquired data and/or information regarding the advertisement recipient; and
determining a combination of at least one advertiser among the plurality of advertisers and at least one advertisement recipient among the plurality of advertisement recipients based on the first score, the second score, and the third score.

35. A system that determines a matter to be determined when a seller in electronic commerce sells a product or a service, the system comprising:
first acquisition means for acquiring data and/or information regarding a seller;
first calculation means for calculating a first score representing a feature of the seller based on the acquired data and/or information regarding the seller;
second acquisition means for acquiring data regarding a field in which electronic commerce is performed;
second calculation means for calculating a second score representing a feature of the field based on the acquired data regarding the field; and
determination means for determining an amount of a deposit in the electronic commerce based on the first score and the second score.

36. The system according to claim 35, wherein the determination means determines the amount of the deposit based on the first score, the second score, and a rule related to the electronic commerce.

37. The system according to claim 36, further comprising change means for changing the rule, wherein
the change means
receives votes of at least some of stakeholders related to the electronic commerce with respect to change of the rule, and
changes the rule based on a result of the votes.

38. The system according to any one of claims 35 to 37, wherein the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.

39. The system according to any one of claims 35 to 38, wherein the second calculation means calculates the second score based on whether the field is a reliable field.

40. The system according to any one of claims 35 to 39, wherein the second calculation means calculates the second score based on a degree to which the field is managed in a decentralized manner or a degree to which the field is managed in a centralized manner.

41. The system according to claim 35 to 40, wherein the determination means determines the amount of the deposit according to an association between the first score and the second score.

42. The system according to any one of claims 35 to 41, further comprising:
fourth acquisition means for acquiring data regarding a product or a service that is a target of the electronic commerce; and
fourth calculation means for calculating a fourth score representing a feature of the product or the service based on the acquired data regarding the product or the service, wherein
the determination means determines the amount of the deposit in the electronic commerce further based on the fourth score.

43. A method of determining a matter to be determined when a seller in electronic commerce sells a product or a service, the method comprising:
acquiring data and/or information regarding a seller;
calculating a first score representing a feature of the seller based on the acquired data and/or information regarding the seller;
acquiring data regarding a field in which electronic commerce is performed;
calculating a second score representing a feature of the field based on the acquired data regarding the field; and
determining an amount of a deposit in the electronic commerce based on the first score and the second score.

44. A program for determining a matter to be determined when a seller in electronic commerce sells a product or a service, the program being executed in a system including a processor unit and causing the processor unit to execute processes comprising:
acquiring data and/or information regarding a seller;
calculating a first score representing a feature of the seller based on the acquired data and/or information regarding the seller;
acquiring data regarding a field in which electronic commerce is performed;
calculating a second score representing a feature of the field based on the acquired data regarding the field; and
determining an amount of a deposit in the electronic commerce based on the first score and the second score.

45. A system that determines a matter to be determined when a purchaser in electronic commerce purchases a product or a service, the system comprising:
first acquisition means for acquiring data and/or information regarding a purchaser;
first calculation means for calculating a first score representing a feature of the purchaser based on the acquired data and/or information regarding the purchaser;
second acquisition means for acquiring data regarding a field in which electronic commerce is performed;
second calculation means for calculating a second score representing a feature of the field based on the acquired data regarding the field; and
determination means for determining an amount of a deposit in the electronic commerce based on the first score and the second score.

46. The system according to claim 45, wherein the determination means determines the amount of the deposit based on the first score, the second score, and a rule related to the electronic commerce.

47. The system according to claim 46, further comprising change means for changing the rule, wherein
the change means
receives votes of at least some of stakeholders related to the electronic commerce with respect to change of the rule, and
changes the rule based on a result of the votes.

48. The system according to any one of claims 45 to 47, wherein the first calculation means refers to a database unit that stores various types of details correlated with corresponding concepts among a concept related to personality, a concept related to money, and a concept related to health for at least one of details regarding personality, details regarding money, and details regarding health, and calculates the first score including a feature corresponding to a specific concept among the corresponding concepts according to a degree of correlation with the corresponding concepts.

49. The system according to any one of claims 45 to 48, wherein the second calculation means calculates the second score based on whether the field is a reliable field.

50. The system according to any one of claims 45 to 49, wherein the second calculation means calculates the second score based on a degree to which the field is managed in a decentralized manner or a degree to which the field is managed in a centralized manner.

51. The system according to claim 45 to 50, wherein the determination means determines the amount of the deposit according to an association between the first score and the second score.

52. A method of determining a matter to be determined when a purchaser in electronic commerce purchases a product or a service, the method comprising:
acquiring data and/or information regarding a purchaser;
calculating a first score representing a feature of the purchaser based on the acquired data and/or information regarding the purchaser;
acquiring data regarding a field in which electronic commerce is performed;
calculating a second score representing a feature of the field based on the acquired data regarding the field; and
determining an amount of a deposit in the electronic commerce based on the first score and the second score.

53. A program for determining a matter to be determined when a purchaser in electronic commerce purchases a product or a service, the program being executed in a system including a processor unit and causing the processor unit to execute processes comprising:
acquiring data and/or information regarding a purchaser;
calculating a first score representing a feature of the purchaser based on the acquired data and/or information regarding the purchaser;
acquiring data regarding a field in which electronic commerce is performed;
calculating a second score representing a feature of the field based on the acquired data regarding the field; and
determining an amount of a deposit in the electronic commerce based on the first score and the second score.

54. A system that determines a matter to be determined when a seller in electronic commerce sells a product or a service and a purchaser purchases the product or the service, the system comprising:
first acquisition means for acquiring data and/or information regarding a seller;
first calculation means for calculating a first score representing a feature of the seller based on the acquired data and/or information regarding the seller;
second acquisition means for acquiring data regarding a field in which electronic commerce is performed;
second calculation means for calculating a second score representing a feature of the field based on the acquired data regarding the field;
third acquisition means for acquiring data and/or information regarding a purchaser;
third calculation means for calculating a third score representing a feature of the purchaser based on the acquired data and/or information regarding the purchaser;
first determination means for determining a deposit in the electronic commerce to be paid by the seller based on the first score and the second score;
second determination means for determining a deposit in the electronic commerce to be paid by the purchaser based on the second score and the third score; and
selling means for enabling a product or a service to be sold from the seller to the purchaser in response to detecting that the seller has paid the deposit and that the purchaser has paid the deposit.

55. A method of determining a matter to be determined when a seller in electronic commerce sells a product or a service and a purchaser purchases the product or the service, the method comprising:
acquiring data and/or information regarding a seller;
calculating a first score representing a feature of the seller based on the acquired data and/or information regarding the seller;
acquiring data regarding a field in which electronic commerce is performed;
calculating a second score representing a feature of the field based on the acquired data regarding the field;
acquiring data and/or information regarding a purchaser;
calculating a third score representing a feature of the purchaser based on the acquired data and/or information regarding the purchaser;
determining a deposit in the electronic commerce to be paid by the seller based on the first score and the second score;
determining a deposit in the electronic commerce to be paid by the purchaser based on the second score and the third score; and
enabling a product or a service to be sold from the seller to the purchaser in response to detecting that the seller has paid the deposit and that the purchaser has paid the deposit.

56. A program for determining a matter to be determined when a seller in electronic commerce sells a product or a service and a purchaser purchases the product or the service, the program being executed in a system including a processor unit and causing the processor unit to execute processes comprising:
acquiring data and/or information regarding a seller;
calculating a first score representing a feature of the seller based on the acquired data and/or information regarding the seller;
acquiring data regarding a field in which electronic commerce is performed;
calculating a second score representing a feature of the field based on the acquired data regarding the field;
acquiring data and/or information regarding a purchaser;
calculating a third score representing a feature of the purchaser based on the acquired data and/or information regarding the purchaser;
determining a deposit in the electronic commerce to be paid by the seller based on the first score and the second score;
determining a deposit in the electronic commerce to be paid by the purchaser based on the second score and the third score; and
enabling a product or a service to be sold from the seller to the purchaser in response to detecting that the seller has paid the deposit and that the purchaser has paid the deposit.
